# EUROPEAN PATENT APPLICATION

(11) **EP 2 249 200 A1**
(43) Date of publication of application: **10.11.2010**
(21) Application number: 08872913.2
(22) Date of filing: 10.10.2008
(51) Int. Cl.: G02F 1/1368, G02F 1/133, G09G 3/20, G09G 3/36

(54) **ACTIVE MATRIX SUBSTRATE, LIQUID CRYSTAL PANEL, LIQUID CRYSTAL DISPLAY DEVICE, LIQUID CRYSTAL DISPLAY UNIT, AND TELEVISION RECEIVER**

(30) Priority: 27.02.2008 JP 2008046869; 02.09.2008 JP 2008225080
(71) Applicant: Sharp Kabushiki Kaisha, Osaka-shi, Osaka 545-8522 (JP)
(72) Inventor: TSUBATA, Toshihide, Osaka 545-8522 (JP)
(74) Representative: Goddar, Heinz J.
(86) International application number: PCT/JP2008/068472
(87) International publication number: WO 2009/107271

(57) **Abstract**

An active matrix substrate includes a first data signal line (15x), first and second scanning signal lines (16a and 16b), a first transistor (12a) to which the first data signal line (15x) and the first scanning signal line (16a) are connected, a second transistor (12b) to which the first data signal line (15x) and the second scanning signal line (16b) are connected, and first and second pixel electrodes (17a and 17b) provided in one pixel region (101), in which the first and second pixel electrodes (17a and 17b) are connected to each other via a coupling capacitor (C101), and one of the first and second transistors (12a) is connected to the first pixel electrode (17a) and the other one of the first and second transistors (12b) is connected to the second pixel electrode (17b). This configuration enables enhancement of display quality (viewing angle characteristic) in a liquid crystal display device of a capacitively coupled type pixel division mode.

## Description

### Technical Field

The present invention relates to an active matrix substrate including a plurality of pixel electrodes in a pixel region, and a liquid crystal display device (pixel division mode) that uses the same.

### Background Art

As a measure for improving viewing angle dependence of gamma characteristics in liquid crystal display devices (for example, holding down excess brightness and the like in a screen), a liquid crystal display device has been proposed which controls a plurality of sub-pixels in a pixel to have different brightness, so as to display a halftone by an area coverage modulation of these sub-pixels (pixel division mode; for example, see Patent Literature 1).

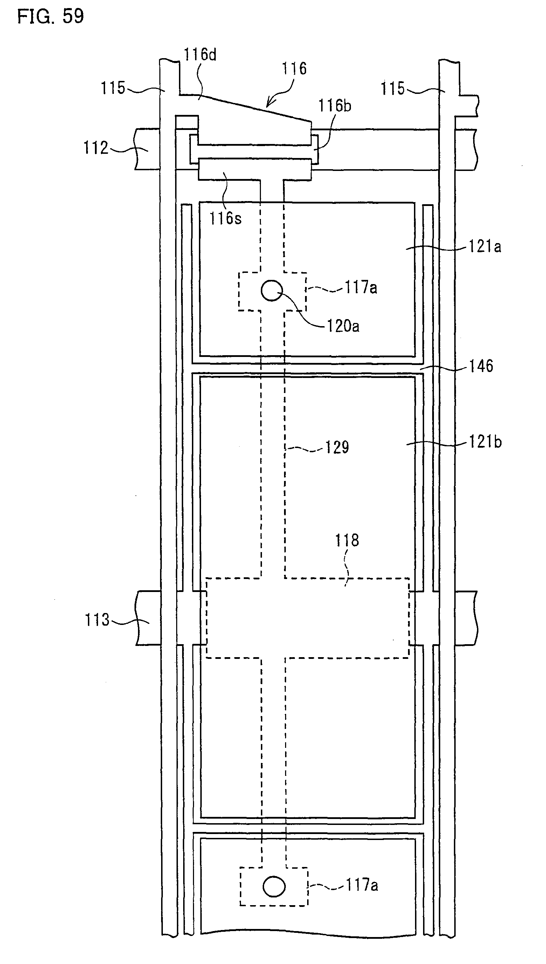

As illustrated in Fig. 59, an active matrix substrate disclosed in Patent Literature 1 has a pixel region provided between two adjacent gate bus lines 112; a pixel electrode 121a is disposed on an upper end (part adjacent to the gate bus line) of the pixel region, a pixel electrode 121b is disposed midway of the pixel region; and a pixel electrode 121c is disposed on a lower end (adjacent to a following adjacent gate bus line) of the pixel region. The pixel electrode 121a and pixel electrode 121c are connected to a source draw-out wire 129 that is drawn out from a source electrode 116s of a transistor 116. The source draw-out wire 129 is connected to a control electrode 118; the control electrode 118 is overlapped by the pixel electrode 112b via an insulating layer. The middle pixel electrode 121b is capacitively coupled with the pixel electrodes 121a and 121c (capacitively coupled pixel division mode). In a liquid crystal display device that uses this active matrix substrate, sub-pixels corresponding to the pixel electrodes 121a and 121c serve as bright sub-pixels, and sub-pixels corresponding to the pixel electrode 121b serve as dark sub-pixels. Hence, a halftone is displayed by area coverage modulation of the bright sub-pixels (2 sub-pixels) and dark sub-pixel (1 sub-pixel).

### Citation List

Patent Literature 1
Japanese Patent Application Publication, Tokukai, No. 2006-39290 (Publication Date: February 9, 2006)

### Summary of Invention

However, in a case where an active matrix substrate as like the one illustrated in Fig. 59 is applied to a liquid crystal display device of an MVA mode, it is thought to be that one sub-pixel includes 1 (bright or dark) × 4 = 4 domains. Hence, room remains for improving the viewing angle characteristics.

An object of the present invention is to improve the viewing angle characteristics in a liquid crystal display device of a capacitively coupled pixel division mode.

A liquid crystal display device of the present invention includes: pixel electrodes; scanning signal lines; and transistors, each of the transistors being connected to one of the scanning signal lines, wherein: two pixel electrodes are disposed in a corresponding pixel region in such a manner that the two pixel electrodes are connected to each other via a capacitor, the pixel region is associated with two scanning signal lines, and one of the transistors which is connected to one of the two scanning signal lines associated with the pixel region is connected to one of the two pixel electrodes disposed in the pixel region, and another one of the transistors which is connected to the other one of the two scanning signal lines associated with the pixel region is connected to the other one of the two pixel electrodes disposed in the pixel region.

With a liquid crystal display device including the present active matrix substrate, in predetermined frames, the one of the two scanning signal lines is scanned for writing in a signal electric potential to the pixel electrode which is connected to the one of the two scanning signal lines, via the transistor connected to the one of the two scanning signal lines, and in other frames other than the predetermined frames, the other one of the two scanning signal lines is scanned for writing in a signal electric potential to the pixel electrode which is connected to the other one of the two scanning signal lines, via the transistor connected to the other one of the two scanning signal lines. This makes a sub-pixel be a bright sub-pixel (during a halftone display) in one frame and be a dark sub-pixel (during a halftone display) in another frame. As a result, viewing angle characteristics of the liquid crystal display device is improved.

The present active matrix substrate may be configured in such a manner that the two scanning signal lines associated with the pixel region are (i) disposed on either side of the pixel region or (ii) disposed so that the two scanning signal lines are overlapped by either end of the pixel region.

The present active matrix substrate may be configured in such a manner that the transistor which is connected to one of the two pixel electrodes disposed in the pixel region and the transistor which is connected to the other one of the two pixel electrodes disposed in the pixel region are connected to a same data signal line.

The present active matrix substrate may be configured in such a manner that the pixel region further includes: a coupling capacitor electrode being electrically connected to one of the two pixel electrodes disposed in the pixel region, the other one of the two pixel electrodes disposed in the pixel region overlapping the coupling capacitor electrode in such a manner that an insulating layer is sandwiched between the other one of the two pixel electrodes and the coupling capacitor electrode.

The present active matrix substrate may be configured in such a manner that the pixel region further includes: two coupling capacitor electrodes, one of the two coupling capacitor electrodes being electrically connected to one of the two pixel electrodes disposed in the pixel region, the one of the two coupling capacitor electrodes being overlapped by the other one of the two pixel electrodes disposed in the pixel region to which the one of the two coupling capacitor electrodes itself is not electrically connected, the other one of the two coupling capacitor electrodes being electrically connected to the other one of the two pixel electrodes disposed in the pixel region, the other one of the two coupling capacitor electrodes being overlapped by the one of the two pixel electrodes disposed in the pixel region to which the other one of the two coupling capacitor electrodes itself is not electrically connected, the pixel electrodes overlapping the coupling capacitor electrodes in such a manner that an insulating layer is sandwiched therebetween.

The present active matrix substrate may be configured in such a manner that the two pixel electrodes, and the coupling capacitor electrodes electrically connected to respective one and the other of the two pixel electrodes being disposed in such a manner that a planar shape and plane configuration of the pixel electrodes and coupling capacitor electrodes seen from a side of one of the two scanning signal lines are identical to those seen from a side of the other one of the two scanning signal lines.

The present active matrix substrate may be configured in such a manner that the pixel region further includes: a storage capacitor wire, wherein the storage capacitor wire forms storage capacitance with respective coupling capacitor electrodes.

The active matrix substrate may be configured in such a manner that at least one of the two pixel electrodes disposed in the pixel region forms storage capacitance with a scanning signal line associated with a pixel region arranged previously to the pixel region.

The present active matrix substrate may be configured in such a manner that the two scanning signal lines associated with the pixel region are disposed so that two pixel regions aligned in a row direction are associated therewith, each of the two pixel regions including two pixel electrodes aligned in a column direction, where the row direction is a direction in which the scanning signal lines extend, one of the transistors which is connected to one of two pixel electrodes that are disposed adjacent to each other in the row direction is connected to one of the two scanning signal lines associated with the two pixel regions, and another one of the transistors which is connected to the other one of the two pixel electrodes that are disposed adjacent to each other in the row direction is connected to the other one of the two scanning signal lines associated with the two pixel regions.

The present active matrix substrate may be configured in such a manner that an area in which a conductive electrode of the transistor connected to one of the two pixel electrodes disposed in the pixel region and a conductive part electrically connected to that conductive electrode overlaps the scanning signal line connected to that transistor, is of a same size as an area in which a conductive electrode of the transistor connected to the other one of the two pixel electrodes and a conductive part electrically connected to that conductive electrode overlaps the scanning signal line connected to that transistor.

The present active matrix substrate includes: pixel electrodes; scanning signal lines; and transistors, each of the transistors being connected to one of the scanning signal lines, wherein: a gap between two adjacent pixel regions is associated with respective one of the scanning signal lines, two pixel electrodes are disposed in a corresponding pixel region in such a manner that the two pixel electrodes are connected to each other via a capacitor, one of the transistors, the one of the transistors being connected to one of the scanning signal lines which is associated with one of gaps on either side of the pixel region, is connected to one of the two pixel electrodes disposed in the pixel region, and another one of the transistors, the another one of the transistors being connected to another one of the scanning signal lines which is associated with the other one of the gaps on either side of the pixel region, is connected to the other one of the two pixel electrodes disposed in the pixel region.

The present active matrix substrate may be configured in such a manner that the transistor connected to the one of the two pixel electrodes disposed in the pixel region and the transistor connected to the other one of the two pixel electrodes disposed in the pixel region are connected to a same data signal line.

The present liquid crystal display device includes the active matrix substrate, wherein: in predetermined frames, the one of the two scanning signal lines is scanned for writing in a signal electric potential to the pixel electrode being connected to the one of the two scanning signal lines, via the transistor connected to the one of the two scanning signal lines, and in other frames other than the predetermined frames, the other one of the two scanning signal lines is scanned for writing in a signal electric potential to the pixel electrode being connected to the other one of the two scanning signal lines, via the transistor connected to the other one of the two scanning signal lines.

The present liquid crystal display device includes: the active matrix substrate, wherein: in each of frames, the scanning signal lines are successively scanned for writing in a signal electric potential to respective pixel electrodes connected to the scanning signal lines, via corresponding transistors, the scanning signal lines being scanned in the predetermined frames in a direction opposite to that of the frames other than the predetermined frames.

The present liquid crystal display device may be configured in such a manner that the predetermined frames scanning the one of the two scanning signal lines include an identical number of (i) frames in which a signal electric potential of a positive polarity is written into the pixel electrode and (ii) frames in which a signal electric potential of a negative polarity is written into the pixel electrode, and the other frames other than the predetermined frames scanning the other one of the two scanning signal lines include an identical number of (i) frames in which a signal electric potential of a positive polarity is written into the pixel electrode and (ii) frames in which a signal electric potential of a negative polarity is written into the pixel electrode.

The present liquid crystal display device may be configured in such a manner that the scanning signal line to be scanned of the two scanning signal lines is alternated per one frame and a polarity of a signal electric potential corresponding to a same pixel is inverted per two frames, or, the scanning signal line to be scanned of the two scanning signal lines is alternated per two consecutive frames and a polarity of a signal electric potential corresponding to a same pixel is inverted per one frame.

The present liquid crystal display device may be configured in such a manner that after one of two pixel electrodes disposed in a corresponding pixel is discharged, a signal electric potential is written into the other one of the two pixel electrodes disposed in the pixel.

The present liquid crystal display device may be configured in such a manner that the transistor connected to one of two pixel electrodes disposed in a corresponding pixel is turned off in a state in which a common electrode electric potential is being supplied to the two pixel electrodes provided in the pixel, and thereafter a signal electric potential is written into the other one of the two pixel electrodes disposed in the pixel.

The present liquid crystal display device may be configured in such a manner that, in a single horizontal scanning period, the transistor connected to one of the two pixel electrodes disposed in the pixel is turned off in a state in which a common electrode electric potential is being supplied to the two pixel electrodes provided in the pixel and thereafter a signal electric potential is written into the other one of the two pixel electrodes disposed in the pixel.

The present liquid crystal display device may be configured in such a manner that the liquid crystal display device is a normally black liquid crystal display device, and after elapse of 1/2 of a vertical scanning period to 4/5 of the vertical scanning period after writing in the signal electric potential to one of the two pixel electrodes disposed in the pixel, the transistors connected to the pixel electrodes disposed in the pixel region are turned off in a state in which a common electrode electric potential is supplied to both the two pixel electrodes.

The present active matrix substrate includes: a first data signal line; a first to fourth scanning signal lines; a first to fourth transistors, the first transistor being connected to the first data signal line and the first scanning signal line, the second transistor being connected to the first data signal line and the second scanning signal line, the third transistor being connected to the first data signal line and the third scanning signal line, and the fourth transistor being connected to the first data signal line and the fourth scanning signal line; and a first to fourth pixel electrodes, the first pixel electrode and the second pixel electrode being disposed in a first pixel region, and the third pixel electrode and the fourth pixel electrode being disposed in a second pixel region arranged adjacent to the first pixel region in a column direction, where the column direction is a direction in which the first data signal lines extend, the first pixel electrode and the second pixel electrode being connected to each other via a capacitor, and the third pixel electrode and the fourth pixel electrode being connected to each other via a capacitor, one of the first transistor and the second transistor being connected to the first pixel electrode and the other one of the first transistor and the second transistor being connected to the second pixel electrode, and one of the third transistor and the fourth transistor being connected to the third pixel electrode and the other one of the third transistor and the fourth transistor being connected to the fourth pixel electrode.

In a liquid crystal display device that uses the present active matrix substrate, a first scanning signal line is selected in one frame, and a second scanning signal line is selected in another frame. This makes one pixel electrode included in one sub-pixel be connected to a data signal line (via a transistor) in the one frame, and makes the one pixel electrode be capacitively coupled (via a transistor and another pixel electrode) to a data signal line in the another frame. This allows supplying a signal electric potential to the pixel electrode in view of a feed-through voltage in the frame that is connected to the data signal line, thereby making it difficult for a liquid crystal layer of the sub-pixel to be applied a DC voltage (making image sticking of the sub-pixel difficult to occur). Moreover, a sub-pixel is a bright sub-pixel in one frame and is a dark sub-pixel in another frame. Hence, it is possible to make a time integration value of brightness in each sub-pixel uniform as compared to a configuration in which a sub-pixel is always a bright sub-pixel or is always a dark sub-pixel, thereby improving display quality.

The present active matrix substrate may further include: a fifth and sixth scanning signal lines; a fifth and sixth transistors, the fifth transistor being connected to the first data signal line and the fifth scanning signal line and the sixth transistor being connected to the first data signal line and the sixth scanning signal line; and a fifth and sixth pixel electrodes, the fifth pixel electrode and the sixth pixel electrode being provided in a third pixel region disposed adjacent to the first pixel region in the column direction, the fifth pixel electrode and the sixth pixel electrode being connected to each other via a capacitor, the third pixel electrode, the fourth pixel electrode, the first pixel electrode, the second pixel electrode, the fifth pixel electrode, and the sixth pixel electrode being aligned in the column direction in this order, and the first pixel electrode forming storage capacitance with the fourth scanning signal line, and the second pixel electrode forming storage capacitance with the fifth scanning signal line.

The present active matrix substrate may be configured in such a manner that the first pixel electrode forms storage capacitance with the second scanning signal line, and the second pixel electrode forms storage capacitance with the first scanning signal line.

The present active matrix substrate may further include: a second data signal line; a seventh and eighth transistors, the seventh transistor being connected to the second data signal line and the first scanning signal line and the eighth transistor being connected to the second data signal line and the second scanning signal line; and a seventh and eighth pixel electrodes being disposed in a fourth pixel region arranged adjacent to the first pixel region in a row direction, the seventh and eighth pixel electrodes being connected to each other via a capacitor, the first and second pixel electrodes being disposed adjacent to each other in the column direction and the seventh and eighth pixel electrodes being disposed adjacent to each other in the column direction, and the first and seventh pixel electrodes being disposed adjacent to each other in the row direction and the second and eighth pixel electrodes being disposed adjacent to each other in the row direction, the first transistor being connected to the first pixel electrode and the second transistor being connected to the second pixel electrode, and the seventh transistor being connected to the eighth pixel electrode and the eighth transistor being connected to the seventh pixel electrode.

The present active matrix substrate may further include: a second data signal line; a seventh and eighth transistors, the seventh transistor being connected to the second data signal line and the first scanning signal line and the eighth transistor being connected to the second data signal line and the second scanning signal line; and a seventh and eighth pixel electrodes, the seventh and eighth pixel electrodes being provided in a fourth pixel region disposed adjacent to the first pixel region in a row direction, the seventh and eighth pixel electrodes being connected to each other via a capacitor, the first and second pixel electrodes being disposed adjacent to each other in the column direction and the seventh and eighth pixel electrodes being disposed adjacent to each other in the column direction, and the first and seventh pixel electrodes being disposed adjacent to each other in the row direction and the second and eighth pixel electrodes being disposed adjacent to each other in the row direction, the first transistor being connected to the first pixel electrode and the second transistor being connected to the second pixel electrode, and the seventh transistor being connected to the seventh pixel electrode and the eighth transistor being connected to the eighth pixel electrode.

The present active matrix substrate includes: a first and second data signal lines; a first and second scanning signal lines; transistors; and a first to eighth pixel electrodes, wherein: two of the transistors are connected to the first data signal line and the first scanning signal line, two of the transistors are connected to the first data signal line and the second scanning signal line, two of the transistors are connected to the second data signal line and the first scanning signal line, and two of the transistors are connected to the second data signal line and the second scanning signal line, the first and second pixel electrodes are disposed in a first pixel region, the third and fourth pixel electrodes are disposed in a second pixel region arranged adjacent to the first pixel region in a column direction, the fifth and sixth pixel electrodes are disposed in a third pixel region arranged adjacent to the first pixel region in the column direction, and the seventh and eighth pixel electrodes are disposed in a fourth pixel region arranged adjacent to the first pixel region in a row direction, the first pixel electrode and the seventh pixel electrode being disposed adjacent to each other in the row direction, and the second pixel electrode and the eighth pixel electrode being disposed adjacent to each other in the row direction, where the row direction is a direction in which the first data signal line extends, one of the two transistors connected to the first data signal line and the first scanning signal line is connected to the first pixel electrode and the other one of the two transistors connected to the first data signal line and the first scanning signal line is connected to the fourth pixel electrode, one of the two transistors connected to the first data signal line and the second scanning signal line is connected to the second pixel electrode and the other one of the two transistors connected to the first data signal line and the second scanning signal line is connected to the fifth pixel electrode, one of the two transistors connected to the second data signal line and the first scanning signal line is connected to the eighth pixel electrode, and one of the two transistors connected to the second data signal line and the second scanning signal line is connected to the seventh pixel electrode.

In a liquid crystal display device that uses the present active matrix substrate, a first scanning signal line and a second scanning signal line are selected in this order in each of frames of a first period that includes a plurality of consecutive frames, and the second scanning signal line and the first scanning signal line are selected in this order in each of frames in a second period subsequent to the first period, which second period includes a plurality of consecutive frames. This makes one pixel electrode included in one sub-pixel be connected to a data signal line (via a transistor) in the one frame, and makes the one pixel electrode be capacitively coupled to a data signal line (via a transistor and another pixel electrode) in the another frame. As a result, a signal electric potential is supplied to the pixel electrode in view of a feed-through voltage in the frame that is connected to the data signal line, thereby making it difficult for a liquid crystal layer of the sub-pixel to be applied a DC voltage (making image sticking of the sub-pixel difficult to occur). Moreover, a sub-pixel is a bright sub-pixel in one frame however is a dark sub-pixel in another frame. Hence, a time integration value of brightness in each sub-pixel is made uniform as compared to a configuration in which a sub-pixel is always a bright sub-pixel or is always a dark sub-pixel, thereby improving display quality.
Moreover, with four pixel electrodes that are included in two pixels disposed adjacent to each other in a row direction, two pixel electrodes that are disposed diagonally across each other (first pixel electrode and eighth pixel electrode or second pixel electrode and seventh pixel electrode) are connected to a same scanning signal line. Hence, in frames in which one of two sub-pixels that are adjacent to each other in a row direction is a bright sub-pixel, the other one of the two sub-pixels is a dark sub-pixel. As a result, it is possible to hold down display unevenness (e.g., horizontal-striped unevenness) and roughness (jaggies) as compared to a configuration in which bright sub-pixels are adjacent to each other in the row direction and dark sub-pixels are adjacent to each other in the row direction.

The present active matrix substrate may further include a storage capacitor wire, wherein: the storage capacitor wire forms storage capacitance with the first pixel electrode and with the second pixel electrode.

The present active matrix substrate may be configured in such a manner that, in a case where the active matrix substrate is seen from a planar view, the first pixel electrode is disposed between the first scanning signal line and the second scanning signal line by whole or by part, the part of the first pixel electrode being the first pixel electrode excluding its edge sections, and the second pixel electrode is disposed between the first scanning signal line and the second scanning signal line by whole or by part, the part of the second pixel electrode being the second pixel electrode excluding its edge sections.

The present active matrix substrate may be configured in such a manner that an area in which a conductive electrode of the first transistor and a conductive part electrically connected to the conductive electrode of the first transistor overlaps the first scanning signal line is of a same size as an area in which a conductive electrode of the second transistor and a conductive part electrically connected to the conductive electrode of the second transistor overlaps the second scanning signal line.

The present active matrix substrate may be configured further including a storage capacitor electrode being formed in a same layer as conductive electrodes of the first and second transistors, the storage capacitor electrode being electrically connected to one of the first and second pixel electrodes and overlapping the storage capacitor wire in such a manner that a gate insulating layer is sandwiched between the storage capacitor electrode and the storage capacitor wire.

The present active matrix substrate may also be configured further including: a coupling capacitor electrode being formed in a same layer as conductive electrodes of the first and second transistors, the coupling capacitor electrode being electrically connected to one of the first and second pixel electrodes and being overlapped by the other one of the first and second pixel electrodes in such a manner that an interlayer insulating layer is sandwiched between the coupling capacitor electrode and the other one of the first and second pixel electrodes.

The present active matrix substrate may be configured further including a coupling capacitor electrode formed in a same layer as conductive electrodes of the first and second transistors, the coupling capacitor electrode being electrically connected to one of the first and second pixel electrodes and being overlapped by the other one of the first and second pixel electrodes in such a manner that an interlayer insulating layer is sandwiched between the coupling capacitor electrode and the other one of the first and second pixel electrodes, and further overlapping by the storage capacitor wire in such a manner that a gate insulating layer is sandwiched between the coupling capacitor electrode and the storage capacitor wire.

The present active matrix substrate may be configured further including a storage capacitor electrode formed in a same layer as conductive electrodes of the first and second transistors, the storage capacitor electrode being electrically connected to one of the first and second pixel electrodes and overlapping any one of the scanning signal lines in such a manner that a gate insulating layer is sandwiched between the storage capacitor electrode and the any one of the scanning signal lines.

The present active matrix substrate may be configured further including: a first coupling capacitor electrode being overlapped by the second pixel electrode in such a manner that an interlayer insulating layer is sandwiched between the first coupling capacitor electrode and the second pixel electrode; and a second coupling capacitor electrode being overlapped by the first pixel electrode in such a manner that an interlayer insulating layer is sandwiched between the second coupling capacitor electrode and the first pixel electrode, wherein: the first coupling capacitor electrode is connected to a first draw-out wire in an identical layer, the first draw-out wire being drawn out from a conductive electrode of the first transistor, the first draw-out wire and the first pixel electrode being connected to each other via a contact hole, and the second coupling capacitor electrode is connected to a second draw-out wire in an identical layer, the second draw-out wire being drawn out from a conductive electrode of the second transistor, the second draw-out wire and the second pixel electrode being connected to each other via a contact hole. In this case, when the active matrix substrate is seen from a planar view, the first pixel electrode is disposed between the first scanning signal line and the second scanning signal line by whole or by part, the part of the first pixel electrode being the first pixel electrode excluding its edge sections, and the second pixel electrode is disposed between the first scanning signal line and the second scanning signal line by whole or by part, the part of the second pixel electrode being the second pixel electrode excluding its edge sections, and the first and second pixel electrodes, the first and second coupling capacitor electrodes, and the first and second draw-out wires are provided in such a manner that a planar shape and plane configuration of the first and second pixel electrodes, the first and second coupling capacitor electrodes, and the first and second draw-out wires seen from a side of the first scanning signal line are identical to those seen from a side of the second scanning signal line.

The present active matrix substrate may be configured further including: a first coupling capacitor electrode being overlapped by the second pixel electrode in such a manner that an interlayer insulating layer is sandwiched between the first coupling capacitor electrode and the second pixel electrode; and a second coupling capacitor electrode being overlapped by the first pixel electrode in such a manner that an interlayer insulating layer is sandwiched between the second coupling capacitor electrode and the first pixel electrode, wherein: the first pixel electrode is connected to a conductive electrode of the first transistor via a contact hole, and the first pixel electrode being connected to the first coupling capacitor electrode via a contact hole, and the second pixel electrode is connected to a conductive electrode of the second transistor via a contact hole, and the second pixel electrode being connected to the second coupling capacitor electrode via a contact hole. In this case, when the active matrix substrate is seen from a planar view, the first pixel electrode is disposed between the first scanning signal line and the second scanning signal line by whole or by part, the part of the first pixel electrode being the first pixel electrode excluding its edge sections, and the second pixel electrode is disposed between the first scanning signal line and the second scanning signal line by whole or by part, the part of the second pixel electrode being the second pixel electrode excluding its edge sections, and the first pixel electrode and second pixel electrode and the first coupling capacitor electrode and second coupling capacitor electrode are provided in such a manner that a planar shape and plane configuration of the first pixel electrode and second pixel electrode and the first coupling capacitor electrode and second coupling capacitor electrode seen from a side of the first scanning signal line are identical to those seen from a side of the second scanning signal line.

The present active matrix substrate may be configured in such a manner that the first pixel electrode and the second pixel electrode are adjacent to each other in the column direction, an edge adjacent to the second pixel electrode of edges of the first pixel electrode overlaps the second coupling capacitor electrode, and an edge adjacent to the first pixel electrode of edges of the second pixel electrode overlaps the first coupling capacitor electrode.

The present active matrix substrate may be configured in such a manner that the interlayer insulating layer is made thin in at least a part of the interlayer insulating layer where the interlayer insulating layer overlaps the coupling capacitor electrode.

The present active matrix substrate may be configured in such a manner that the gate insulating layer is made thin in at least a part of the gate insulating layer at which the gate insulating film overlaps the storage capacitor electrode.

The present active matrix substrate may be configured in such a manner that the interlayer insulating layer includes an inorganic insulating layer and an organic insulating layer, and the organic insulating layer is removed in at least one part of a portion of the interlayer insulating film overlapping the coupling capacitor electrode.

The present active matrix substrate may be configured in such a manner that the gate insulating layer includes an inorganic insulating layer and an organic insulating layer, and the organic insulating layer is removed in at least one part of a portion of the gate insulating layer overlapping the storage capacitor electrode.

The present active matrix substrate may be configured in such a manner that the organic insulating layer includes at least one of acrylic resin, epoxy resin, polyimide resin, polyurethane resin, novolac resin, and siloxane resin.

The present liquid crystal display device includes the active matrix substrate, wherein: the first scanning signal line is selected in one frame, and the second scanning signal line is selected in another frame.

The present liquid crystal display device including the active matrix substrate, wherein: one of the first scanning signal line and second scanning signal line is selected in each of frames of n (n is a plural number) consecutive frames, and the other one of the first scanning signal line and second scanning signal line is selected in each of frames of a subsequent set of n consecutive frames. In this case, n is an even number, and a polarity of a signal electric potential to be supplied to the first and second pixel electrodes is inverted per units of one frame.

The present liquid crystal display device includes the active matrix substrate, wherein: the first scanning signal line is selected in one of two consecutive frames, and the second scanning signal line is selected in the other one of the two consecutive frames. In this case, a polarity of a signal electric potential to be supplied to the first pixel electrode and second pixel electrode is inverted per units of two consecutive frames.

The present liquid crystal display device may be configured including the active matrix substrate, wherein: one of the first and second scanning signal lines is selected in each of frames in a first period including a plurality of consecutive frames, and the other one of the first and second scanning signal lines is selected in each of frames in a second period subsequent to the first period, the second period including a plurality of consecutive frames, the first period and the second period being scanned in opposite directions.

The present liquid crystal display device includes: a first and second data signal lines; a first and second scanning signal lines; transistors; and a first to sixth pixel electrodes, wherein: two of the transistors are connected to the first data signal line and the first scanning signal line, two of the transistors are connected to the first data signal line and the second scanning signal line, and two of the transistors are connected to the second data signal line and the first scanning signal line, the first and second pixel electrodes being disposed in a first pixel region, the third and fourth pixel electrodes being disposed in a second pixel region disposed adjacent to the first pixel region in a column direction, and the fifth and sixth pixel electrodes being disposed in a third pixel region disposed adjacent to the first pixel region in the column direction, where the column direction is a direction in which the first data signal line extends, one of the two transistors connected to the first data signal line and the first scanning signal line is connected to the first pixel electrode and the other one of the two transistors connected to the first data signal line and the first scanning signal line is connected to the fourth pixel electrode, and one of the two transistors connected to the first data signal line and the second scanning signal line is connected to the second pixel electrode and the other one of the two transistors connected to the first data signal line and the second scanning signal line is connected to the fifth pixel electrode, in each of frames in a first period including a plurality of consecutive frames, the first scanning signal line and the second scanning signal line are selected in this order, and in each of frames of a second period subsequent to the first period, the second period including a plurality of consecutive frames, the second scanning signal line and the first scanning signal line are selected in this order.

In the present liquid crystal display device, a pixel electrode included in a sub-pixel is connected to a data signal line (via a transistor) in one frame, and is capacitively coupled to a data signal line (via a transistor and another pixel electrode) in another frame. As a result, a signal electric potential is supplied to the pixel electrode in view of a feed-through voltage in a frame in which the sub-pixel is connected to the data signal line, thereby making it difficult for a liquid crystal layer of the sub-pixel to be applied a DC voltage (make image sticking of the sub-pixel difficult to occur). Moreover, a sub-pixel is a bright sub-pixel in one frame and is a dark sub-pixel in another frame. This makes a time integration value of brightness of the sub-pixels in uniform as compared to a configuration in which a sub-pixel is always a bright sub-pixel or is always a dark sub-pixel. This improves the display quality.

The present liquid crystal display device may be configured in such a manner that a polarity of a signal electric potential to be supplied to the first data signal line is inverted per horizontal scanning period. Moreover, signal electric potentials of opposite polarities are respectively supplied to the first data signal line and a data signal line adjacent to the first data signal line, in a single horizontal scanning period.

The present liquid crystal display device may be configured further including: a scanning signal line driving circuit for driving the scanning signal lines, wherein: the first scanning signal line and second scanning signal line receives selection signals that are generated by use of an output from a same stage of a shift register provided in the scanning signal line driving circuit.

The present liquid crystal panel includes the active matrix substrate. The present liquid crystal display unit includes: the liquid crystal panel; and a driver. The present liquid crystal display device includes: the liquid crystal display unit; and a light source unit. The present television receiver includes: the liquid crystal display device; and a tuner section for receiving television broadcast.

As described above, in a liquid crystal display device that uses the present active matrix substrate, a signal electric potential is written into a pixel electrode via a transistor to which the pixel electrode is connected, by scanning one of two scanning signal lines in a predetermined frame, and in a frame other than the predetermined frame, a signal electric potential is written into a pixel electrode via a transistor to which the pixel electrode is connected, by scanning the other scanning signal line. Hence, this allows having a sub-pixel be a bright sub-pixel in one frame (during a halftone display), and be a dark sub-pixel in another frame (during a halftone display). As a result, viewing angle characteristics of the liquid crystal display device are improved.

### Brief Description of Drawings

Fig. 1

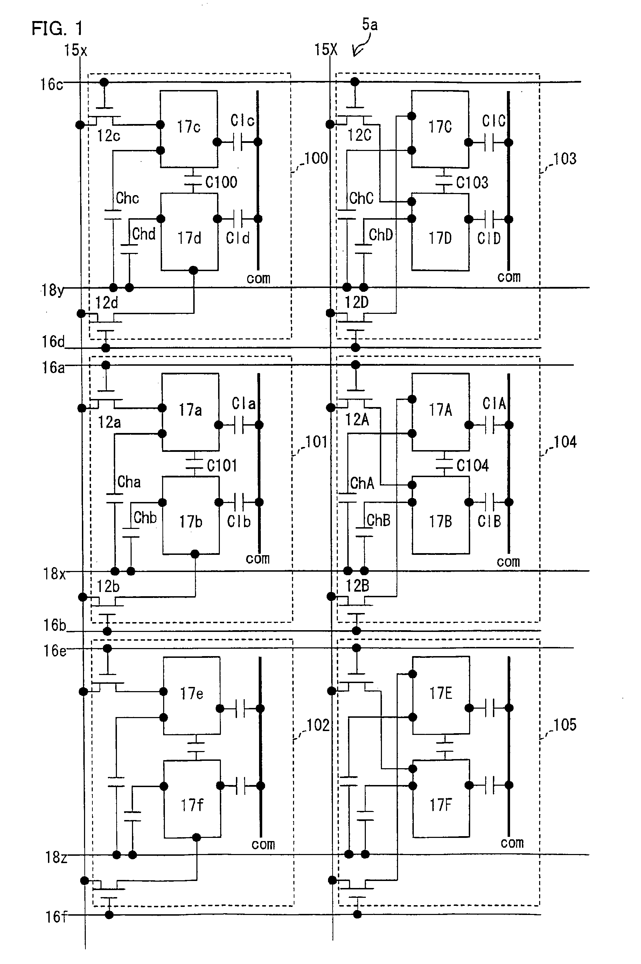

   Fig. 1 is a circuit diagram illustrating a configuration of a liquid crystal panel 5a.
Fig. 2

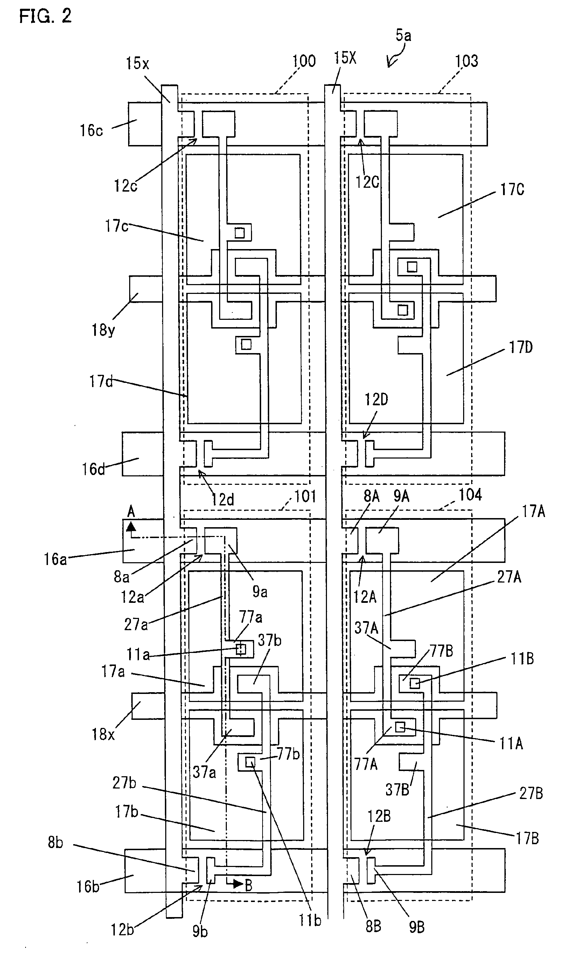

   Fig. 2 is a plan view illustrating a configuration of a liquid crystal panel 5a.
Fig. 3

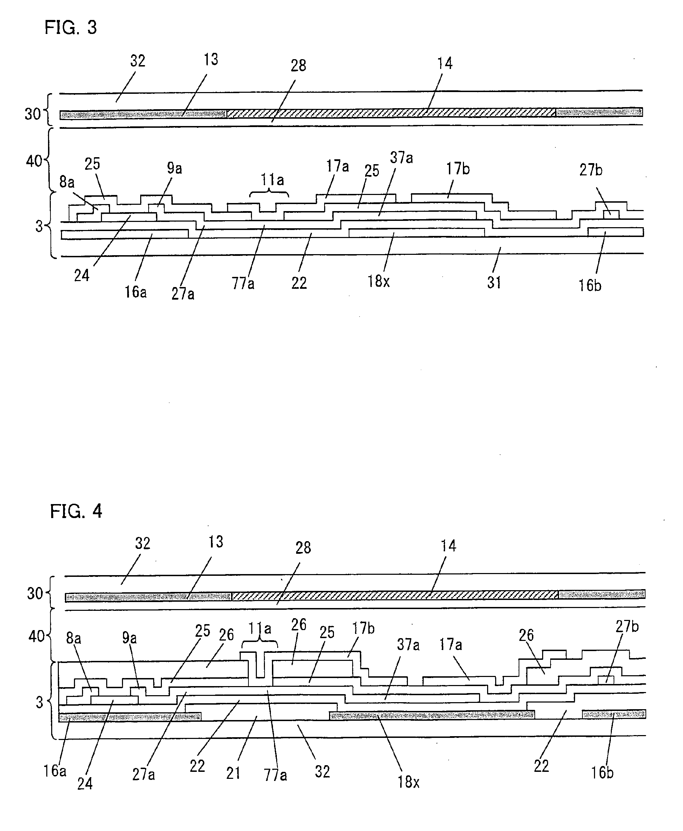

   Fig. 3 is a cross-sectional view illustrating a specific example of a cross-section taken on line A-B illustrated in Fig. 2.
Fig. 4
   Fig. 4 is a cross-sectional view illustrating another specific example of a cross-section taken on line A-B illustrated in Fig. 2.
Fig. 5

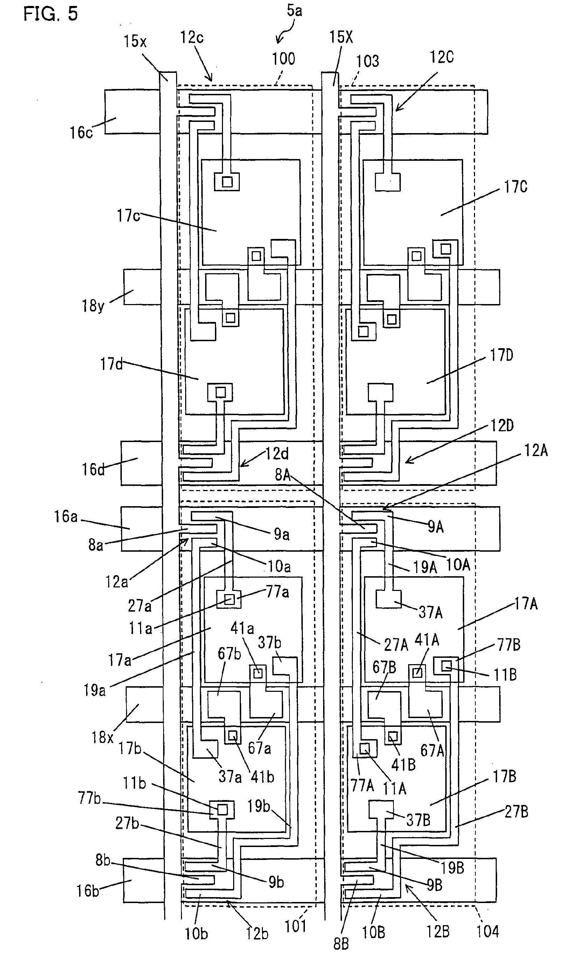

   Fig. 5 is a plan view illustrating another configuration of a liquid crystal panel 5a.
Fig. 6

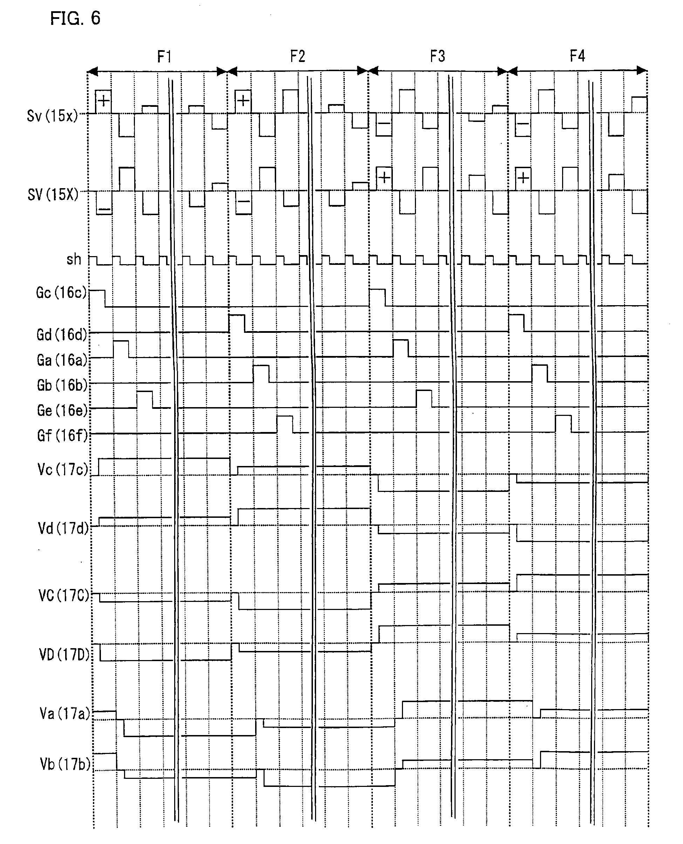

   Fig. 6 is a timing chart showing how a liquid crystal display device including a liquid crystal panel 5a is driven.
Fig. 7

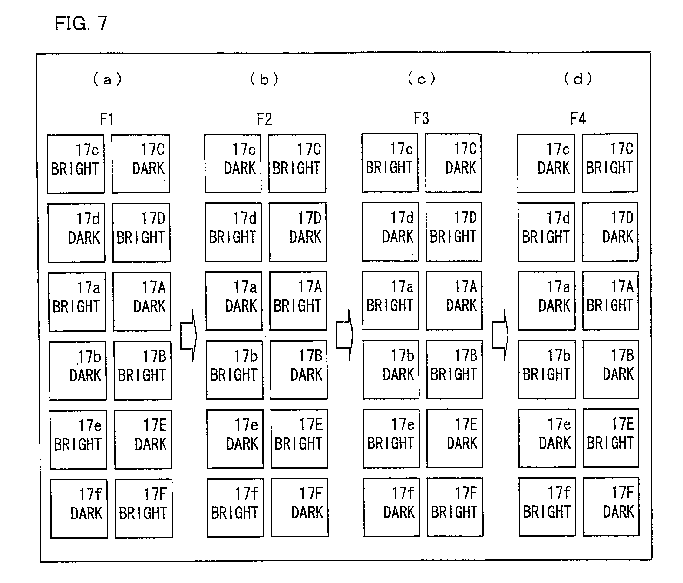

   Fig. 7 is a view schematically illustrating a display state per frame in a case where the driving method of Fig. 6 is used.
Fig. 8

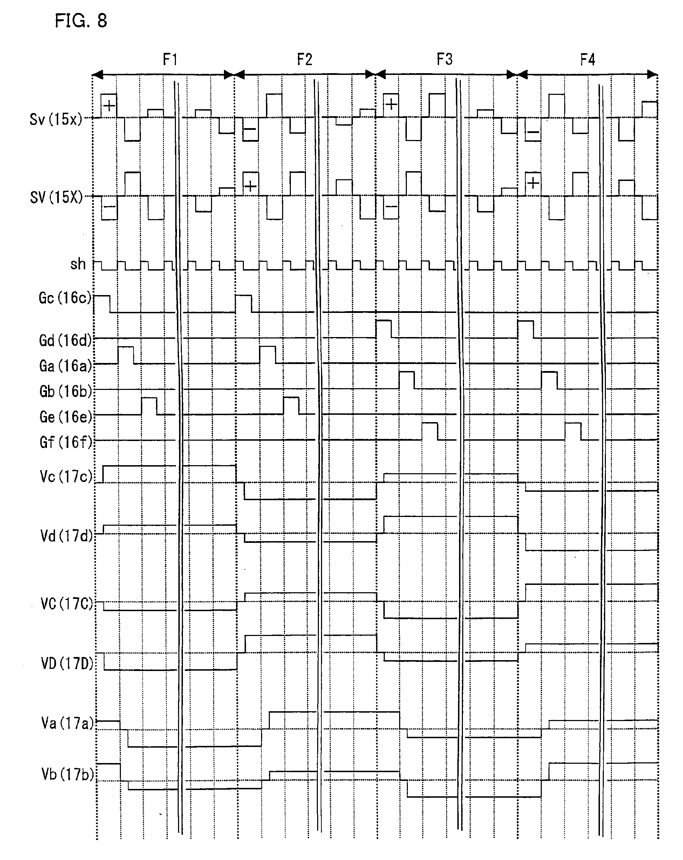

   Fig. 8 is a timing chart showing another method of how a liquid crystal display device including a liquid crystal panel 5a is driven.
Fig. 9

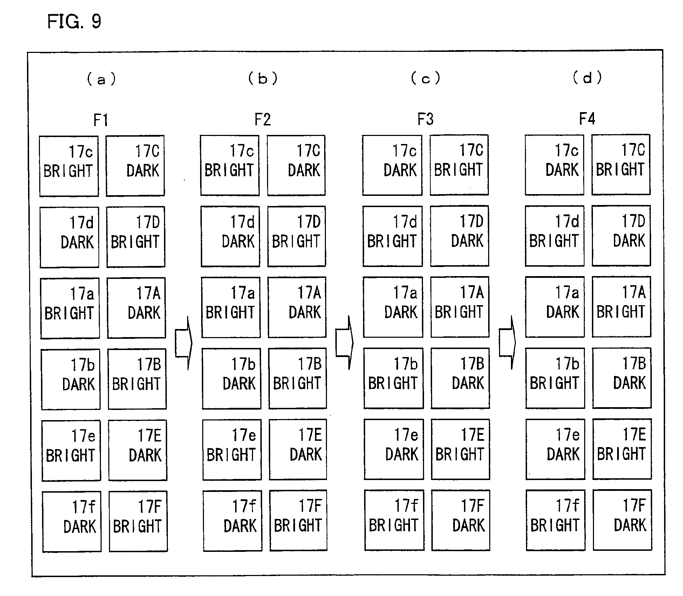

   Fig. 9 is a view schematically illustrating a display state per frame in a case where the driving method of Fig. 8 is used.
Fig. 10

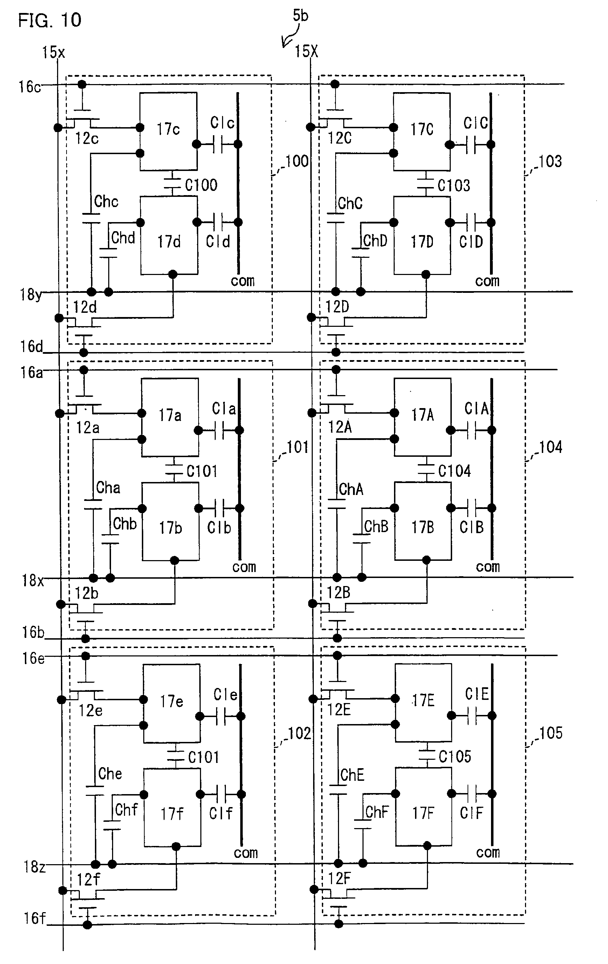

   Fig. 10 is a circuit diagram illustrating a configuration of a liquid crystal panel 5b.
Fig. 11

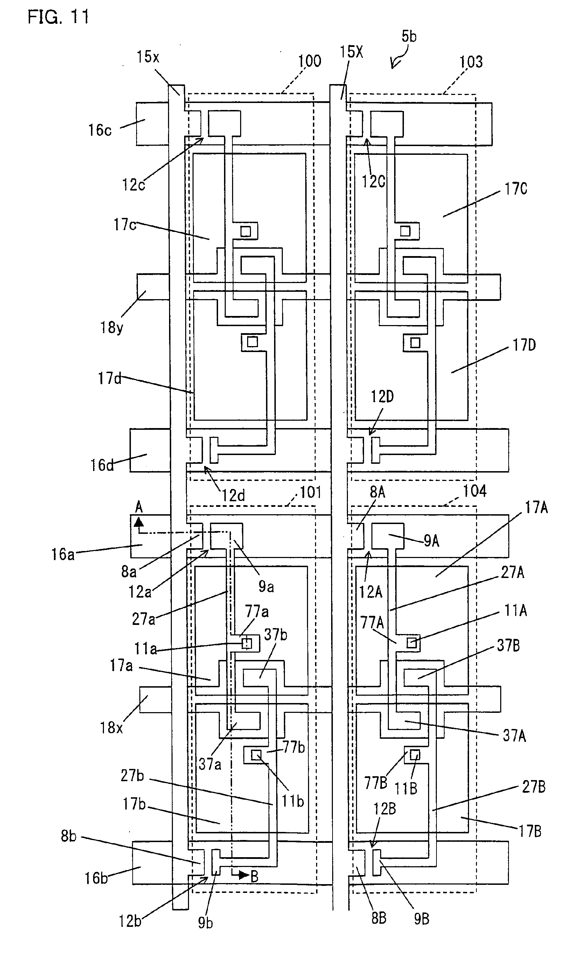

   Fig. 11 is a plan view illustrating a configuration of a liquid crystal panel 5b.
Fig. 12

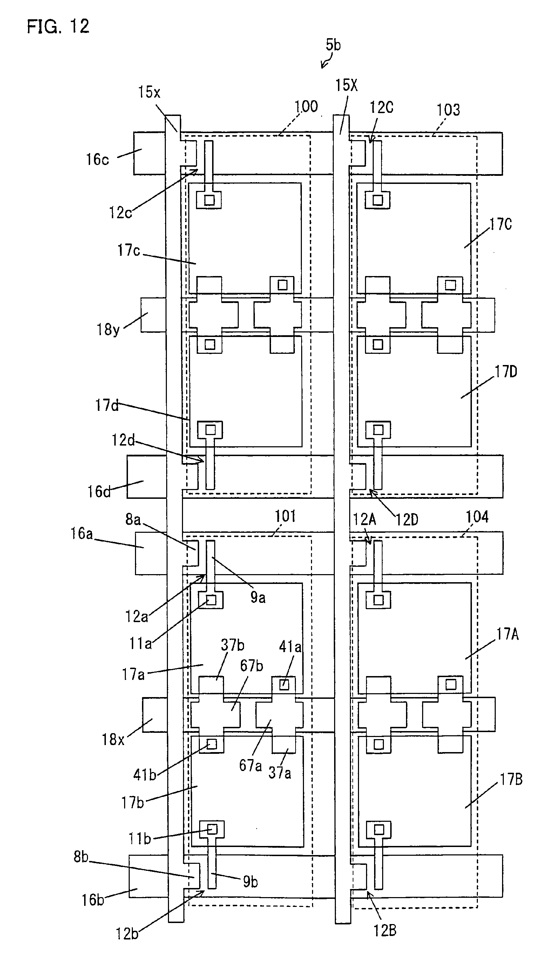

   Fig. 12 is a plan view illustrating another configuration of a liquid crystal panel 5b.
Fig. 13

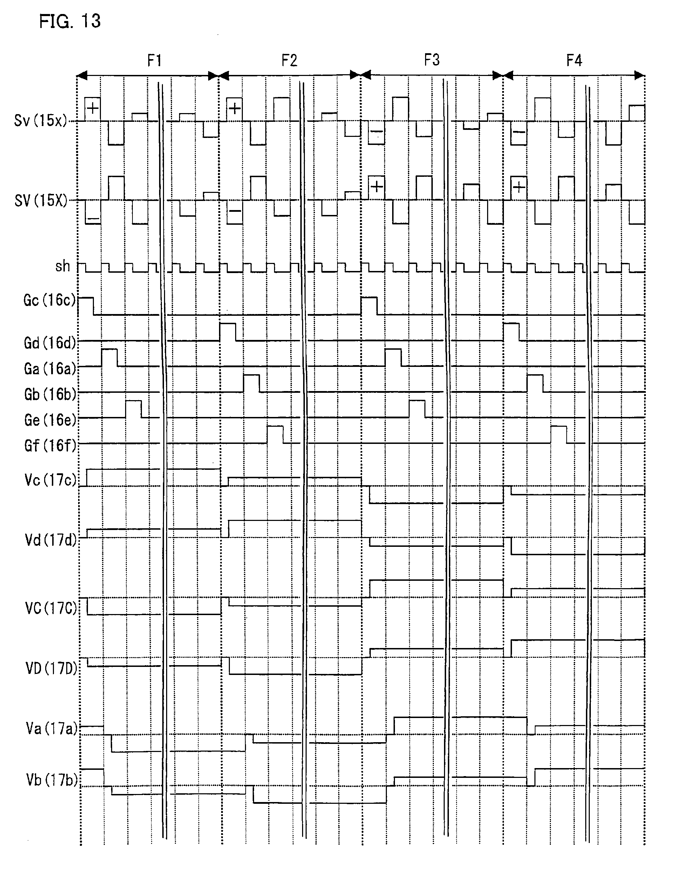

   Fig. 13 is a timing chart showing a driving method of a liquid crystal display device including a liquid crystal panel 5b.
Fig. 14

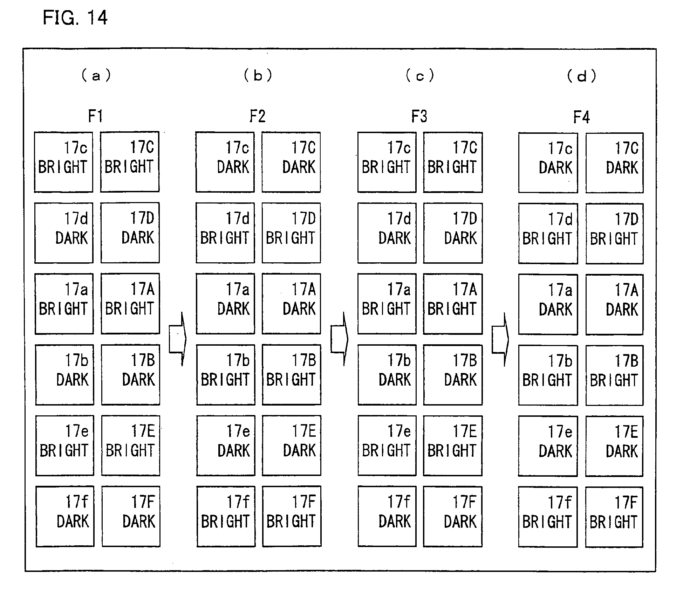

   Fig. 14 is a view schematically illustrating a display state per frame in a case where the driving method of Fig. 13 is used.
Fig. 15

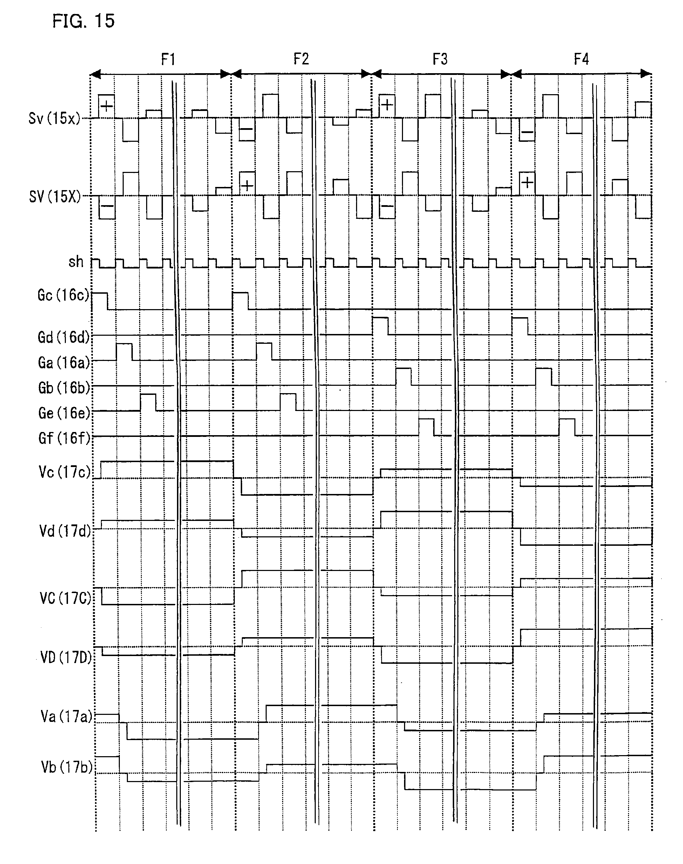

   Fig. 15 is a timing chart showing another driving method of a liquid crystal display device including a liquid crystal panel 5b.
Fig. 16

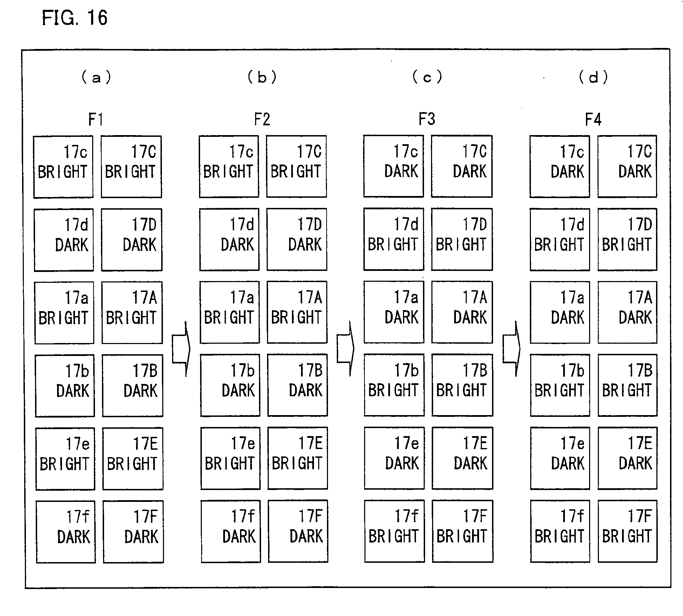

   Fig. 16 is a view schematically illustrating a display state per frame in a case where the driving method of Fig. 15 is used.
Fig. 17

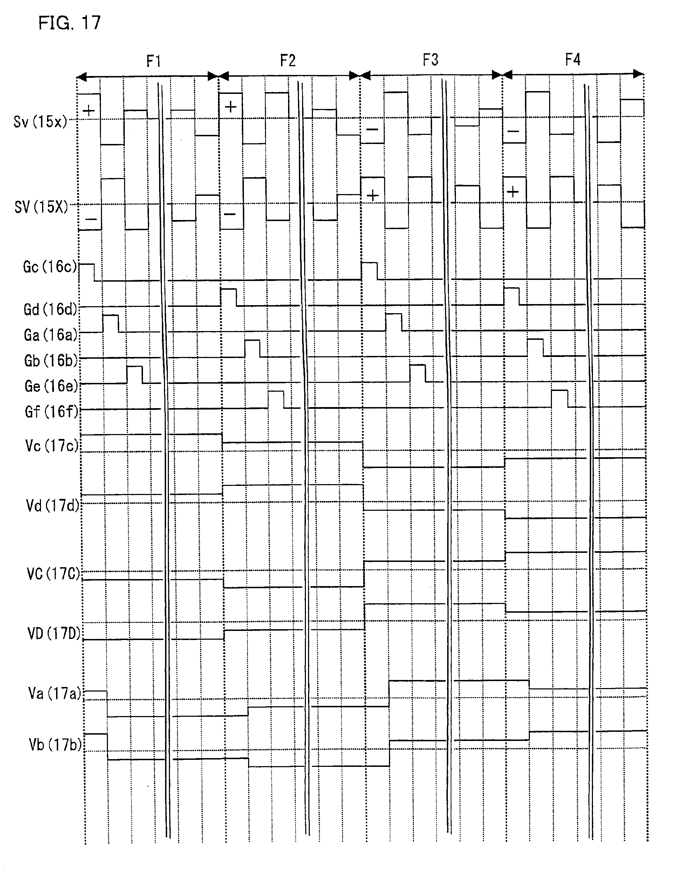

   Fig. 17 is a timing chart showing yet another driving method of a liquid crystal display device including a liquid crystal panel 5b.
Fig. 18

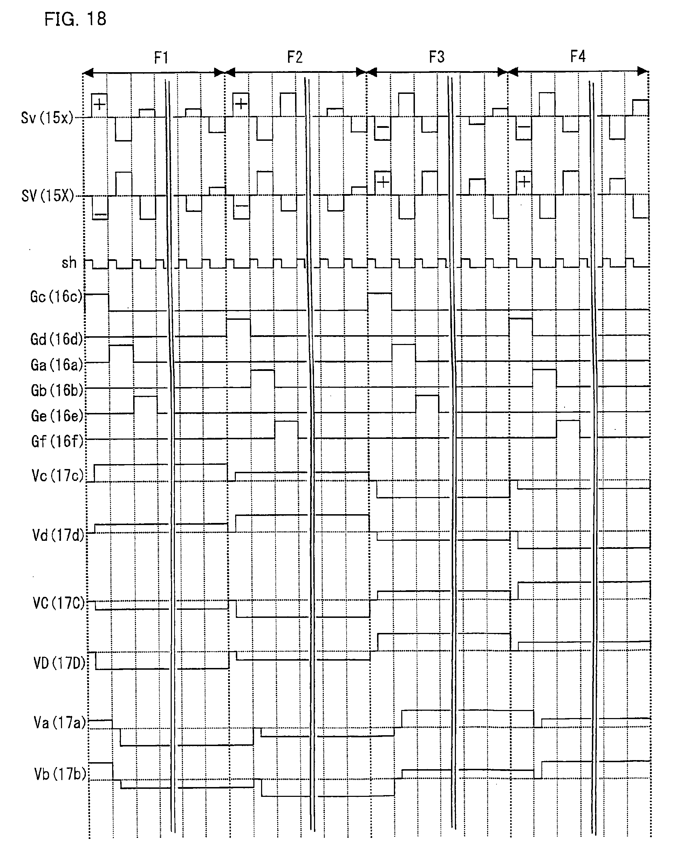

   Fig. 18 is a timing chart showing yet another driving method of a liquid crystal display device including a liquid crystal panel 5b.
Fig. 19

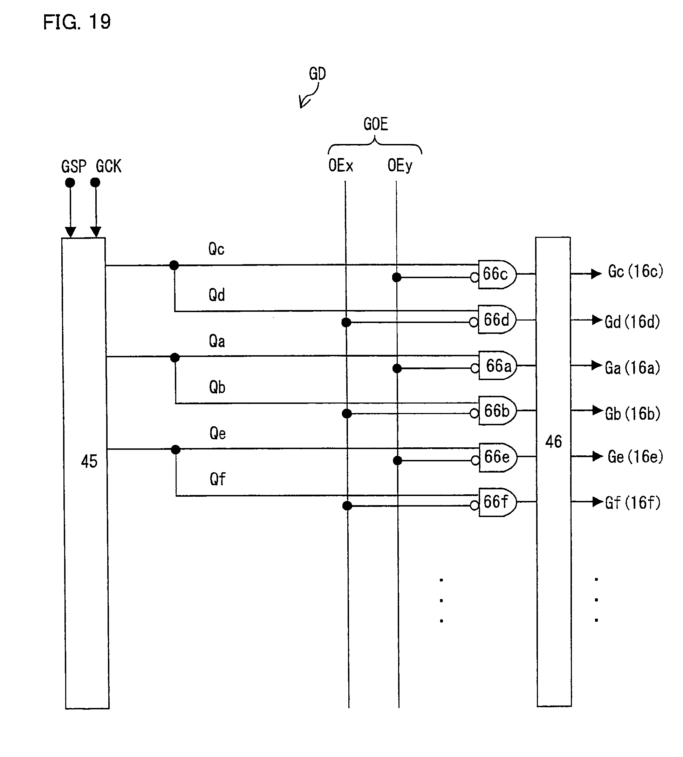

   Fig. 19 is a circuit diagram illustrating a configuration of a gate driver that drives liquid crystal panels 5a and 5b.
Fig. 20

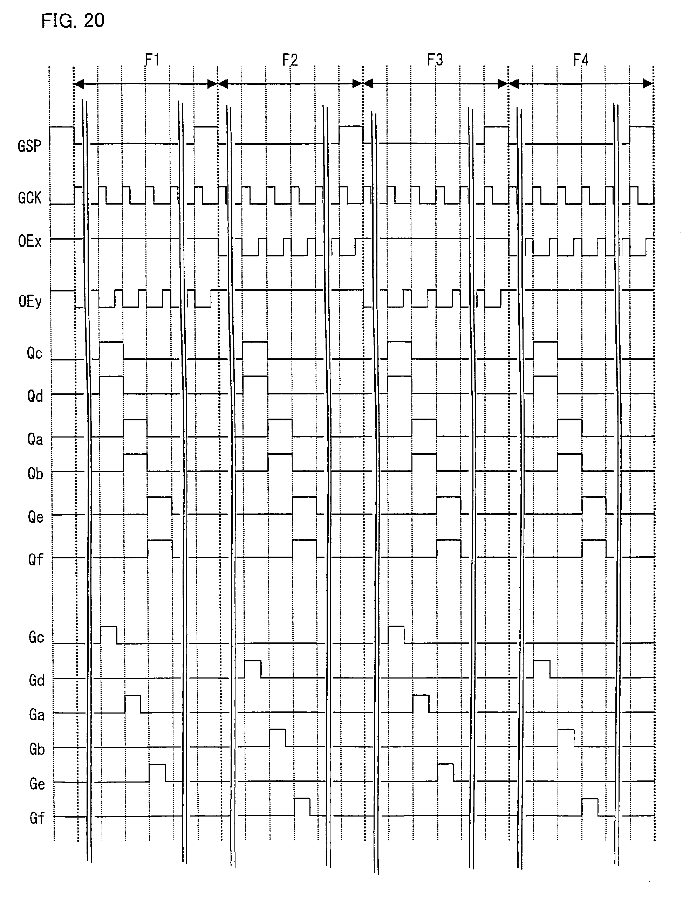

   Fig. 20 is a timing chart showing how the gate driver of Fig. 19 is driven.
Fig. 21

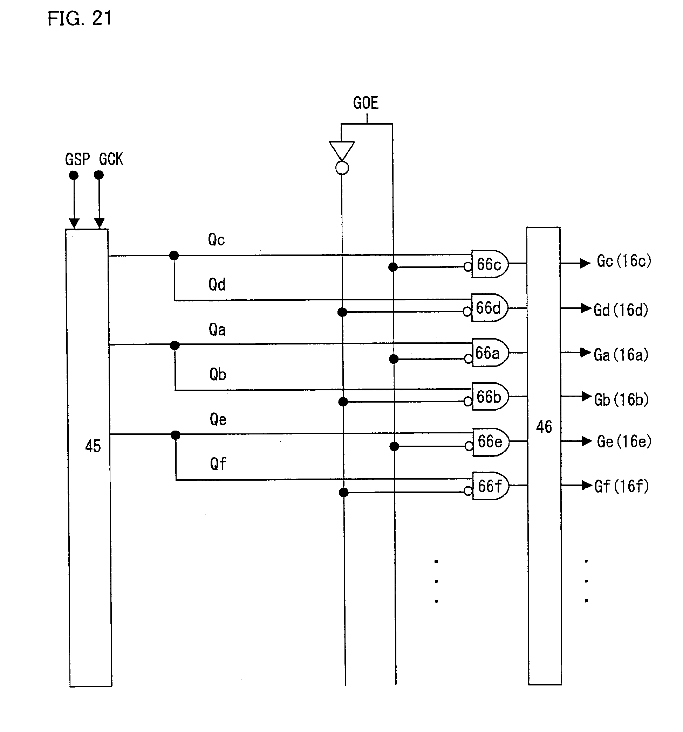

   Fig. 21 is a circuit diagram illustrating another configuration of a gate driver that drives liquid crystal panels 5a and 5b.
Fig. 22

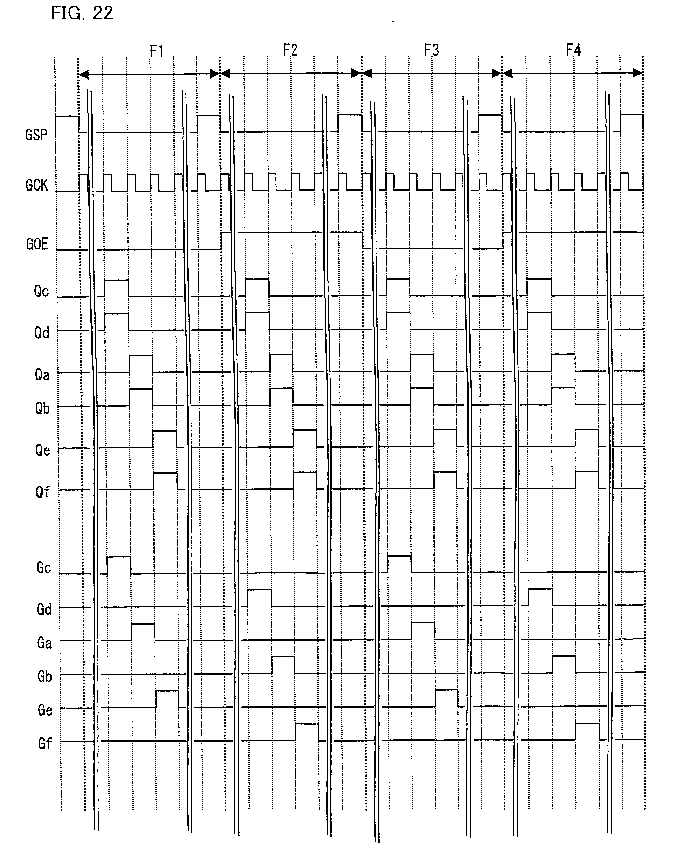

   Fig. 22 is a timing chart showing how the gate driver of Fig. 21 is driven.
Fig. 23

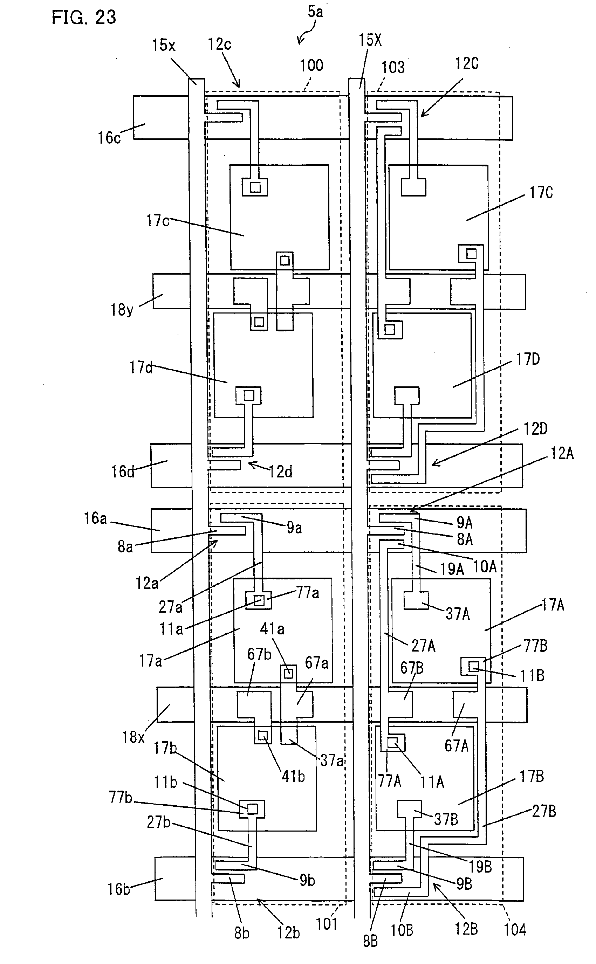

   Fig. 23 is a plan view illustrating another configuration of a liquid crystal panel 5a.
Fig. 24

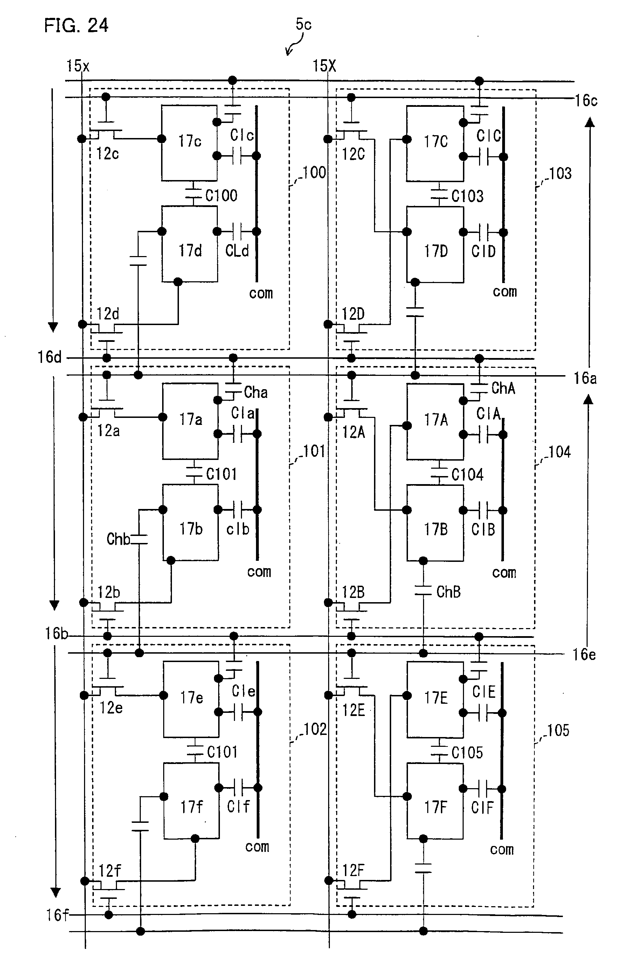

   Fig. 24 is a circuit diagram illustrating a configuration of a liquid crystal panel 5c.
Fig. 25

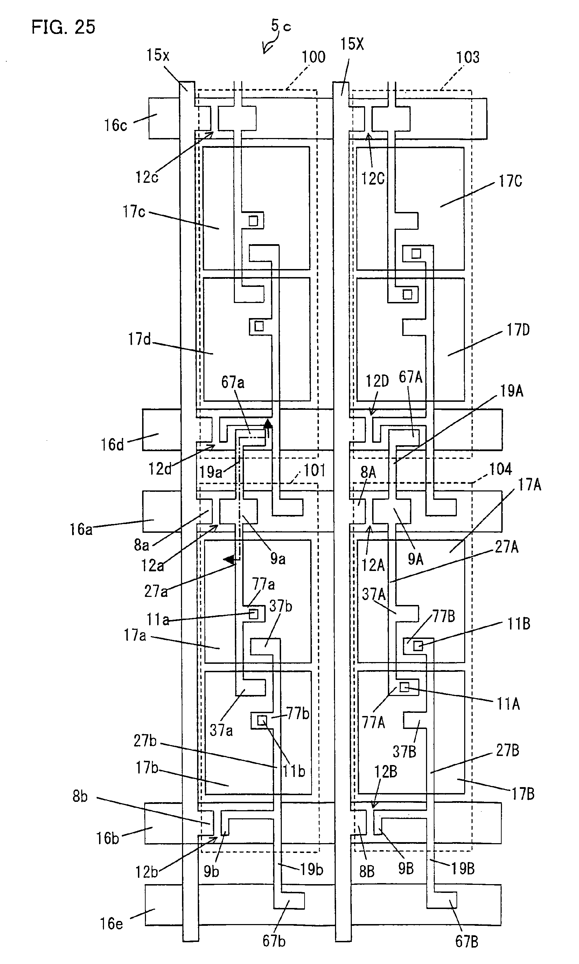

   Fig. 25 is a plan view illustrating a configuration of a liquid crystal panel 5c.
Fig. 26

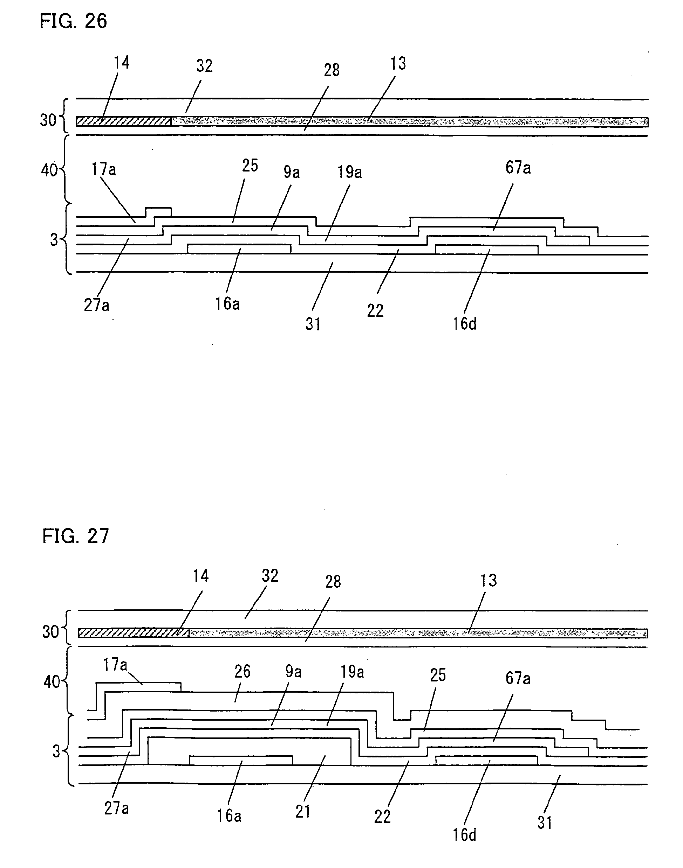

   Fig. 26 is a cross-sectional view illustrating a specific example of a cross-section taken on the alternate long and two short dashes line in Fig. 25.
Fig. 27
   Fig. 27 is a cross-sectional view illustrating another specific example of a cross-section taken on the alternate long and two short dashes line in Fig. 25.
Fig. 28

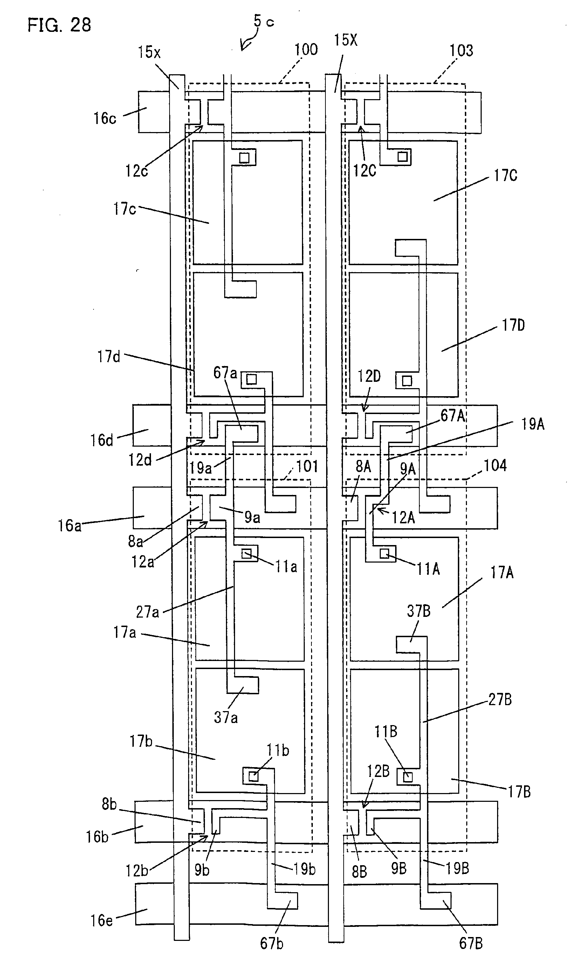

   Fig. 28 is a plan view illustrating another configuration of a liquid crystal panel 5c.
Fig. 29

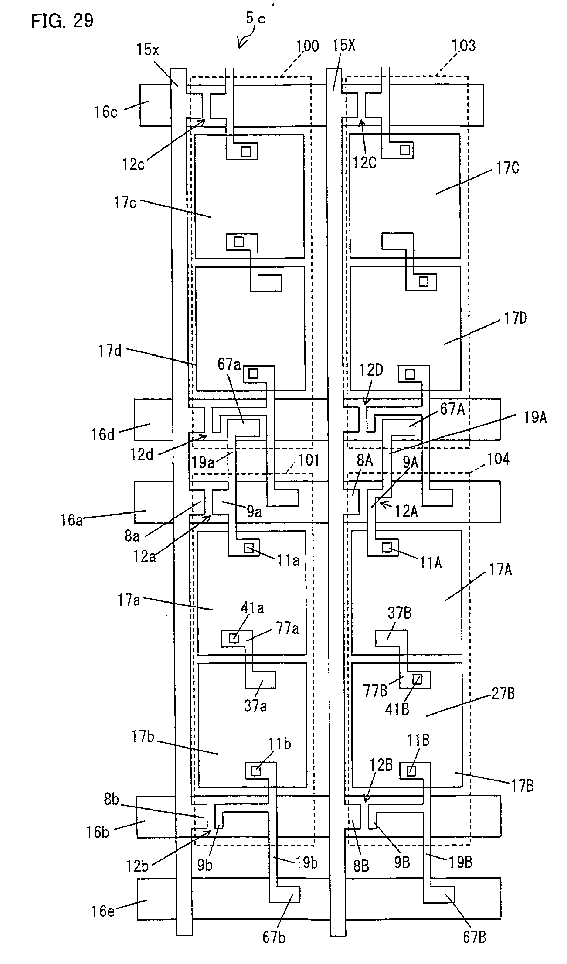

   Fig. 29 is a plan view illustrating yet another configuration of a liquid crystal panel 5c.
Fig. 30

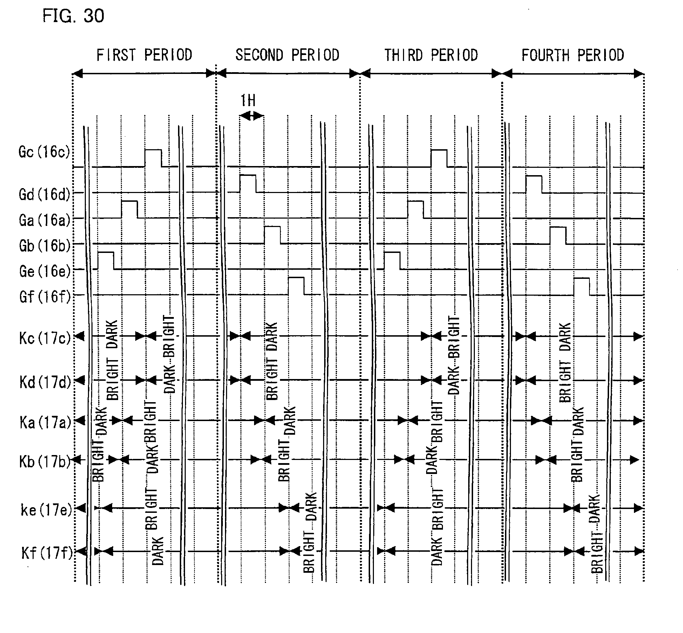

   Fig. 30 is a timing chart showing a driving method of a liquid crystal display device including the liquid crystal panel 5c.
Fig. 31

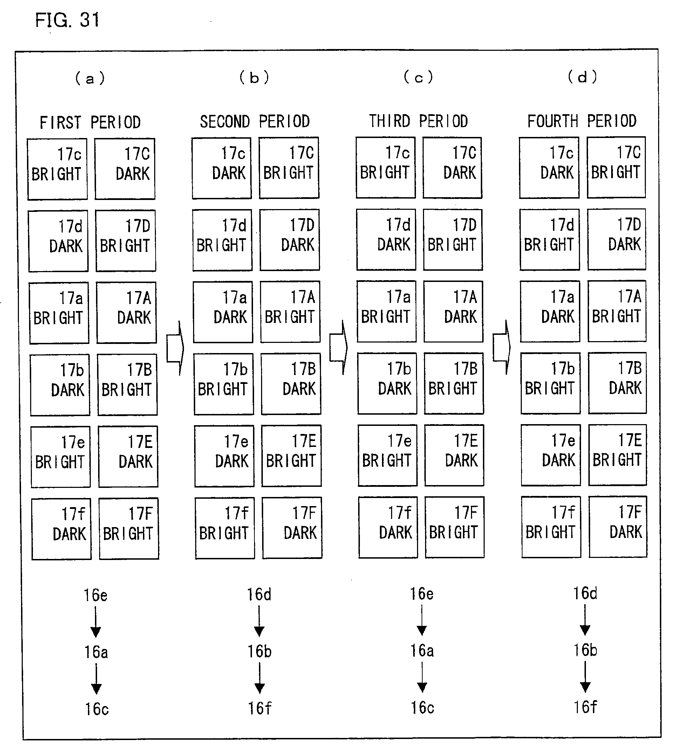

   Fig. 31 is a view schematically illustrating a display state in each period in a case where the driving method of Fig. 30 is used.
Fig. 32

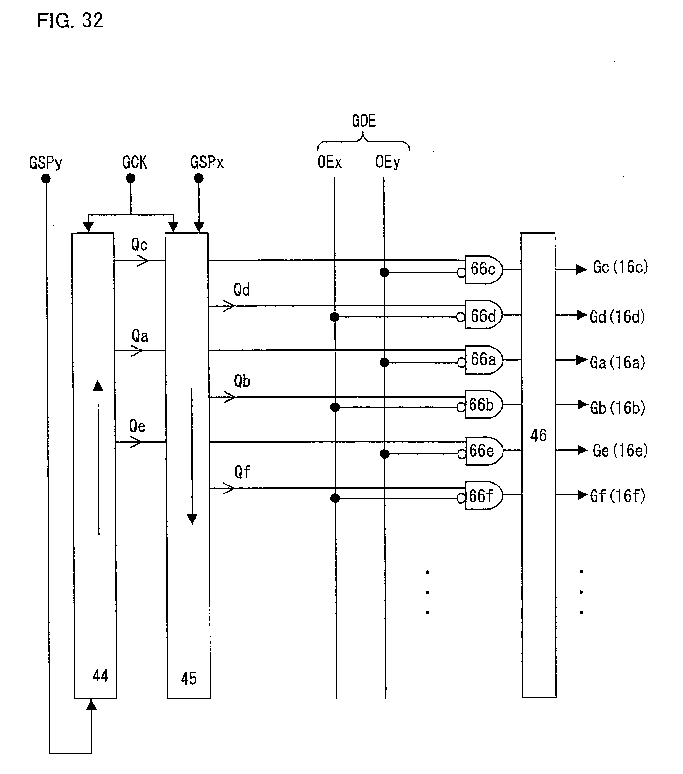

   Fig. 32 is a circuit diagram illustrating a configuration of a gate driver for driving a liquid crystal panel 5c.
Fig. 33

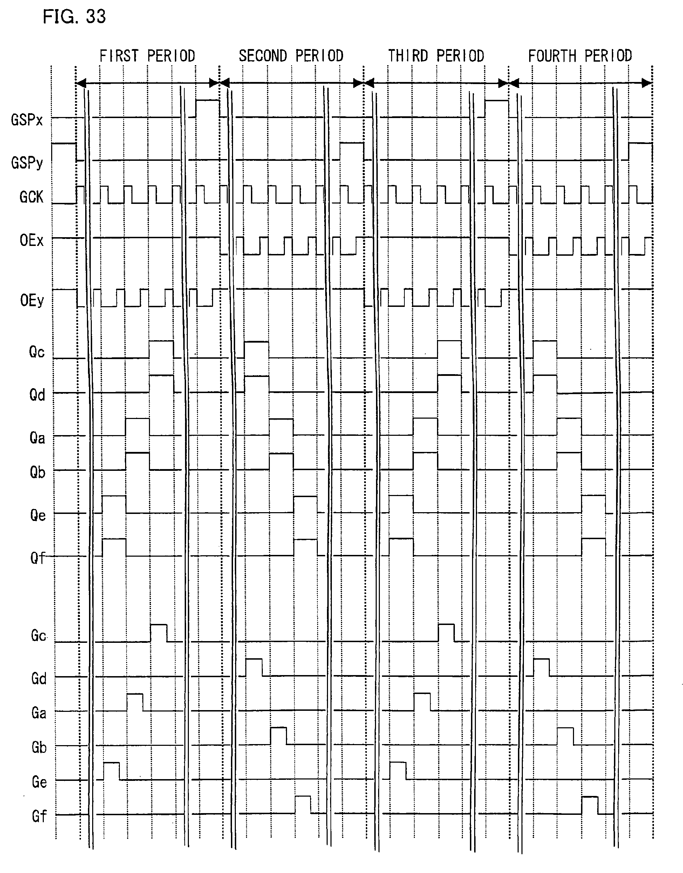

   Fig. 33 is a timing chart illustrating how the gate driver of Fig. 32 is driven.
Fig. 34

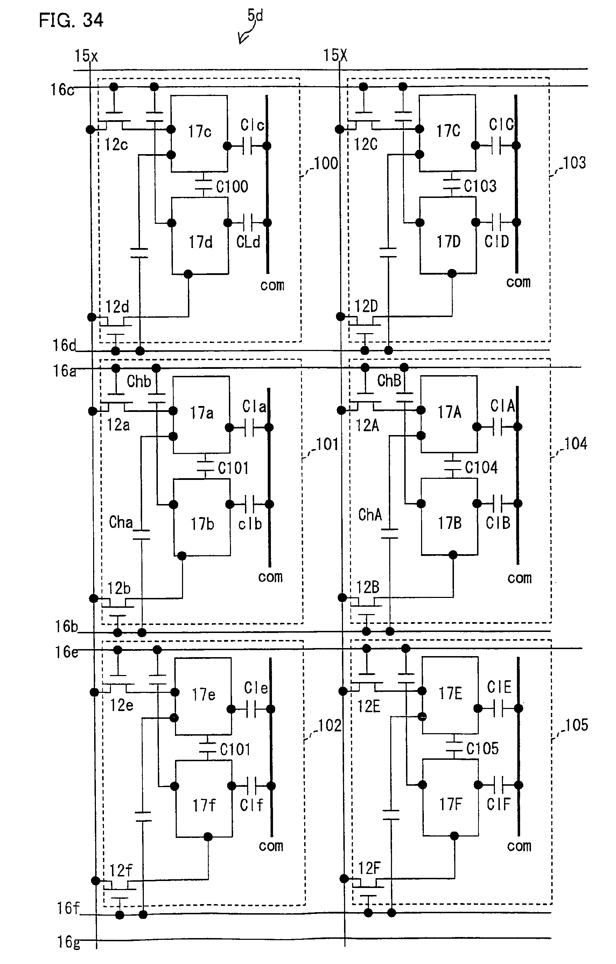

   Fig. 34 is a circuit diagram illustrating a configuration of a liquid crystal panel 5d.
Fig. 35

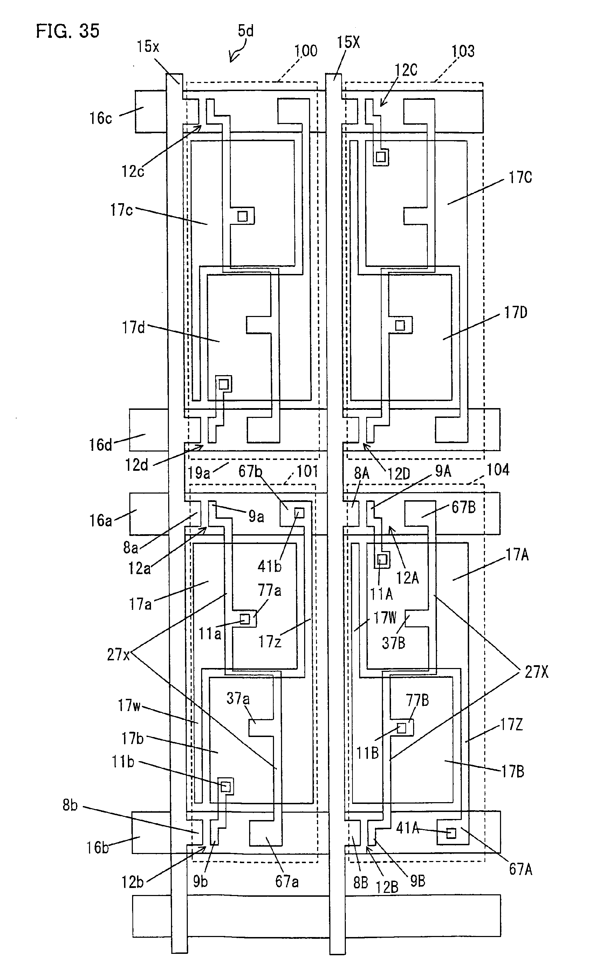

   Fig. 35 is a plan view illustrating a configuration of a liquid crystal panel 5d.
Fig. 36

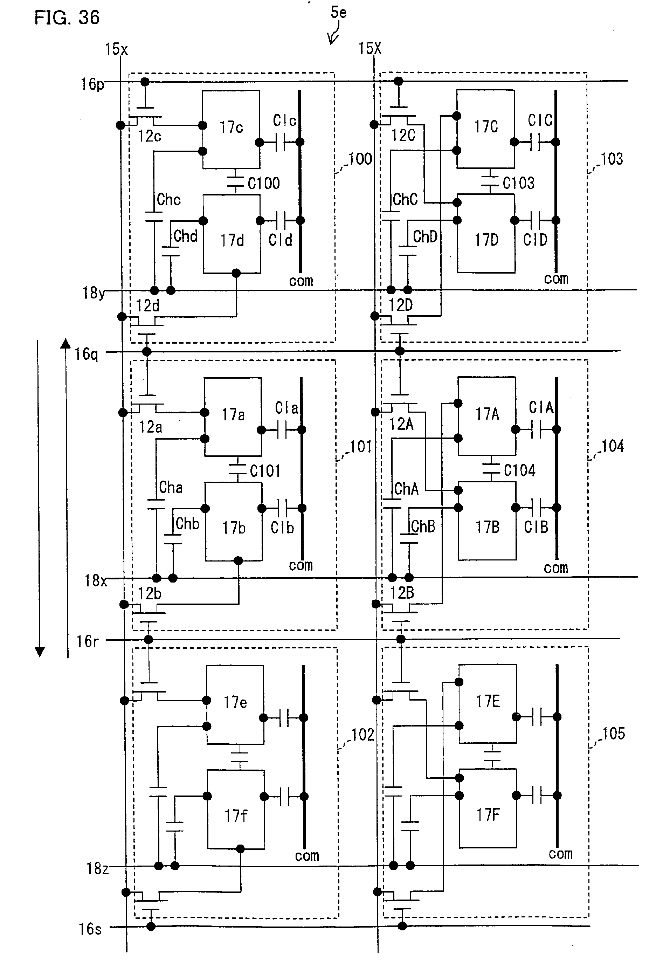

   Fig. 36 is a circuit diagram illustrating a configuration of a liquid crystal panel 5e.
Fig. 37

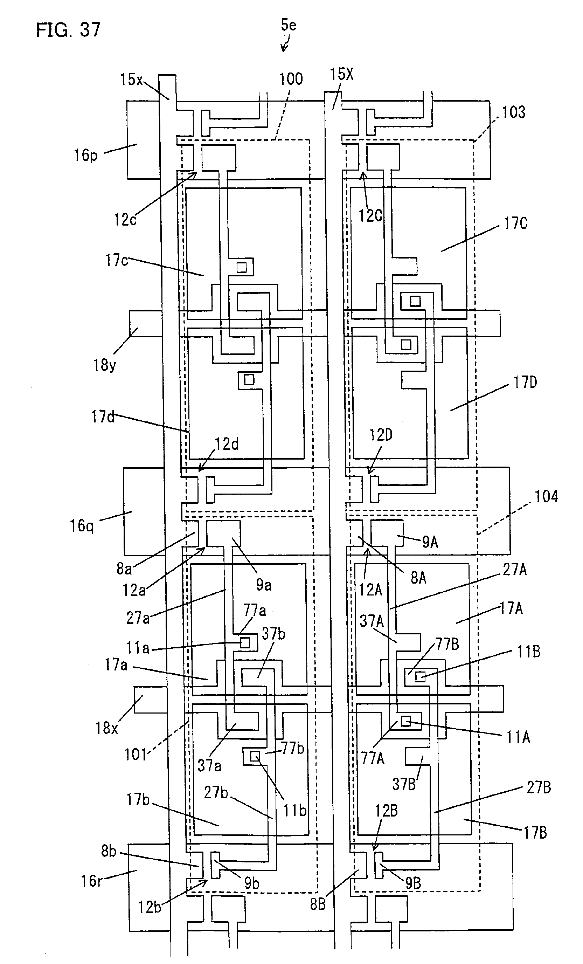

   Fig. 37 is a plan view illustrating a configuration of a liquid crystal panel 5e.
Fig. 38

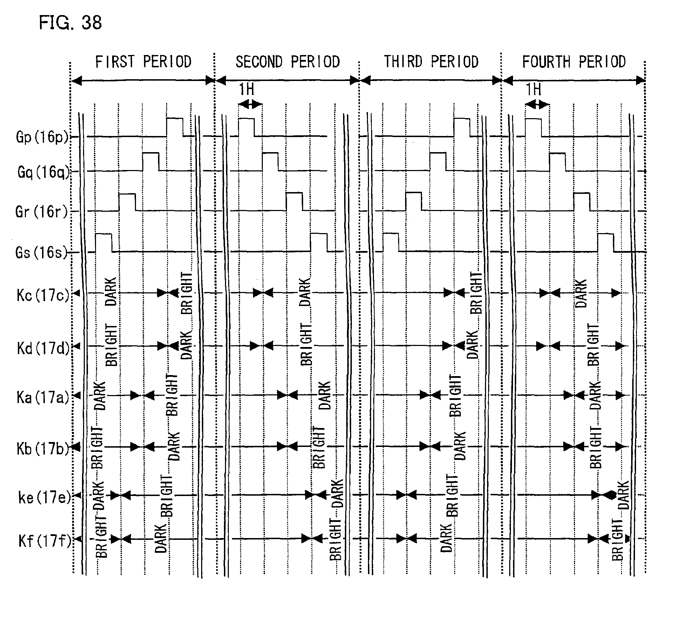

   Fig. 38 is a timing chart showing a driving method of a liquid crystal display device including a liquid crystal panel 5e.
Fig. 39

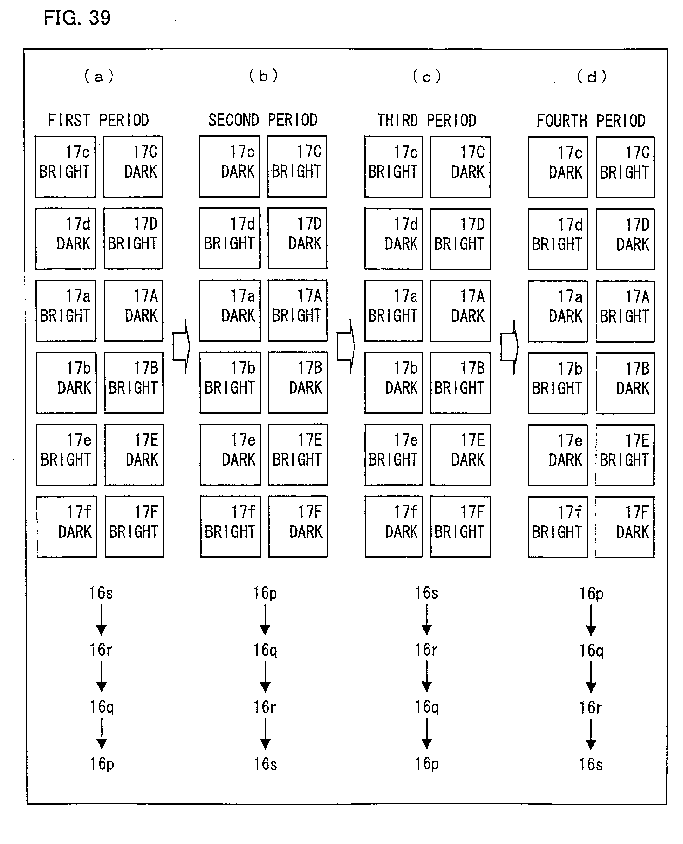

   Fig. 39 is a view schematically illustrating a display state in each period in a case where the driving method of Fig. 38 is used.
Fig. 40

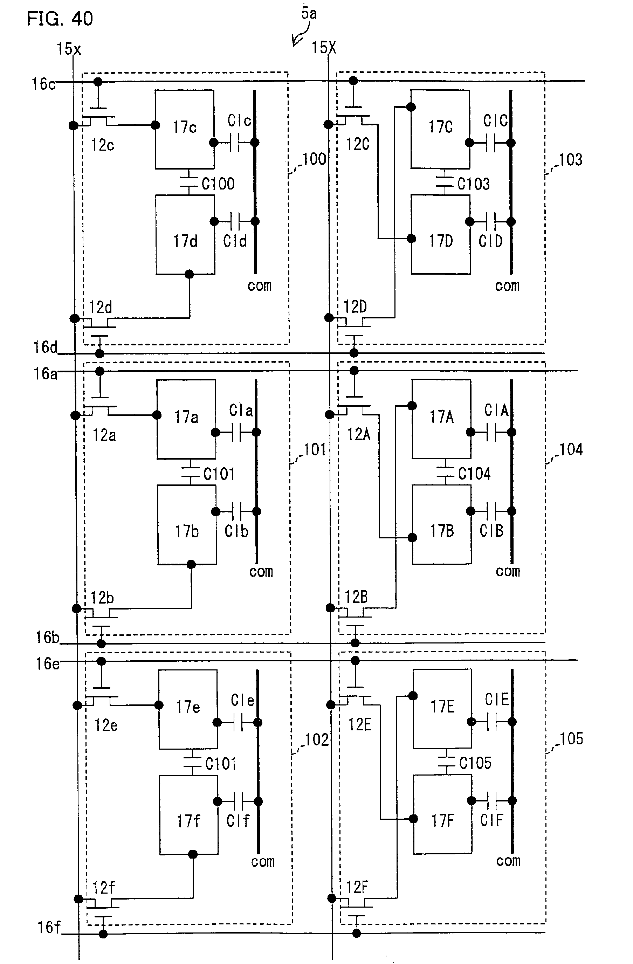

   Fig. 40 is a circuit diagram illustrating yet another configuration of a liquid crystal panel 5a.
Fig. 41

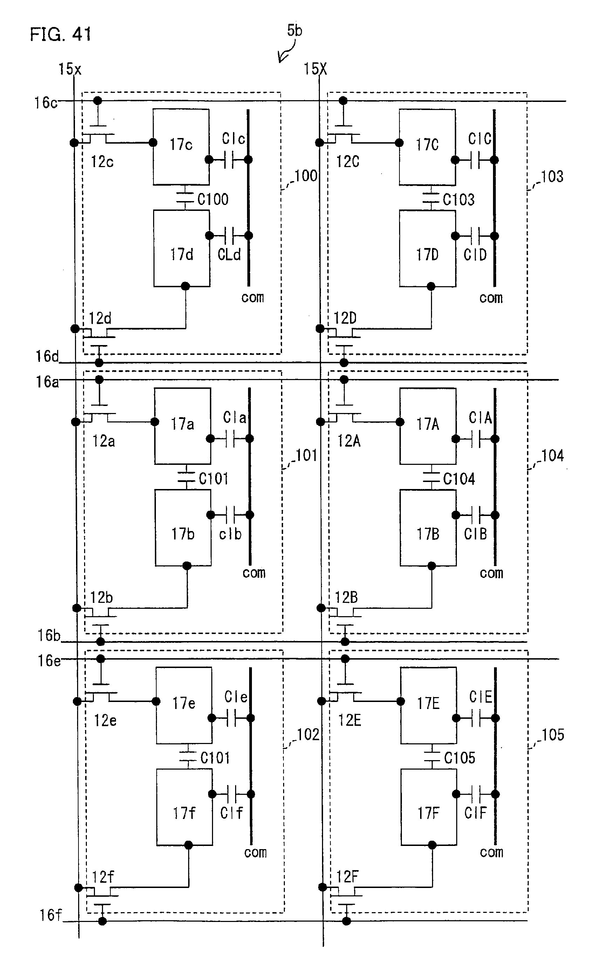

   Fig. 41 is a circuit diagram illustrating yet another configuration of a liquid crystal panel 5b.
Fig. 42

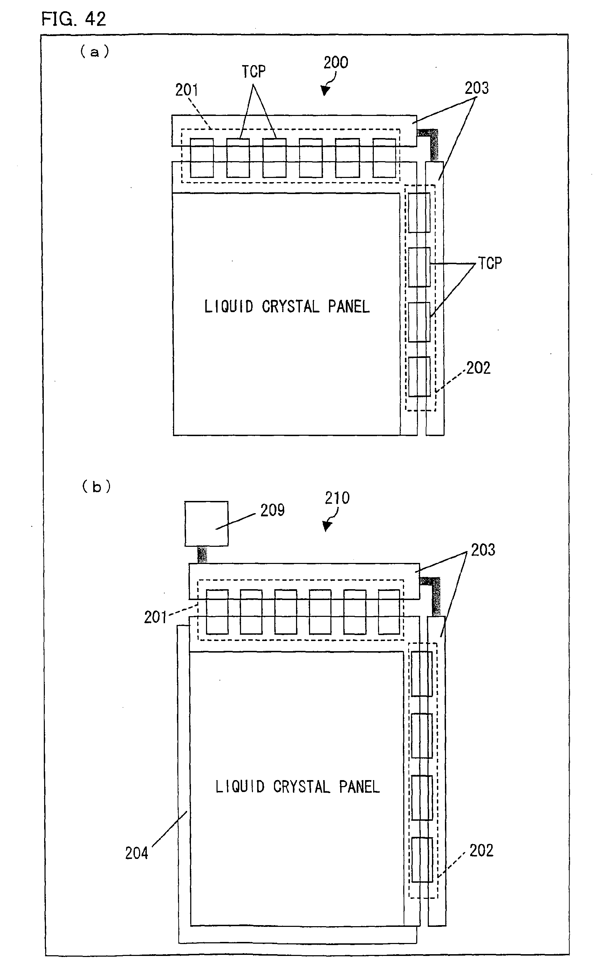

   In Fig. 42, (a) is a view schematically illustrating a configuration of the present liquid crystal display unit, and (b) is a view schematically illustrating a configuration of the present liquid crystal display device.
Fig. 43

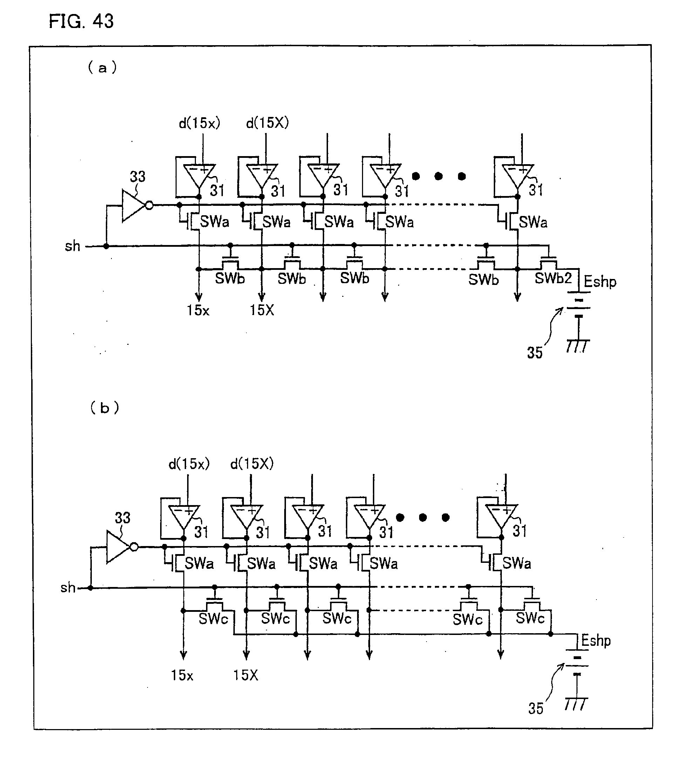

   In Fig. 43, (a) and (b) are circuit diagrams that illustrate another configuration of a source driver.
Fig. 44

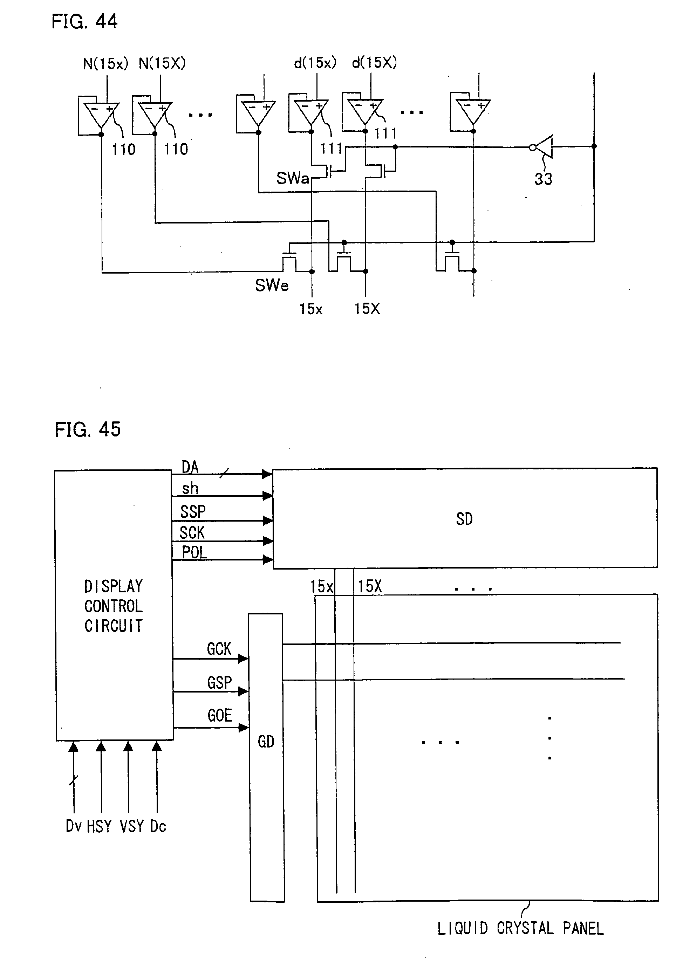

   Fig. 44 is a circuit diagram illustrating yet another configuration of a source driver.
Fig. 45
   Fig. 45 is a block diagram illustrating an entire configuration of the present liquid crystal display device.
Fig. 46

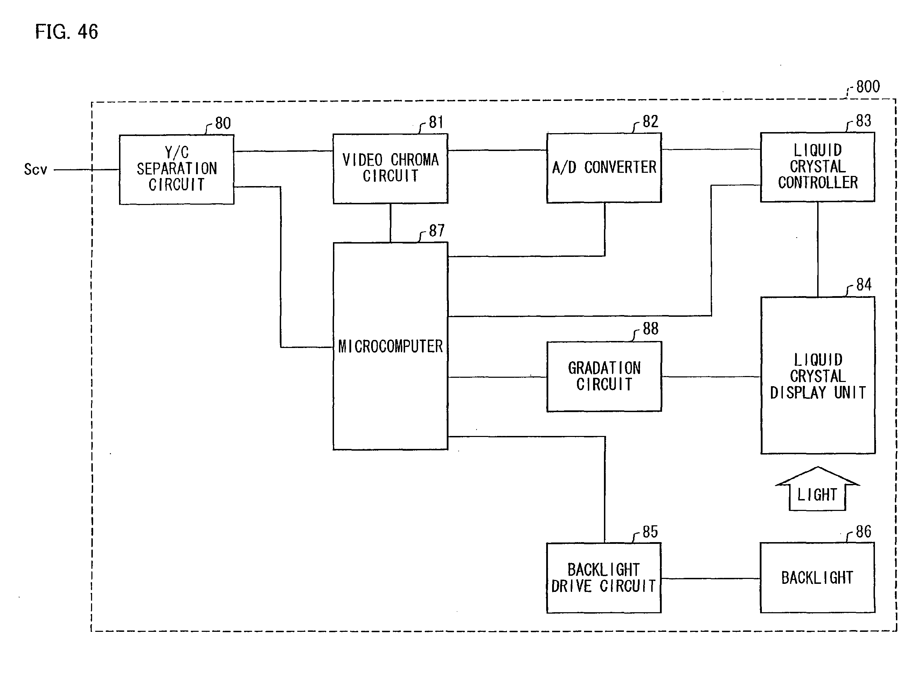

   Fig. 46 is a block diagram illustrating functions of the present liquid crystal display device.
Fig. 47

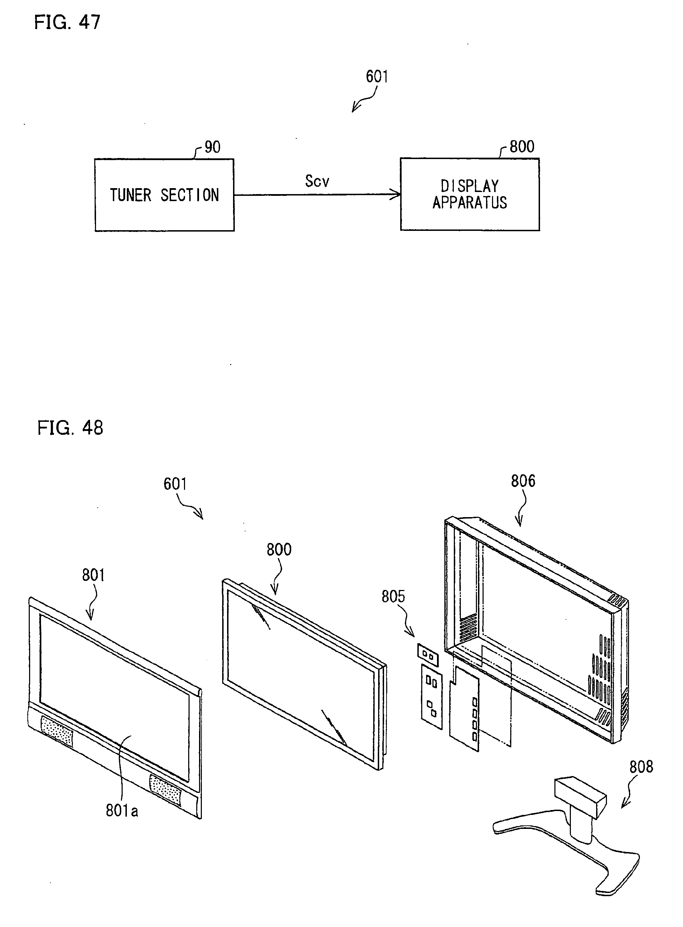

   Fig. 47 is a block diagram illustrating a function of the present television receiver.
Fig. 48
   Fig. 48 is an exploded perspective view of a configuration of the present television receiver.
Fig. 49

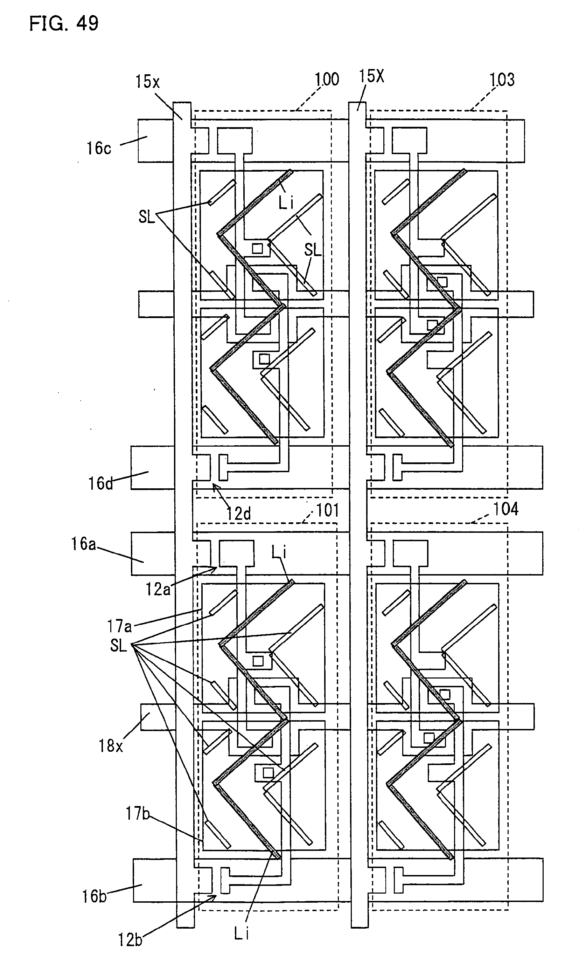

   Fig. 49 is a plan view illustrating one example of a configuration in a case where a liquid crystal panel 5a employs an MVA mode.
Fig. 50

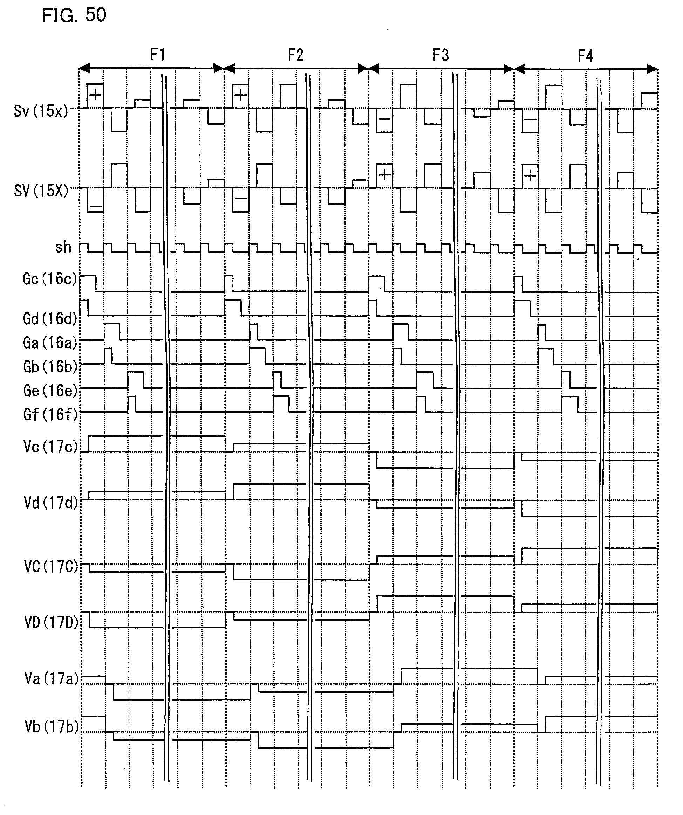

   Fig. 50 is a timing chart showing yet another driving method of a liquid crystal display device including a liquid crystal panel 5a.
Fig. 51

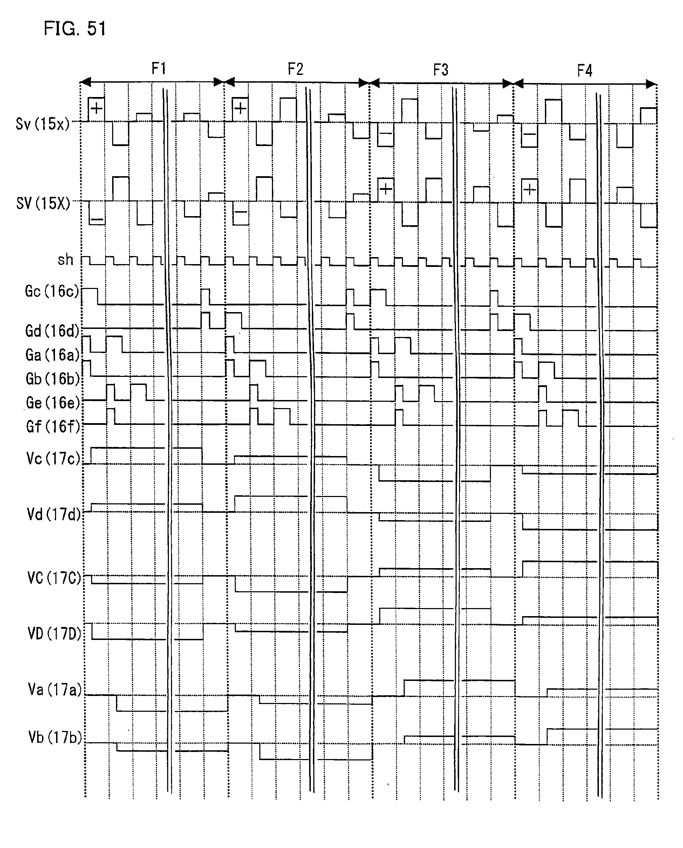

   Fig. 51 is a timing chart showing yet another driving method of a liquid crystal display device including a liquid crystal panel 5a.
Fig. 52

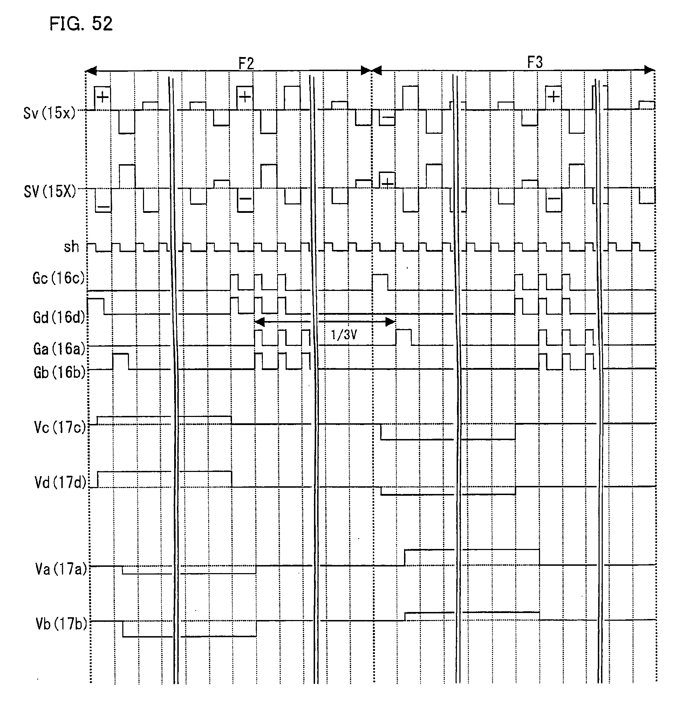

   Fig. 52 is a timing chart showing yet another driving method of a liquid crystal display device including a liquid crystal panel 5a.
Fig. 53

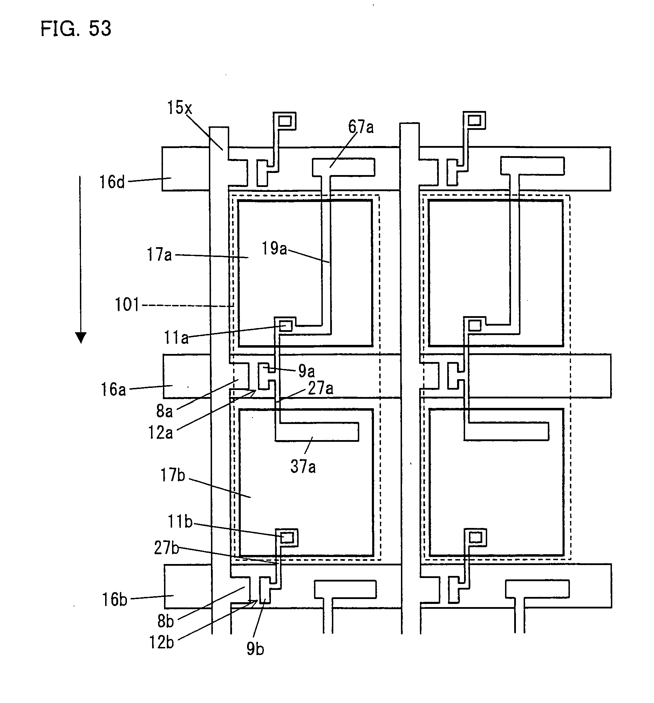

   Fig. 53 is a plan view illustrating yet another example of a configuration of a liquid crystal panel in accordance with Embodiment 3.
Fig. 54

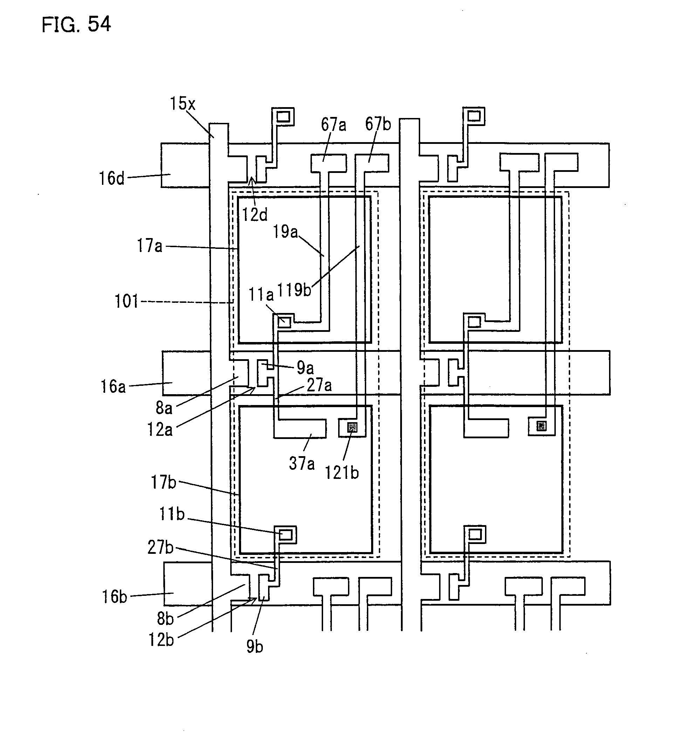

   Fig. 54 is a plan view illustrating yet another example of a configuration of a liquid crystal panel in accordance with Embodiment 3.
Fig. 55

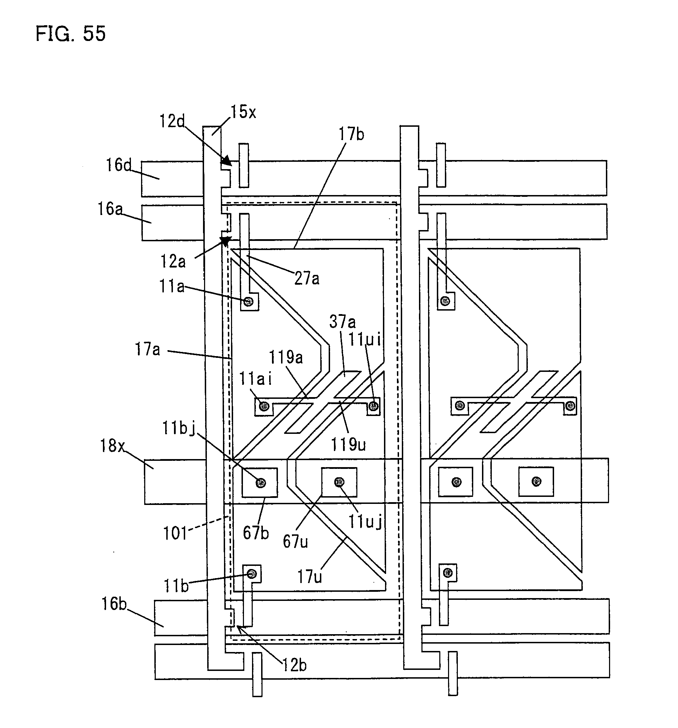

   Fig. 55 is a plan view illustrating yet another example of a configuration of a liquid crystal panel in accordance with Embodiment 2.
Fig. 56

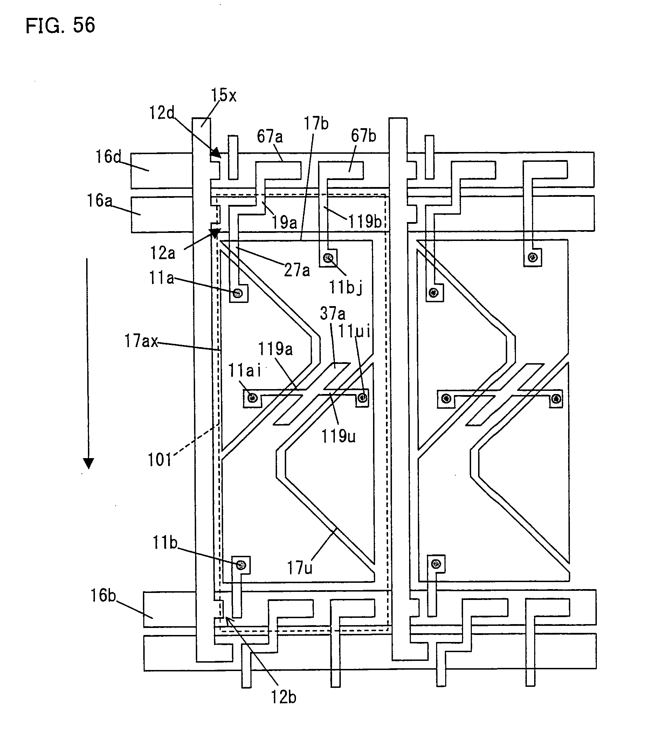

   Fig. 56 is a plan view illustrating yet another example of a configuration of a liquid crystal panel in accordance with Embodiment 3.
Fig. 57

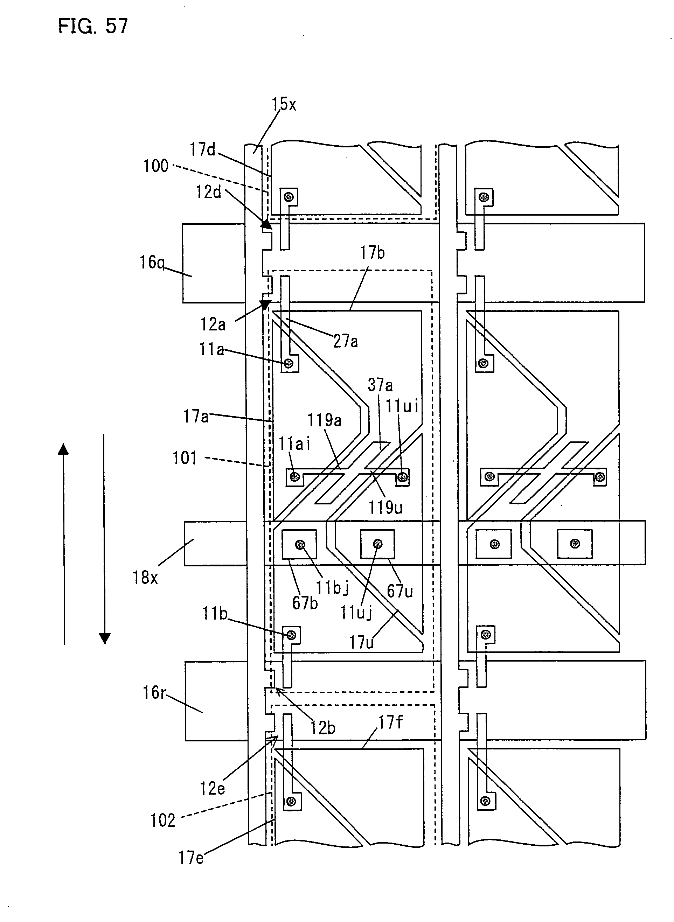

   Fig. 57 is a plan view illustrating yet another example of a configuration of a liquid crystal panel in accordance with Embodiment 5.
Fig. 58

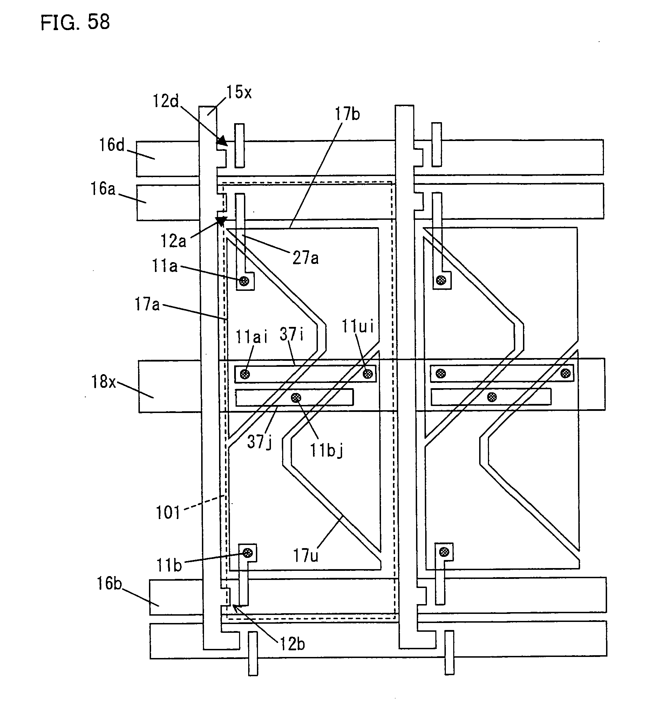

   Fig. 58 is a plan view illustrating yet another example of a configuration of a liquid crystal panel in accordance with Embodiment 2.
Fig. 59
   Fig. 59 is a plan view illustrating a configuration of a conventional liquid crystal panel.

Reference Signs List
- 5a to 5e: liquid crystal panel
- 11a, 11b, 41A, 41B: contact hole
- 12a to 12f, 12A to 12F: transistor
- 15x, 15X: data signal line
- 16a to 16f, 16p to 16s: scanning signal line
- 17a to 17f: pixel electrode
- 17A to 17F: pixel electrode
- 18x to 18z: storage capacitor wire
- 21: organic gate insulating film
- 22: inorganic gate insulating film
- 24: semiconductor layer
- 25: inorganic interlayer insulating film
- 26: organic interlayer insulating film
- 37a, 37b, 37A, 37B: coupling capacitor electrode
- 67a, 67b, 67A, 67B: storage capacitor electrode
- 77a, 77b, 77A, 77B: contact electrode
- 84: liquid crystal display unit
- 100, 101: pixel
- 601: television receiver
- 800: liquid crystal display device
- C100, C101: coupling capacitor

### Description of Embodiments

One embodiment according to the present invention is as described below, with reference to Figs. 1 to 58. For convenience in explanation, a direction in which a scanning signal line extends is denoted as a row direction. However, it is needless to say that the scanning signal line may extend in a horizontal direction or a vertical direction in a used (viewed) state of the present liquid crystal display device (or a liquid crystal panel or active matrix substrate used therein).

### Embodiment 1

Fig. 1 is an equivalent circuit diagram of one part of the present liquid crystal panel. As illustrated in Fig. 1, a liquid crystal panel 5a includes: data signal lines (15x and 15X) that extend in a column direction (vertical direction in Fig. 1); scanning signal lines (16a to 16f) that extend in a row direction (horizontal direction in Fig. 1); pixels (100 to 105) that are aligned in the row and column directions; storage capacitor wires (18x to 18z); and a common electrode (counter electrode) com. Configurations of pixels that are included in odd-numbered pixel columns are identical to each other and configurations of pixels that are included in even-numbered pixel columns are identical to each other; however, the configurations of the pixels differ from each other between those included in the odd-numbered pixel columns and those included in the even-numbered pixel columns. Note that a pixel column including the pixels 100 to 102 is adjacent to a pixel column including the pixels 103 to 105.

In the liquid crystal panel 5a, one pixel is associated with one data signal line and two scanning signal lines. Two pixel electrodes 17c and 17d disposed in the pixel 100, two pixel electrodes 17a and 17b disposed in the pixel 101, and two pixel electrodes 17e and 17f disposed in the pixel 102 are arranged in one line; and two pixel electrodes 17C and 17D disposed in the pixel 103, two pixel electrodes 17A and 17B disposed in the pixel 104, and two pixel electrodes 17E and 17F disposed in the pixel 105 are arranged in one line. The pixel electrodes 17c and 17C are disposed adjacent to each other in the row direction, the pixel electrodes 17d and 17D are disposed adjacent to each other in the row direction, the pixel electrodes 17a and 17A are disposed adjacent to each other in the row direction, the pixel electrodes 17b and 17B are disposed adjacent to each other in the row direction, the pixel electrodes 17e and 17E are disposed adjacent to each other in the row direction, and the pixel electrodes 17f and 17F are disposed adjacent to each other in the row direction.

In the pixel 100, the pixel electrodes 17c and 17d are connected to each other via a coupling capacitor C 100. The pixel electrode 17c is connected to the data signal line 15x via a transistor 12c that is connected to the scanning signal line 16c, and the pixel electrode 17d is connected to the data signal line 15x via a transistor 12d that is connected to the scanning signal line 16d. Storage capacitance Chc is formed between the pixel electrode 17c and the storage capacitor wire 18y, and storage capacitance Chd is formed between the pixel electrode 17d and the storage capacitor wire 18y. Liquid crystal capacitance Clc is formed between the pixel electrode 17c and the common electrode com, and liquid crystal capacitance Cld is formed between the pixel electrode 17d and the common electrode com.

Meanwhile, in the pixel 103 disposed adjacent to the pixel 100 in the column direction, the pixel electrodes 17C and 17D are connected to each other via a coupling capacitor C103. The pixel electrode 17C is connected to the data signal line 15X via a transistor 12D that is connected to the scanning signal line 16d, and the pixel electrode 17D is connected to the data signal line 15X via a transistor 12C that is connected to the scanning signal line 16c. Storage capacitance ChC is formed between the pixel electrode 17C and the storage capacitor wire 18y, and storage capacitance ChD is formed between the pixel electrode 17D and the storage capacitor wire 18y. Liquid crystal capacitance C1C is formed between the pixel electrode 17C and the common electrode com, and liquid crystal capacitance C1D is formed between the pixel electrode 17D and the common electrode com.

Moreover, in the pixel 101 disposed adjacent to the pixel 100 in the row direction, the pixel electrodes 17a and 17b are connected to each other via a coupling capacitor C101. The pixel electrode 17a is connected to the data signal line 15x via a transistor 12a that is connected to the scanning signal line 16a, and the pixel electrode 17b is connected to the data signal line 15x via a transistor 12b that is connected to the scanning signal line 16b. Storage capacitance Cha is provided between the pixel electrode 17a and the storage capacitor wire 18x, and storage capacitance Chb is provided between the pixel electrode 17b and the storage capacitor wire 18x. Liquid crystal capacitance Cla is provided between the pixel electrode 17a and the common electrode com, and liquid crystal capacitance Clb is provided between the pixel electrode 17b and the common electrode com.

Meanwhile, in the pixel 104 disposed adjacent to the pixel 101 in the column direction, the pixel electrodes 17A and 17B are connected to each other via a coupling capacitor C104. The pixel electrode 17A is connected to the data signal line 15X via a transistor 12B that is connected to the scanning signal line 16b, and the pixel electrode 17B is connected to the data signal line 15X via a transistor 12A that is connected to the scanning signal line 16a. Storage capacitance ChA is provided between the pixel electrode 17A and the storage capacitor wire 18x, and storage capacitance ChB is provided between the pixel electrode 17B and the storage capacitor wire 18x. Liquid crystal capacitance ClA is provided between the pixel electrode 17A and the common electrode com, and liquid crystal capacitance C1B is provided between the pixel electrode 17B and the common electrode com.

In a liquid crystal display device that includes the liquid crystal panel 5a, for example, with the two scanning signal lines associated with a pixel, one of the two scanning signal lines is selected in a former frame of two consecutive frames, and the other one of the two scanning signal lines is selected in a latter frame of the two consecutive frames. More specifically, the scanning signal lines 16c, 16a, and 16e are successively selected in one of two consecutive frames, and the scanning signal lines 16d, 16b, and 16f are successively selected in the other one of the two consecutive frames. Moreover, the liquid crystal display device including the liquid crystal panel 5a may select one of the two scanning signal lines associated with a pixel in each of frames of n (n is a plural number) consecutive frames, and may select the other one of the two scanning signal lines in each of frames of a subsequent set of n consecutive frames. More specifically, the scanning signal lines 16c, 16a, and 16e may be successively selected in each of frames of n (n is a plural number) consecutive frames, and the scanning signal lines 16d, 16b, and 16f may be successively selected in each of frames of the subsequent set of n consecutive frames.

In a case where the scanning signal line 16a is selected, the pixel electrode 17a is connected to the data signal line 15x (via the transistor 12a) and the pixel electrode 17b is capacitively coupled to the data signal line 15x (via the transistor 12a and pixel electrode 17a). This causes an electric potential of the pixel electrode 17b which electric potential is achieved after the transistor 12a is turned off to be: Va × (Ca /(Ca + Co)), where Cla (capacitance value) = Clb (capacitance value) = Cl, Cha (capacitance value) = Chb (capacitance value) = Ch, Co = Cl + Ch, a capacitance value of C101 is Ca, and an electric potential of the pixel electrode 17a which electric potential is achieved after the transistor 12a is turned off is Va. As a result, a sub-pixel including the pixel electrode 17a becomes a bright sub-pixel, and a sub-pixel including the pixel electrode 17b becomes a dark sub-pixel. On the other hand, in a case where the scanning signal line 16b is selected, the pixel electrode 17b is connected to the data signal line 15x (via the transistor 12b) and the pixel electrode 17a is capacitively coupled to the data signal line 15x (via the transistor 12b and the pixel electrode 17b). This causes an electric potential of the pixel electrode 17a which electric potential is attained after the transistor 12b is turned off to be: Vb × (Ca / (Ca + Co)), where an electric potential of the pixel electrode 17b which electric potential is achieved after the transistor 12b is turned off is Vb. As a result, a sub-pixel including the pixel electrode 17b becomes a bright sub-pixel, and a sub-pixel including the pixel electrode 17a becomes a dark sub-pixel.

As such, in the present liquid crystal display device, one sub-pixel is a bright sub-pixel in one frame while the sub-pixel is a dark sub-pixel in another frame. Hence, a time integration value of brightness is made uniform between the sub-pixels as compared to a configuration in which one sub-pixel is always a bright sub-pixel or is always a dark sub-pixel. As a result, display quality improves.

Moreover, in the present liquid crystal display device, a sub-pixel is at times a bright sub-pixel and is at other times a dark sub-pixel. Therefore, for example, in a case where the present liquid crystal panel is configured to take an MVA mode as illustrated in Fig. 49 (later described) and such a liquid crystal panel is applied to a liquid crystal display device, time-wisely, 2 (bright and dark) × 4 = 8 domains are formed in one sub-pixel. This improves the viewing angle characteristics of the liquid crystal display device.

In the embodiment, in a case where one of the two scanning signal lines that associate with a pixel is selected in a former frame of two consecutive frames and the other one of the two scanning signal lines is selected in a latter frame of two consecutive frames, a polarity of a signal electric potential that is supplied to the pixel electrodes respectively connected to the two scanning signal lines are inverted per units of two consecutive frames. For example, in a case where the scanning signal line 16a is selected in one of the two consecutive frames, and the scanning signal line 16b is selected in the other one of the two consecutive frames, the polarity of the signal electric potential that is to be supplied to the pixel electrodes 17a and 17b is inverted per units of two consecutive frames (later described). Moreover, in a case where one of the two scanning signal lines that associate with a pixel is selected in each of the frames of n (n is a plural number) consecutive frames and the other one of the two scanning signal lines is selected in each of the frames of a subsequent set of n consecutive frames, n is made to be an even number, and the polarity of the signal electric potential that is supplied to the pixel electrodes respectively connected to the two scanning signal lines is inverted per units of one frame. For example, in the case where the scanning signal line 16a is selected in each of the frames of n (n is an even number) consecutive frames, and the scanning signal line 16b is selected in each of the frames in the subsequent set of n consecutive frames, a polarity of the signal electric potential to be supplied to the pixel electrodes 17a and 17b is inverted per units of one frame. This allows, with the sub-pixels and their pixel electrodes, to have the number of frames (a total period of the frames) in which an electric potential of a pixel electrode is of a positive polarity and in which the sub-pixel is a bright sub-pixel, be equal to the number of frames (a total period of the frames) in which an electric potential of a pixel electrode is of a negative polarity and in which the sub-pixel is a bright sub-pixel, and also allows to have the number of frames (a total period of the frames) in which an electric potential of a pixel electrode is of a positive polarity and in which the sub-pixel is a dark sub-pixel be equal to the number of frames (a total period of the frames) in which an electric potential of a pixel electrode is of a negative polarity and in which the sub-pixel is a dark sub-pixel. This makes it difficult for a liquid crystal layer of the sub-pixel be applied a DC voltage (making image sticking of the sub-pixel difficult to occur).

Moreover, in the present liquid crystal display device, a pixel electrode in a sub-pixel is connected to a data signal line (via a transistor) in one frame and is capacitively coupled to the data signal line (via a transistor and another pixel electrode) in another frame. This allows supplying a signal electric potential in view of a feed-through voltage to the pixel electrode in the frame in which the pixel electrode is connected to the data signal line, thereby making it difficult for a liquid crystal layer of the sub-pixel be applied a DC voltage (making image sticking of the sub-pixel difficult to occur).

The following description adds to this point. Upon fall (non-activation) of a gate on-pulse signal supplied to the gate lines (scanning signal line), an electric potential of a pixel electrode written in from source lines (data signal lines) is fed through pixels of an active matrix liquid crystal display device, due to parasitic capacitance between (i) an electrode connected to the pixel electrode among the conductive electrodes of the transistor and (ii) the gate lines. That is to say, by having a positive signal electric potential and negative signal electric potential of a tone be symmetrical with respect to a counter electric potential (Vcom) when a pixel is AC driven, the feed-through of the electric potential of the pixel electrode causes an intermediate electric potential between (i) a pixel electric potential at a time when a positive signal electric potential is written in and (ii) a pixel electric potential at a time when the negative signal electric potential is written in to shift from the counter electric potential. As a result, a DC voltage is applied to the liquid crystal layer of the pixel (a time integration value of the pixel electrode electric potential shifts off from the counter electric potential). The application of the DC voltage to the liquid crystal layer is a cause for image sticking of pixels. Hence, generally, a positive and negative signal electric potential of a tone is set in view of a feed-through voltage of the tone, in order to avoid the effect of the feed-through voltage. However, in a liquid crystal display device as illustrated in Fig. 49, although it is possible to avoid the effect of the feed-through voltage as such for the pixel electrodes (121a and 121c) that are directly connected to the source lines via a transistor, it is difficult to appropriately avoid the effect of the feed-through voltage for a pixel electrode (121b) that is capacitively coupled to these pixel electrodes (121a and 121c). As a result, this may cause image sticking in the sub-pixels that include the pixel electrode (121b).

Moreover, in the present liquid crystal display device, four pixel electrodes included in two pixels arranged adjacent to each other in the row direction (sharing two scanning signal lines) are configured such that two pixel electrodes that are disposed diagonally across from each other are connected to the same scanning signal line. Hence, in a frame in which one of two sub-pixels adjacent to each other in the row direction is a bright sub-pixel, the other one of the two sub-pixels becomes a dark sub-pixel. This holds down the display unevenness (for example, horizontal-striped unevenness) and roughness (jaggies) as compared to a configuration in which bright sub-pixels are adjacent to each other in the row direction and dark sub-pixels are adjacent to each other in the row direction. Moreover, in a frame in which one of two sub-pixels adjacent to each other in the column direction is a bright sub-pixel, the other one of the two sub-pixels is a dark pixel. This holds down the display unevenness (for example, vertical-striped unevenness) and roughness (jaggies) as compared to the configuration in which bright pixels are adjacent to each other in the column direction and dark pixels are adjacent to each other in the column direction.

By inverting a polarity of a signal electric potential to be supplied to the data signal lines (15x and 15X) per one horizontal scanning period (1H), a feed-through direction of the electric potential while the transistor is OFF becomes opposite between the two pixels adjacent in the column direction. This holds down occurrence of flickering (later described). Moreover, by respectively supplying signal electric potentials of opposite polarities to the adjacent two data signal lines (15x and 15X) in the same horizontal scanning period, a feed-through direction of an electric potential while the transistor is OFF becomes opposite between the two pixels disposed adjacently in the row direction. This holds down the occurrence of flickering (later described).

Fig. 2 illustrates one specific example of the liquid crystal panel 5a. In the liquid crystal panel illustrated in Fig. 2, the data signal line 15x is provided parallel to the pixel 100 and pixel 101, and the data signal line 15X is provided parallel to the pixel 103 and pixel 104. The storage capacitor wire 18y traverses a mid part of the pixel 100 and a mid part of the pixel 103, and a storage capacitor wire 18x traverses a mid part of the pixel 101 and a mid part of the pixel 104.

In the embodiment, the scanning signal line 16c is disposed so as to overlap one of two edge sections of the pixel 100, which two edge sections run along the row direction, and the scanning signal line 16d is disposed so as to overlap the other one of these two edge sections of the pixel 100. From a plan view, the pixel electrodes 17c and 17d are aligned in a column direction, between the scanning signal lines 16c and 16d. The scanning signal line 16c also overlaps one of two edge sections of the pixel 103, which two edge sections run along the row direction, and the scanning signal line 16d overlaps the other one of these two edge sections of the pixel 103. From a plan view, the pixel electrodes 17C and 17D are aligned in the column direction, between the scanning signal lines 16c and 16d.

The scanning signal line 16a is disposed so as to overlap one of two edge sections of the pixel 101, which two edge sections run along the row direction, and the scanning signal line 16b is disposed so as to overlap the other one of these two edge sections of the pixel 101. From a plan view, the pixel electrodes 17a and 17b are aligned in the column direction, between the scanning signal lines 16a and 16b. The scanning signal line 16a also overlaps one of two edge sections of the pixel 104, which two edge sections run along the row direction, and the scanning signal line 16b overlaps the other one of these two edge sections of the pixel 104. From a plan view, the pixel electrodes 17A and 17B are aligned in the column direction, between the scanning signal lines 16a and 16b.

In the pixel 101, a source electrode 8a of the transistor 12a and a drain electrode 9a of the transistor 12a are provided on the scanning signal line 16a, and a source electrode 8b of the transistor 12b and a drain electrode 9b of the transistor 12b are provided on the scanning signal line 16b. The source electrode 8a is connected to the data signal line 15x. The drain electrode 9a is connected to a drain draw-out wire 27a. The drain draw-out wire 27a is connected to a contact electrode 77a and a coupling capacitor electrode 37a. The contact electrode 77a is connected to the pixel electrode 17a via a contact hole 11a. The coupling capacitor electrode 37a overlaps the pixel electrode 17b via an interlayer insulating film. As a result, the coupling capacitor C101 (see Fig. 1) between the pixel electrodes 17a and 17b is formed at a part at which the coupling capacitor electrode 37a overlaps the pixel electrode 17b. Moreover, the source electrode 8b is connected to the data signal line 15x. The drain electrode 9b is connected to the drain draw-out wire 27b. The drain draw-out wire 27b is connected to the contact electrode 77b and the coupling capacitor electrode 37b. The contact electrode 77b is connected to the pixel electrode 17b via a contact hole 11a. The coupling capacitor electrode 37b overlaps the pixel electrode 17a via the interlayer insulating film. As a result, the coupling capacitor C101 (see Fig. 1) between the pixel electrodes 17a and 17b is formed at a part at which the coupling capacitor electrode 37b overlaps the pixel electrode 17a. Furthermore, the coupling capacitor electrodes 37a and 37b each overlap the storage capacitor wire 18x, via a gate insulating film. As a result, storage capacitance Cha (see Fig. 1) is formed at a part at which the coupling capacitor electrode 37a overlaps the storage capacitor wire 18x, and storage capacitance Chb (see Fig. 1) is formed at a part at which the coupling capacitor electrode 37b overlap the storage capacitor wire 18x.

As illustrated in Fig. 2, the pixel electrodes 17a and 17b, drain draw-out wires 27a and 27b, contact electrodes 77a and 77b, contact holes 11a and 11b, and coupling capacitor electrodes 37a and 37b, are disposed in the pixel 101 in such a manner that a planar shape and plane configuration of these members seen from a scanning signal line 16a side are identical to those seen from a scanning signal line 16b side. Moreover, an area of the scanning signal line 16a that is overlapped by the drain electrode 9a and drain draw-out wire 27a (parasitic capacitance Cgd between (i) the drain electrode 9a and drain draw-out wire 27a and (ii) the scanning signal line 16a) is substantially of a same size as an area of the scanning signal line 16b overlapped by the drain electrode 9b and drain draw-out wire 27b (parasitic capacitance Cgd between (i) the drain electrode 9b and drain draw-out wire 27b and (ii) the scanning signal line 16b). As a result, a feed-through voltage in a case where a sub-pixel including the pixel electrode 17a is a bright sub-pixel and a feed-through voltage in a case where a sub-pixel including the pixel electrode 17b is a bright sub-pixel become identical to each other. This reduces a possibility that image sticking occurs to the bright sub-pixel, caused by a difference between the two feed-through voltages.

Moreover, in the pixel 101 of the liquid crystal panel 5a, two coupling capacitor electrodes (37a and 37b) are provided, and these coupling capacitors are parallelized. Hence, even if the drain draw-out wire 27a becomes disconnected at a tip part of the drain draw-out wire 27a (between the contact hole 11a and the coupling capacitor electrode 37a), the pixel 101 is drivable (bright and dark sub-pixels are formable) in frames in which the scanning signal lines 16a and 16b are selected respectively. Moreover, even if the drain draw-out wire 27a becomes disconnected at a root part (between the contact hole 11a and drain electrode 9a) of the drain draw-out wire 27a, the pixel 101 is drivable (bright and dark sub-pixels are formable) in a frame in which the scanning signal line 16b is selected. Furthermore, even if the storage capacitor wire 18x and the coupling capacitor electrode 37a short-circuit, once the drain draw-out wire 27a is disconnected (repair disconnection) in the tip part (for example, below a gap between the pixel electrodes 17a and 17b), the pixel 101 is drivable (bright and dark sub-pixels are formable) in frames in which the scanning signal lines 16a and 16b are selected respectively. Even in a case where the tip part is not disconnected, the pixel 101, although in an incomplete manner, is still drivable (bright sub-pixels and black sub-pixels are still formable) in the frame in which the scanning signal line 16b is selected. Moreover, even if the pixel electrode 17b and the coupling capacitor electrode 37a are short-circuited, by disconnecting (repair disconnection) the drain draw-out wire 27a in the tip part (for example, below a gap between the pixel electrodes 17a and 17b), the pixel 101 is still drivable (bright and dark sub-pixels are still formable) in the frame in which the scanning signal lines 16a and 16b are selected respectively. Even in a case where the tip part is not disconnected, the pixel 101 may still be driven, however the pixel 101 is driven in an incomplete way (the entire pixel becomes constructed of bright sub-pixels). Moreover, in the pixel 104 of the liquid crystal panel 5a, two coupling capacitor electrodes (37A and 37B) are provided, and these coupling capacitors are parallelized. Hence, even if the drain draw-out wire 27A becomes disconnected, the pixel 104 is drivable (bright and dark sub-pixels are formable) in frames in which the scanning signal line 16B is selected. Moreover, even if the pixel electrode 17A and the coupling capacitor electrode 37A short-circuit, the pixel 104 is still drivable, although the pixel 104 is driven in an incomplete way (the entire pixel becomes constructed of bright sub-pixels). Moreover, even if the storage capacitor wire 18x and the contact electrode 77A are short-circuited, the pixel 104 is still drivable in the frame in which the scanning signal line 16b is selected, although the pixel 104 is driven in an incomplete way (a bright sub-pixel and a black sub-pixel is formed). The pixel 100 has a configuration (shape and arrangement of members and their connection relationship) identical to that of the pixel 101.

In the pixel 104, a source electrode 8A of the transistor 12A and a drain electrode 9A of the transistor 12A are provided on the scanning signal line 16a, and a source electrode 8B of the transistor 12B and a drain electrode 9B of the transistor 12B are provided on the scanning signal line 16b. The source electrode 8A is connected to the data signal line 15X. The drain electrode 9A is connected to the drain draw-out wire 27A. The drain draw-out wire 27A is connected to a coupling capacitor electrode 37A and a contact electrode 77A. The contact electrode 77A is connected to the pixel electrode 17B via a contact hole 11A. The coupling capacitor electrode 37A overlaps the pixel electrode 17A via an interlayer insulating film. As a result, a coupling capacitor C104 (see Fig. 1) between the pixel electrodes 17A and 17B is formed. Moreover, the source electrode 8B is connected to the data signal line 15X. The drain electrode 9B is connected to a drain draw-out wire 27B. The drain draw-out wire 27B is connected to a coupling capacitor electrode 37B and a contact electrode 77B. The contact electrode 77B is connected to the pixel electrode 17A via the contact hole 11B. The coupling capacitor electrode 37B overlaps the pixel electrode 17B via an interlayer insulating film. As a result, a coupling capacitor C104 (see Fig. 1) between the pixel electrodes 17A and 17B is formed. Furthermore, the contact electrodes 77A and 77B each overlap the storage capacitor wire 18x via a gate insulating film. This forms storage capacitances ChA and ChB.

As illustrated in Fig. 2, the pixel electrodes 17A and 17B, drain draw-out wires 27A and 27B, contact electrodes 77A and 77B, contact holes 11A and 11B, and coupling capacitor electrodes 37A and 37B, are disposed in the pixel 104 in such a manner that a planar shape and plane configuration of these members seen from the scanning signal line 16a side are identical to those seen from the scanning signal line 16b side. Moreover, an area of the scanning signal line 16a overlapped by the drain electrode 9A and drain draw-out wire 27A (parasitic capacitance Cgd between (i) the drain electrode 9A and drain draw-out wire 27A and (ii) the scanning signal line 16a) is substantially of a same size as an area of the scanning signal line 16b overlapped by the drain electrode 9B and drain draw-out wire 27B (parasitic capacitance Cgd between (i) the drain electrode 9B and drain draw-out wire 27B and (ii) the scanning signal line 16b). As a result, a feed-through voltage in a case where a sub-pixel including the pixel electrode 17a is a bright sub-pixel and a feed-through voltage in a case where a sub-pixel including the pixel electrode 17b is a bright sub-pixel become identical to each other. This reduces a possibility that image sticking occurs to the bright sub-pixel, caused by a difference between the two feed-through voltages. The pixel 103 has a configuration (shape and arrangement of members and their connection relationship) identical to that of the pixel 104.

Fig. 3 is a cross-sectional view taken on A-B in Fig. 2. As illustrated in Fig. 3, the liquid crystal panel 5a includes an active matrix substrate 3, a color filter substrate 30 facing the active matrix substrate 3, and a liquid crystal layer 40 sandwiched between the two substrates (3 and 30).

The active matrix substrate 5 has the scanning signal line 16a and the storage capacitor wire 18x provided on a glass substrate 31, and on these members, an inorganic gate insulating film 22 is provided so as to cover these members. On the inorganic gate insulating film 22, a semiconductor layer 24 (i layer and n+ layer), a source electrode 8a that is in contact with the n+ layer, a drain electrode 9a, drain draw-out wires 27a and 27b, a contact electrode 77a, and a coupling capacitor electrode 37a are provided. Further, an inorganic interlayer insulating film 25 is formed thereon so as to cover these members. The pixel electrodes 17a and 17b are formed on the inorganic interlayer insulating film 25, and further an alignment film (not illustrated) is formed so as to cover these members (pixel electrodes 17a and 17b). In the embodiment, the inorganic interlayer insulating film 25 is hollowed out at the contact hole 11a, thereby allowing connection of the pixel electrode 17a and the contact electrode 77a. Moreover, the pixel electrode 17b overlaps the coupling capacitor electrode 37a that is connected to the drain draw-out wire 27a, via the inorganic interlayer insulating film 25. As a result, the coupling capacitor C101 (see Fig. 1) is formed. Moreover, the coupling capacitor electrode 37a overlaps the storage capacitor wire 18x via the inorganic gate insulating film 22. This forms storage capacitance Cha (see Fig. 1).

Meanwhile, a color filter substrate 30 includes a black matrix 13 and a colored layer 14 provided on a glass substrate 32. A common electrode (com) 28 is provided on an upper layer of the black matrix 13 and colored layer 14. Further, an alignment film (not illustrated) is formed on the common electrode 28 so as to cover the common electrode (com) 28.

Fig. 49 illustrates the liquid crystal panel illustrated in Fig. 2 that has a configuration of a MVA (Multidomain Vertical Alignment) mode. As illustrated in Fig. 49, the MVA mode liquid crystal panel has, for example, slits SL for alignment controlling, which slits SL are provided on each of pixel electrodes of the active matrix substrate, and ribs (line projection) Li for alignment controlling, which ribs Li are provided on the color filter substrate. Instead of the rib, a slit for alignment controlling may be provided on the common electrode of the color filter substrate.

The A-B cross section of Fig. 3 may be configured as in Fig. 4. That is to say, a thick organic gate insulating film 21 and a thin inorganic gate insulating film 22 are formed on a substrate, and a thin inorganic interlayer insulating film 25 and a thick organic interlayer insulating film 26 are formed in layers below the pixel electrodes. This attains an effect of preventing reduction in various parasitic capacitances and preventing short-circuiting of wires. In this case, as illustrated in Fig. 4, it is preferable that the organic gate insulating film 21 is hollowed at a part positioned below the coupling capacitor electrode 37a and is preferable that the organic interlayer insulating film 26 is hollowed at a part positioned above the coupling capacitor electrode. This increases a capacitance value of the coupling capacitor C101 and a capacitance value of the storage capacitance Cha.

The inorganic interlayer insulating film 25, organic interlayer insulating film 26, and contact hole 11a illustrated in Fig. 4 may be formed by a method as follows. Namely, after the transistor (TFT) is formed, an inorganic interlayer insulating film 25 (passivation film) made of SiNx having a thickness of approximately 3000 Å is formed by CVD with use of a mixed gas of SiH₄ gas, NH₃ gas and N₂ gas, so that the inorganic interlayer insulating film 25 covers an entire substrate surface. Thereafter, an organic interlayer insulating film 26 made of positive-type photosensitive acrylic resin is formed by spin coating or die coating, so as to have a thickness of approximately 3 µm. Subsequently, the hollowed part in the organic interlayer insulating film 26 and various contact patterns are formed by performing photolithography. Furthermore, the organic interlayer insulating film 26 that is patterned is used as a mask to successively dry etch the inorganic interlayer insulating film 25 and the inorganic gate insulating film 22, by use of a mixed gas of CF₄ gas and O₂ gas. The organic gate insulating film 21 and the organic interlayer insulating film 26 may be an insulating film made of SOG (spin-on glass) material, for example, and the organic gate insulating film 21 and the organic interlayer insulating film 26 may include at least one of acrylic resin, epoxy resin, polyimide resin, polyurethane resin, novolac resin, and siloxane resin.

Fig. 5 illustrates another specific example of the liquid crystal panel 5a. In the liquid crystal panel of Fig. 5, the data signal line 15x is provided parallel to the pixel 100 and pixel 101, and the data signal line 15X is provided parallel to the pixel 103 and pixel 104. Further, the storage capacitor wire 18y traverses a mid part of the pixel 100 and a mid part of the pixel 103, and the storage capacitor wire 18x traverses a mid part of the pixel 101 and a mid part of the pixel 104.

In the embodiment, the scanning signal line 16c is disposed to overlap one of two edge sections of the pixel 100, which two edge sections are parallel to the row direction, and the scanning signal line 16d is disposed to overlap the other one of the two edge sections of the pixel 100. From a plan view, the pixel electrode 17c is disposed between the scanning signal line 16c and the storage capacitor wire 18y, and the pixel electrode 17d is disposed between the scanning signal line 16d and the storage capacitor wire 18y. Moreover, the scanning signal line 16c overlaps one of two edge sections of the pixel 103, which two edge sections are parallel to the row direction, and the scanning signal line 16d overlaps the other one of the two edge sections of the pixel 103. From a plan view, the pixel electrode 17C is disposed between the scanning signal line 16c and the storage capacitor wire 18y, and the pixel electrode 17D is disposed between the scanning signal line 16d and the storage capacitor wire 18y.

Moreover, the scanning signal line 16a is disposed to overlap one of two edge sections of the pixel 101, which two edge sections are parallel to the row direction, and the scanning signal line 16b is disposed to overlap the other one of the two edge sections of the pixel 101. From a plan view, the pixel electrode 17a is disposed between the scanning signal line 16a and the storage capacitor wire 18x, and the pixel electrode 17b is disposed between the scanning signal line 16b and the storage capacitor wire 18x. Moreover, the scanning signal line 16a overlaps one of two edge sections of the pixel 104 that are parallel to the row direction, and the scanning signal line 16b overlaps the other one of the two edge sections of the pixel 104. From a plan view, the pixel electrode 17A is disposed between the scanning signal line 16a and the storage capacitor wire 18x, and the pixel electrode 17B is disposed between the scanning signal line 16b and the storage capacitor wire 18x.

In the pixel 101, a source electrode 8a of the transistor 12a and two drain electrodes 9a and 10a of the transistor 12a are disposed on the scanning signal line 16a, and a source electrode 8b of the transistor 12b and two drain electrodes 9b and 10b of the transistor 12b are disposed on the scanning signal line 16b. The source electrode 8a is connected to the data signal line 15x. The drain electrode 9a is connected to the contact electrode 77a via the drain draw-out wire 27a, and the contact electrode 77a is connected to the pixel electrode 17a via the contact hole 11a. The drain electrode 10a is connected to the coupling capacitor electrode 37a via a drain draw-out wire 19a. Further, the coupling capacitor electrode 37a overlaps the pixel electrode 17b via an interlayer insulating film. As a result, a coupling capacitor C101 (see Fig. 1) between the pixel electrodes 17a and 17b is formed at a part at which the coupling capacitor electrode 37a overlaps the pixel electrode 17b. From a plan view, the drain draw-out wire 19a is disposed between the pixel electrode 17a and the data signal line 15x. Moreover, the source electrode 8b is connected to the data signal line 15x. The drain electrode 9b is connected to the contact electrode 77b via the drain draw-out wire 27b, and the contact electrode 77b is connected to the pixel electrode 17b via the contact hole 11b. The drain electrode 10b is connected to the coupling capacitor electrode 37b via the drain draw-out wire 19b, and furthermore the coupling capacitor electrode 37b overlaps the pixel electrode 17a via an interlayer insulating film. As a result, a coupling capacitor C101 (see Fig. 1) between the pixel electrodes 17a and 17b is formed at a part at which the coupling capacitor electrode 37b overlaps the pixel electrode 17a. From a plan view, the drain draw-out wire 19b is disposed between the pixel electrode 17b and the data signal line 15X. A storage capacitor electrode 67a is disposed on the storage capacitor wire 18x via a gate insulating film; the storage capacitor electrode 67a and the pixel electrode 17a are connected to each other via a contact hole 41a. As a result, storage capacitance Cha (see Fig. 1) is formed. Moreover, a storage capacitor electrode 67b is disposed on the storage capacitor wire 18x via a gate insulating film, and the storage capacitor electrode 67b and the pixel electrode 17b are connected to each other via a contact hole 41b. As a result, storage capacitance Chb (see Fig. 1) is formed.

As illustrated in Fig. 5, the pixel electrodes 17a and 17b, drain draw-out wires 19a, 19b, 27a, and 27b, contact electrodes 77a and 77b, contact holes 11a, 11b, 41a, and 41b, storage capacitor electrodes 67a and 67b, and coupling capacitor electrodes 37a and 37b, are disposed in the pixel 101 in such a manner that a planar shape and plane configuration of these members seen from a scanning signal line 16a side are identical to those seen from a scanning signal line 16b side. Moreover, an area of the scanning signal line 16a overlapped by the drain electrode 9a and drain draw-out wires 19a and 27a (parasitic capacitance Cgd between (i) the scanning signal line 16a and (ii) the drain electrode 9a and drain draw-out wires 19a and 27a) is substantially of a same size as an area of the scanning signal line 16b overlapped by the drain electrode 9b and drain draw-out wires 19b and 27b (parasitic capacitance Cgd between (i) the scanning signal line 16b and (ii) the drain electrode 9b and drain draw-out wires 19b and 27b). As a result, a feed-through voltage in a case where a sub-pixel including the pixel electrode 17a is a bright sub-pixel and a feed-through voltage in a case where a sub-pixel including the pixel electrode 17b is a bright sub-pixel become identical to each other. This reduces the possibility that image sticking occurs to the bright sub-pixel, caused by a difference between the two feed-through voltages. The pixel 100 has a configuration (shape and arrangement of members and their connection relationship) identical to that of the pixel 101.

In the pixel 104, a source electrode 8A of the transistor 12A and two drain electrodes 9A and 10A of the transistor 12A are disposed on the scanning signal line 16a, and a source electrode 8B of the transistor 12B and two drain electrodes 9B and 10B of the transistor 12B are disposed on the scanning signal line 16b. The source electrode 8A is connected to the data signal line 15X. The drain electrode 10A is connected to the contact electrode 77A via the drain draw-out wire 27A, and the contact electrode 77A is connected to the pixel electrode 17B via the contact hole 11A. The drain electrode 9A is connected to the coupling capacitor electrode 37A via the drain draw-out wire 19A, and furthermore the coupling capacitor electrode 37A overlaps the pixel electrode 17A via an interlayer insulating film. As a result, a coupling capacitor C104 (see Fig. 1) between the pixel electrodes 17A and 17B is formed. From a plan view, the drain draw-out wire 27A is disposed between the pixel electrode 17A and the data signal line 15X. Moreover, the source electrode 8B is connected to the data signal line 15X. The drain electrode 10B is connected to the contact electrode 77B via the drain draw-out wire 27B, and the contact electrode 77B is connected to the pixel electrode 17A via the contact hole 11B. The drain electrode 9B is connected to the coupling capacitor electrode 37B via the drain draw-out wire 19B, and further the coupling capacitor electrode 37B overlaps the pixel electrode 17B via an interlayer insulating film. As a result, a coupling capacitor C104 (see Fig. 1) between the pixel electrodes 17A and 17B is formed. From a plan view, the drain draw-out wire 19B is disposed between the pixel electrode 17B and a data signal line disposed adjacent to the data signal line 15X on a right side of the data signal line 15X. Moreover, a storage capacitor electrode 67A is disposed on the storage capacitor wire 18x via an gate insulating film, and the storage capacitor electrode 67A and the pixel electrode 17A are connected to each other via a contact hole 41A. As a result, storage capacitance ChA (see Fig. 1) is formed. Moreover, a storage capacitor electrode 67B is disposed on the storage capacitor wire 18x via a gate insulating film, and the storage capacitor electrode 67B and the pixel electrode 17B are connected to each other via a contact hole 41B. As a result, storage capacitance ChB (see Fig. 1) is formed.

As illustrated in Fig. 5, the pixel electrodes 17A and 17B, drain draw-out wires 19A, 19B, 27A, and 27B, contact electrodes 77A and 77B, contact holes 11A, 11B, 41A, and 41B, storage capacitor electrodes 67A and 67B, and coupling capacitor electrodes 37A and 37B, are disposed in the pixel 104 in such a manner that a planar shape and plane configuration of these members seen from a scanning signal line 16a side are identical to those seen from a scanning signal line 16b side. Moreover, an area of the scanning signal line 16a overlapped by the drain electrode 9A and drain draw-out wires 19A and 27A (parasitic capacitance Cgd between (i) the drain electrode 9A and drain draw-out wires 19A and 27A and (ii) the scanning signal line 16a) is substantially of a same size as an area of the scanning signal line 16b overlapped by the drain electrode 9B and drain draw-out wires 19B and 27B (parasitic capacitance Cgd between (i) the drain electrode 9B and drain draw-out wires 19B and 27B and (ii) the scanning signal line 16b). As a result, a feed-through voltage in a case where the sub-pixel including the pixel electrode 17a is a bright sub-pixel and a feed-through voltage in a case where the sub-pixel including the pixel electrode 17b is a bright sub-pixel become identical to each other. This reduces the possibility that image sticking occurs to the bright sub-pixel, caused by the difference between the two feed-through voltages. The pixel 103 has a configuration (shape and arrangement of members and their connection relationship) identical to that of the pixel 104. Moreover, in the liquid crystal panel 5a of Fig. 5, the drain draw-out wires 19a, 19b, 27A, and 27B do not overlap the pixel electrode. Hence, this configuration is suitable in a case where a coupling capacitance is held down to be not too large while using a relatively thin interlayer insulating film as illustrated in Fig. 3, for example.

Fig. 23 illustrates yet another specific example of the liquid crystal panel 5a. The pixel dispositions and arrangement of the data signal lines and scanning signal lines in the liquid crystal panel of Fig. 23 are identical to those of the liquid crystal panel of Fig. 5.

As illustrated in Fig. 23, in the pixel 101, a source electrode 8a of the transistor 12a and a drain electrode 9a of the transistor 12a are disposed on the scanning signal line 16a, and a source electrode 8b of the transistor 12b and a drain electrode 9b of the transistor 12b are disposed on the scanning signal line 16b. The source electrode 8a is connected to the data signal line 15x. The drain electrode 9a is connected to the contact electrode 77a via the drain draw-out wire 27a. The contact electrode 77a is connected to the pixel electrode 17a via the contact hole 11a. The pixel electrode 17a is connected to the storage capacitor electrode 67a via the contact hole 41a, and the storage capacitor electrode 67a is connected to the coupling capacitor electrode 37. Furthermore, the coupling capacitor electrode 37 overlaps the pixel electrode 17b via an interlayer insulating film. As a result, a coupling capacitor C101 (see Fig. 1) between the pixel electrodes 17a and 17b is formed. Moreover, the source electrode 8b is connected to the data signal line 15x. The drain electrode 9b is connected to the contact electrode 77b via the drain draw-out wire 27b, and the contact electrode 77b is connected to the pixel electrode 17b via the contact hole 11b. The pixel electrode 17b is connected to the storage capacitor electrode 67b via the contact hole 41 b. The storage capacitor electrodes 67a and 67b both overlap the storage capacitor wire 18x via a gate insulating film. As a result, storage capacitances Cha and Chb (see Fig. 1) are formed. The pixel 100 has a configuration (shape and arrangement of members and their connection relationship) identical to that of the pixel 101.

In the pixel 104, a source electrode 8A of the transistor 12A and two drain electrodes 9A and 10A of the transistor 12A are disposed on the scanning signal line 16a, and a source electrode 8B of the transistor 12B and two drain electrodes 9B and 10B of the transistor 12B are disposed on the scanning signal line 16b. The source electrode 8A is connected to the data signal line 15X. The drain electrode 10A is connected to the contact electrode 77A via the drain draw-out wire 27A. The contact electrode 77A is connected to the pixel electrode 17B via the contact hole 11A. The drain electrode 9A is connected to the coupling capacitor electrode 37A via the drain draw-out wire 19A. Furthermore, the coupling capacitor electrode 37A overlaps the pixel electrode 17A via an interlayer insulating film. As a result, a coupling capacitor C104 (see Fig. 1) between the pixel electrodes 17A and 17B is formed. From a plan view, the drain draw-out wire 27A is disposed between the pixel electrode 17A and the data signal line 15X. Moreover, the source electrode 8B is connected to the data signal line 15X. The drain electrode 10B is connected to the contact electrode 77B via the drain draw-out wire 27B, and the contact electrode 77B is connected to the pixel electrode 17A via the contact hole 11B. The drain electrode 9B is connected to the coupling capacitor electrode 37B via the drain draw-out wire 19B, and further the coupling capacitor electrode 37B overlaps the pixel electrode 17B via an interlayer insulating film. As a result, the coupling capacitor C104 (see Fig. 1) between the pixel electrodes 17A and 17B is formed. From a plan view, the drain draw-out wire 19B is disposed between the pixel electrode 17B and a data signal line disposed adjacent to the data signal line 15X on a right side of the data signal line 15X. Moreover, a storage capacitor electrode 67A is disposed on the storage capacitor wire 18x via a gate insulating film, and the storage capacitor electrode 67A is connected to the drain draw-out wire 27B. As a result, storage capacitance ChA (see Fig. 1) is formed. Moreover, a storage capacitor electrode 67B is disposed on the storage capacitor wire 18x via a gate insulating film, and the storage capacitor electrode 67B is connected to the drain draw-out wire 27A. As a result, storage capacitance ChB (see Fig. 1) is formed. The pixel 103 has a configuration (shape and arrangement of members and their connection relationship) identical to that of the pixel 104.

It is possible to eliminate the storage capacitor wires (18x to 18z) from the liquid crystal panel 5a. In this case, the configuration becomes one as illustrated in Fig. 40. Since this configuration includes no light-blocking storage capacitor wire, this configuration is advantageous in view of aperture ratio.

Fig. 6 is a timing chart showing a driving method of the present liquid crystal display device (liquid crystal display device of a normally black mode) that includes the liquid crystal panel illustrated in Fig. 1 or 40. SV and sv are signal electric potentials supplied to two adjacent data signal lines (for example, 15x and 15X), respectively; Ga to Gf are gate on-pulse signals to be supplied to the scanning signal lines 16a to 16f; Vc, Vd, Va, Vb, VC, and VD are electric potentials of respective pixel electrodes 17c, 17d, 17a, 17b, 17C, and 17D; and sh is a charge sharing signal. During a period in which the charge sharing signal is active ("H") (charge sharing period), charge sharing occurs caused by having all of the data signal lines be short-circuited to each other, or by having an identical electric potential be supplied to all of the data signal lines from outside.

With this driving method, as illustrated in Fig. 6, two scanning signal lines associated with a pixel is selected alternately per units of one frame, to (i) invert a polarity of a signal electric potential to be supplied to the data signal line, per one horizontal scanning period (1H), and (ii) invert a polarity of a signal electric potential that is supplied to each of horizontal scanning periods having an identical ordinal number in the respective frames per units of two frames. Further, signal electric potentials of opposite polarities are supplied to two adjacent data signal lines in the one identical horizontal scanning period, respectively, and charge sharing is carried out at the beginning of each of the horizontal scanning periods.

More specifically, in a case of consecutive frames F1 to F4, in F1, an upper scanning signal line (e.g., scanning signal line 16c, 16a, 16e) of two upper and lower scanning signal lines (see Fig. 1) that are associated with a pixel is selected. To one of two adjacent data signal lines (e.g., data signal line 15x), a signal electric potential of a positive polarity is supplied in a first horizontal scanning period (e.g., including a write-in period of the pixel electrode 17c), a signal electric potential of a negative polarity is supplied in a second horizontal scanning period (e.g., including a write-in period of the pixel electrode 17a), and a signal electric potential of a positive polarity is supplied in a third horizontal scanning period (e.g., including a write-in period of the pixel electrode 17e). To the other one of the two data signal lines (e.g., data signal line 15X), a signal electric potential of a negative polarity is supplied in the first horizontal scanning period (e.g., including a write-in period of a pixel electrode 17C), a signal electric potential of a positive polarity is supplied in the second horizontal scanning period (e.g., including a write-in period of the pixel electrode 17A), and a signal electric potential of a negative polarity is supplied in the third horizontal scanning period (e.g., including a write-in period of the pixel electrode 17E). As a result, as illustrated in Fig. 6, a sub-pixel including the pixel electrode 17c (positive polarity) becomes a bright sub-pixel (hereinafter, "bright"), a sub-pixel including the pixel electrode 17d (positive polarity) becomes a dark sub-pixel (hereinafter, "dark"), a sub-pixel including the pixel electrode 17C (negative polarity) becomes "dark", a sub-pixel including the pixel electrode 17D (negative polarity) becomes "bright", a sub-pixel including the pixel electrode 17a (negative polarity) becomes "bright", and a sub-pixel including the pixel electrode 17b (negative polarity) becomes "dark". As a whole, the sub-pixels become as illustrated in (a) of Fig. 7.

In F2, a lower scanning signal line (e.g., scanning signal lines 16d, 16b, 16f) of the two upper and lower scanning signal lines that are associated with a pixel is selected. To one of two adjacent data signal lines (e.g., data signal line 15x), a signal electric potential of a positive polarity is supplied in a first horizontal scanning period (e.g., including a write-in period of the pixel electrode 17d), a signal electric potential of a negative polarity is supplied in a second horizontal scanning period (e.g., including a write-in period of the pixel electrode 17b), and a signal electric potential of a positive polarity is supplied in a third horizontal scanning period (e.g., including a write-in period of the pixel electrode 17f). To the other one of the two data signal lines (e.g., data signal line 15X), a signal electric potential of a negative polarity is supplied in the first horizontal scanning period (e.g., including a write-in period of the pixel electrode 17D), a signal electric potential of a positive polarity is supplied in the second horizontal scanning period (e.g., including a write-in period of the pixel electrode 17B), and a signal electric potential of a negative polarity is supplied in the third horizontal scanning period (e.g., including a write-in period of a pixel electrode 17F). As a result, as illustrated in Fig. 6, the sub-pixel including the pixel electrode 17c (positive polarity) becomes "dark", the sub-pixel including the pixel electrode 17d (positive polarity) becomes "bright", the sub-pixel including the pixel electrode 17C (negative polarity) becomes "bright", the sub-pixel including the pixel electrode 17D (negative polarity) becomes "dark", the sub-pixel including the pixel electrode 17a (negative polarity) becomes "dark", and the sub-pixel including the pixel electrode 17b (negative polarity) becomes "bright". As a whole, the sub-pixels become as illustrated in (b) of Fig. 7.

In F3, the upper scanning signal line (e.g., scanning signal line 16c, 16a, 16e) of the two upper and lower scanning signal lines that are associated with a pixel is selected. To one of two adjacent data signal lines (e.g., data signal line 15x), a signal electric potential of a negative polarity is supplied in the first horizontal scanning period (e.g., including the write-in period of the pixel electrode 17c), a signal electric potential of a positive polarity is supplied in the second horizontal scanning period (e.g., including the write-in period of the pixel electrode 17a), and a signal electric potential of a negative polarity is supplied in the third horizontal scanning period (e.g., including the write-in period of the pixel electrode 17e). To the other one of the two data signal lines (e.g., data signal line 15X), a signal electric potential of a positive polarity is supplied in the first horizontal scanning period (e.g., including the write-in period of the pixel electrode 17C), a signal electric potential of a negative polarity is supplied in the second horizontal scanning period (e.g., including the write-in period of the pixel electrode 17A), and a signal electric potential of a positive polarity is supplied in the third horizontal scanning period (e.g., including the write-in period of the pixel electrode 17E). As a result, as illustrated in Fig. 6, the sub-pixel including the pixel electrode 17c (negative polarity) becomes "bright", the sub-pixel including the pixel electrode 17d (negative polarity) becomes "dark", the sub-pixel including the pixel electrode 17C (positive polarity) becomes "dark", the sub-pixel including the pixel electrode 17D (positive polarity) becomes "bright", the sub-pixel including the pixel electrode 17a (positive polarity) becomes "bright", and the sub-pixel including the pixel electrode 17b (positive polarity) becomes "dark". As a whole, the sub-pixels become as illustrated in (c) of Fig. 7.

In F4, the lower scanning signal line (e.g., scanning signal line 16d, 16b, 16f) of the two upper and lower scanning signal lines (see Fig. 1) that are associated with a pixel is selected. To one of the two adjacent data signal lines (e.g., data signal line 15x), a signal electric potential of a negative polarity is supplied in the first horizontal scanning period (e.g., including the write-in period of the pixel electrode 17d), a signal electric potential of a positive polarity is supplied in the second horizontal scanning period (e.g., including the write-in period of the pixel electrode 17b), and a signal electric potential of a negative polarity is supplied in the third horizontal scanning period (e.g., including the write-in period of the pixel electrode 17f). To the other one of the two data signal lines (e.g., data signal line 15X), a signal electric potential of a positive polarity is supplied in the first horizontal scanning period (e.g., including the write-in period of the pixel electrode 17D), a signal electric potential of a negative polarity is supplied in the second horizontal scanning period (e.g., including the write-in period of the pixel electrode 17B), and a signal electric potential of a positive polarity is supplied in the third horizontal scanning period (e.g., including the write-in period of the pixel electrode 17F). As a result, as illustrated in Fig. 6, the sub-pixel including the pixel electrode 17c (negative polarity) becomes "dark", the sub-pixel including the pixel electrode 17d (negative polarity) becomes "bright", the sub-pixel including the pixel electrode 17C (positive polarity) becomes "bright", the sub-pixel including the pixel electrode 17D (positive polarity) becomes "dark", the sub-pixel including the pixel electrode 17a (positive polarity) becomes "dark", and the sub-pixel including the pixel electrode 17b (positive polarity) becomes "bright". As a whole, the sub-pixels become as illustrated in (d) of Fig. 7. As such, according to the present driving method, bright sub-pixels and dark sub-pixels are disposed to form a checkered pattern, and the bright sub-pixels and dark sub-pixels are alternated per units of one frame. Hence, it is possible to improve display quality.

Fig. 50 is a timing chart showing another driving method of the present liquid crystal display device including the liquid crystal panel illustrated in Fig. 1 or 40. In this driving method, as illustrated in Fig. 50, in one horizontal scanning period, a common electrode electric potential is supplied to two pixel electrodes provided in one pixel, and in this state, a transistor that is connected to one of the two pixel electrodes is turned off. After the transistor is turned off, a signal electric potential is then written into the other one of the two pixel electrodes. For example, the scanning signal line 16b is switched on and off during a charge sharing period at the beginning of a horizontal scanning period of the scanning signal line 16a. This turns off the transistor 12b that is connected to the pixel electrode 17b during the charge sharing period, in the state in which the common electrode electric potential is supplied to the pixel electrodes 17a and 17b, and thus discharges the pixel electrode 17b at this point of time. That is to say, in one horizontal scanning period, first, the pixel electrode 17b is discharged, and thereafter a signal electric potential is written into the pixel electrode 17a. As a result, an electric potential of the pixel electrode 17b (i.e., brightness of a dark sub-pixel) that is set after the scanning signal line 16a is turned off can be set to a preferred value not effected by the signal electric potential that is written into the pixel electrode 17b in a frame previously to a current frame.

In the driving method of Fig. 50, discharging of one pixel electrode and writing in of a signal electric potential to the other pixel electrode is carried out in one horizontal scanning period. However, the present invention is not limited to this, and the discharging of one pixel electrode and the writing in of the signal electric potential to the other pixel electrode may be carried out in different horizontal scanning periods. For example, as illustrated in Fig. 51, it is possible to synchronize the scanning signal lines 16a and 16b so as to switch the signal lines ON and OFF (and thus discharge the pixel electrode 17b), during a charge sharing period of a horizontal scanning period that is one period previously (1H previously) to the horizontal scanning period of the scanning signal line 16a. This may also be carried out 2H previously or 3H previously thereto.

Furthermore, as illustrated in Fig. 52, it is possible to discharge the pixel electrode by so-called black insertion. For example, the scanning signal lines 16a and 16b are switched ON and OFF by synchronizing the scanning signal lines 16a and 16b in each of charge sharing periods of a plurality of horizontal scanning periods that is around 1/3 V (vertical scanning period) prior to the horizontal scanning period of the scanning signal line 16a. In such way, it is possible to simultaneously discharge the pixel electrode 17b and write black into the pixel electrodes 17a and 17b. In this case, the period of 2/3 V displays data and the period of 1/3 V carries out black display, which as a result prevents tailing or the like in displaying an animation. The discharge due to the black insertion is preferably carried out around 1/3 V before the writing-in of the signal electric potential, however the discharge may be carried out in any time before the writing-in in a range of before 1/5 V to before 1 / 2 V of the writing-in (1/2 V to 4/5 V after the writing-in).

Fig. 8 is a timing chart showing yet another driving method of the present liquid crystal display device including a liquid crystal panel illustrated in Fig. 1 or 40. In this driving method, as illustrated in Fig. 8, one of two scanning signal lines that are associated with a pixel is selected in each of two consecutive frames, and the other one of the two scanning signal lines is selected in each of a subsequent set of two consecutive frames. Further, a polarity of a signal electric potential that is supplied to the data signal line is inverted per one horizontal scanning period (1H), and a polarity of a signal electric potential that is supplied to each of horizontal scanning periods having an identical ordinal number in the respective frames is inverted per units of one frame. Moreover, during a same horizontal scanning period, signal electric potentials of opposite polarities may be supplied to adjacent two data signal lines, respectively, and charge sharing may be carried out at the beginning of each of the horizontal scanning periods.

More specifically in a case of consecutive frames F1 to F4, in F1, an upper scanning signal line (e.g., scanning signal line 16c, 16a, 16e) of two upper and lower scanning signal lines that are associated with a pixel (see Fig. 1) is selected. To one of two adjacent data signal lines (e.g., data signal line 15x), a signal electric potential of a positive polarity is supplied in the first horizontal scanning period (e.g., including the write-in period of the pixel electrode 17c), a signal electric potential of a negative polarity is supplied in the second horizontal scanning period (e.g., including the write-in period of the pixel electrode 17a), and a signal electric potential of a positive polarity is supplied in the third horizontal scanning period (e.g., including the write-in period of the pixel electrode 17e). To the other one of the two data signal lines (e.g., data signal line 15X), a signal electric potential of a negative polarity is supplied in the first horizontal scanning period (e.g., including the write-in period of the pixel electrode 17C), a signal electric potential of a positive polarity is supplied in the second horizontal scanning period (e.g., including the write-in period of the pixel electrode 17A), and a signal electric potential of a negative polarity is supplied in the third horizontal scanning period (e.g., including the write-in period of the pixel electrode 17E). As a result, as illustrated in Fig. 8, the sub-pixel including the pixel electrode 17c (positive polarity) becomes a bright sub-pixel (hereinafter, "bright"), the sub-pixel including the pixel electrode 17d (positive polarity) becomes a dark sub-pixel (hereinafter "dark"), the sub-pixel including the pixel electrode 17C (negative polarity) becomes "dark", the sub-pixel including the pixel electrode 17D (negative polarity) becomes "bright", the sub-pixel including the pixel electrode 17a (negative polarity) becomes "bright", and the sub-pixel including the pixel electrode 17b (negative polarity) becomes "dark". As a whole, the sub-pixels become as illustrated in (a) of Fig. 9.

In F2, the upper scanning signal line (e.g., scanning signal lines 16c, 16a, 16e) of the two upper and lower scanning signal lines that are associated with a pixel (see Fig. 1) is selected. To one of two adjacent data signal lines (e.g., data signal line 15x), a signal electric potential of a negative polarity is supplied in the first horizontal scanning period (e.g., including the write-in period of the pixel electrode 17c), a signal electric potential of a positive polarity is supplied in the second horizontal scanning period (e.g., including the write-in period of the pixel electrode 17a), and a signal electric potential of a negative polarity is supplied in the third horizontal scanning period (e.g., including the write period of the pixel electrode 17e). To the other one of the two data signal lines (e.g., data signal line 15X), a signal electric potential of a positive polarity is supplied in the first horizontal scanning period (e.g., including the write-in period of the pixel electrode 17C), a signal electric potential of a negative polarity is supplied in the second horizontal scanning period (e.g., including the write period of the pixel electrode 17A), and a signal electric potential of a positive polarity is supplied in the third horizontal scanning period (e.g., including the write-in period of the pixel electrode 17E). As a result, as illustrated in Fig. 8, the sub-pixel including the pixel electrode 17c (negative polarity) becomes "bright", the sub-pixel including the pixel electrode 17d (negative polarity) becomes "dark", the sub-pixel including the pixel electrode 17C (positive polarity) becomes "dark", the sub-pixel including the pixel electrode 17D (positive polarity) becomes "bright", the sub-pixel including the pixel electrode 17a (positive polarity) becomes "bright", and the sub-pixel including the pixel electrode 17b (positive polarity) becomes "dark". As a whole, the sub-pixels become as illustrated in (b) of Fig. 9.

In F3, a lower scanning signal line (e.g., scanning signal line 16d, 16b, 16f) of the two upper and lower scanning signal lines that are associated with a pixel (see Fig. 1) is selected. To one of two adjacent data signal lines (e.g., data signal line 15x), a signal electric potential of a positive polarity is supplied in the first horizontal scanning period (e.g., including the write-in period of the pixel electrode 17c), a signal electric potential of a negative polarity is supplied in the second horizontal scanning period (e.g., including the write-in period of the pixel electrode 17a), and a signal electric potential of a positive polarity is supplied in the third horizontal scanning period (e.g., including the write-in period of the pixel electrode 17e). To the other one of the two data signal lines (e.g., data signal line 15X), a signal electric potential of a negative polarity is supplied in the first horizontal scanning period (e.g., including the write-in period of the pixel electrode 17C), a signal electric potential of a positive polarity is supplied in the second horizontal scanning period (e.g., including the write-in period of the pixel electrode 17A), and a signal electric potential of a negative polarity is supplied in the third horizontal scanning period (e.g., including the write-in period of the pixel electrode 17E). As a result, as illustrated in Fig. 8, the sub-pixel including the pixel electrode 17c (positive polarity) becomes "dark", the sub-pixel including the pixel electrode 17d (positive polarity) becomes "bright", the sub-pixel including the pixel electrode 17C (negative polarity) becomes "bright", the sub-pixel including the pixel electrode 17D (negative polarity) becomes "dark", the sub-pixel including the pixel electrode 17a (negative polarity) becomes "dark", and the sub-pixel including the pixel electrode 17b (negative polarity) becomes "bright". As a whole, the sub-pixels become as illustrated in (c) of Fig. 9.

In F4, the lower scanning signal line (e.g., scanning signal line 16d, 16b, 16f) of the two upper and lower scanning signal lines that are associated with a pixel (see Fig. 1) is selected. To one of two adjacent data signal lines (e.g., data signal line 15x), a signal electric potential of a negative polarity is supplied in the first horizontal scanning period (e.g., including the write-in period of the pixel electrode 17c), a signal electric potential of a positive polarity is supplied in the second horizontal scanning period (e.g., including the write-in period of the pixel electrode 17a), and a signal electric potential of a negative polarity is supplied in the third horizontal scanning period (e.g., including the write-in period of the pixel electrode 17e). To the other one of the two data signal lines (e.g., data signal line 15X), a signal electric potential of a positive polarity is supplied in the first horizontal scanning period (e.g., including the write-in period of the pixel electrode 17C), a signal electric potential of a negative polarity is supplied in the second horizontal scanning period (e.g., including the write-in period of the pixel electrode 17A), and a signal electric potential of a positive polarity is supplied in the third horizontal scanning period (e.g., including the write-in period of pixel electrode 17E). As a result, as illustrated in Fig. 8, the sub-pixel including the pixel electrode 17c (negative polarity) becomes "dark", the sub-pixel including the pixel electrode 17d (negative polarity) becomes "bright", the sub-pixel including the pixel electrode 17C (positive polarity) becomes "bright", the sub-pixel including the pixel electrode 17D (positive polarity) becomes "dark", the sub-pixel including the pixel electrode 17a (positive polarity) becomes "dark", and the sub-pixel including the pixel electrode 17b (positive polarity) becomes "bright". As a whole, the sub-pixels become as illustrated in (d) of Fig. 9. As such, according to the present driving method, bright sub-pixels and dark sub-pixels are disposed to form a checkered pattern, and the bright sub-pixels and dark sub-pixels are alternated per units of two frames. Hence, it is possible to improve the display quality.

In the driving method of Fig. 6, it is also possible to carry out no charge sharing, as illustrated in Fig. 17. Moreover, with the driving method of Fig. 6, it is possible to eliminate gaps between the write-in period of one of two pixels adjacent in the column direction and those of the other one of the two pixels (successively make Gc, Ga, and Ge active without providing a gap therebetween, and successively make Gd, Gb, and Gf active without providing a gap therebetween), as illustrated in Fig. 18.

Fig. 19 is a circuit diagram illustrating a configuration of a gate driver of the present liquid crystal display device. As illustrated in Fig. 19, a gate driver GD includes a shift register 45, a plurality of AND circuits (66a to 66f) aligned in a column direction, and an output circuit 46. The shift register 45 receives a gate start pulse signal GSP and a gate clock signal GCK. Output in each stage of the shift register 45 is branched out into two systems; one of them is inputted into a respective odd-numbered AND circuit, and the other one of them is inputted to a respective even-numbered AND circuit that is disposed adjacent to the odd-numbered AND circuit. Moreover, a gate driver output control signal GOE is made up of signals of two systems (OEx and OEy); an inverted signal of the signal OEy is inputted into the odd-numbered AND circuits, and an inverted signal of the signal OEx is inputted into the even-numbered AND circuits. Further, an output of one AND circuit becomes a gate on-pulse signal via the output circuit 46, and this gate on-pulse signal is supplied to one scanning signal line.

For example, an output from a stage of the shift register 45 is branched out into two systems; one output Qc is inputted into the AND circuit 66c, and the other output Qd is inputted into the AND circuit 66d. Moreover, the signal OEy is inputted into the AND circuit 66c, and the signal OEx is inputted into the AND circuit 66d. Further, an output of the AND circuit 66c becomes a gate on-pulse signal Gc via the output circuit 46, and this gate on-pulse signal Gc is supplied to the scanning signal line 16c. Meanwhile, an output from the AND circuit 66d becomes a gate on-pulse signal Gd via the output circuit 46, and this gate on-pulse signal Gd is supplied to the scanning signal line 16d. Similarly, output from another stage of the shift register 45 is branched out into two systems; one output Qa is inputted into a AND circuit 66a, and the other output Qb is inputted to a AND circuit 66b. Moreover, the signal OEy is inputted into the AND circuit 66a, and the signal OEx is inputted into the AND circuit 66b. Thereafter, an output from the AND circuit 66a becomes a gate on-pulse signal Ga via the output circuit 46, and this gate on-pulse signal Ga is supplied to the scanning signal line 16a. Meanwhile, the output from the AND circuit 66b becomes a gate on-pulse signal Gb via the output circuit 46, and this gate on-pulse signal Gb is supplied to the scanning signal line 16b.

Fig. 20 is a timing chart illustrating an operation of the gate driver illustrated in Fig. 19. As illustrated in Fig. 20, for example, the signal OEx is always "H" in the odd-numbered frames and is "H" in latter parts of each of the horizontal scanning periods in the even-numbered frames, whereas the signal OEy is always "L" in the even-numbered frames, and is "H" in latter parts of each of the horizontal scanning periods in the odd-numbered frames. Hence, it is possible to make the gate on-pulse signals Gc, Ga, and Ge successively "H" (active) with intervals provided therebetween in the odd-numbered frames, and is possible to make the gate on-pulse signals Gd, Gb, and Gf successively "H" (active) with intervals provided therebetween in the even number frames. As a result, a drive as illustrated in Fig. 6 is achieved. The gate driver may be configured so that a gate driver output control signal GOE is inputted into the odd-numbered AND circuits and an inverted signal of GOE is inputted into the adjacent even-numbered AND circuits, as illustrated in Fig. 21. Fig. 22 is a timing chart showing an operation of the gate driver illustrated in Fig. 21. For example, the GOE is always "L" in the odd-numbered frames and is always "H" in the even-numbered frames. Hence, in the odd-numbered frames, the gate on-pulse signals Gc, Ga, and Ge are successively "H" (active) with no interval provided therebetween, and in the even-numbered frames, the gate on-pulse signals Gd, Gb, and Gf are successively "H" (active) with no interval provided therebetween. As a result, a drive as illustrated in Fig. 18 is achieved. The configuration of Fig. 19 is advantageous in that a width of a gate on-pulse (write-in pulse) can be set as appropriate, and the configuration of Fig. 21 is advantageous in that the GOE signal can be made into one system. Furthermore, the configurations of Fig. 19 and Fig. 21 allow generation of gate on-pulse signals to be respectively provided to the two scanning signal lines that are associated with a pixel by use of an output outputted from a same stage of a shift register. This is advantageous in that a driver configuration is simplified.

### Embodiment 2

The present liquid crystal panel may be configured as illustrated in Fig. 10. A liquid crystal panel 5b illustrated in Fig. 10 differs from the liquid crystal panel 5a of Fig. 1 in that all pixels have an identical configuration. Namely, in the liquid crystal panel 5a, the four pixel electrodes that are included in two pixels disposed adjacent to each other in the row direction (sharing two scanning signal lines) have the two pixel electrodes disposed diagonally across from each other be connected to the same scanning signal line; whereas, in the liquid crystal panel 5b, of the four pixel electrodes, two pixel electrodes disposed adjacent to each other in the row direction are connected to the same scanning signal line.

In the liquid crystal panel 5b, one pixel is associated with one data signal line and two scanning signal lines. Two pixel electrodes 17c and 17d provided in a pixel 100, two pixel electrodes 17a and 17b provided in a pixel 101, and two pixel electrodes 17e and 17f provided in a pixel 102 are aligned in one line, and two pixel electrodes 17C and 17D provided in a pixel 103, two pixel electrodes 17A and 17B provided in a pixel 104, and two pixel electrodes 17E and 17F provided in a pixel 105 are aligned in one line; the pixel electrodes 17c and 17C are disposed adjacent to each other in the row direction, the pixel electrodes 17d and 17D are disposed adjacent to each other in the row direction, the pixel electrodes 17a and 17A are disposed adjacent to each other in the row direction, the pixel electrode 17b and 17B are disposed adjacent to each other in the row direction, the pixel electrodes 17e and 17E are disposed adjacent to each other in the row direction, and the pixel electrodes 17f and 17F are disposed adjacent to each other in the row direction.

For example, in the pixel 101, the pixel electrodes 17a and 17b are connected to each other via a coupling capacitor C101; the pixel electrode 17a is connected to a data signal line 15x via a transistor 12a that is connected to a scanning signal line 16a, and the pixel electrode 17b is connected to the data signal line 15x via a transistor 12b that is connected to a scanning signal line 16b. Storage capacitance Cha is formed between the pixel electrode 17a and a storage capacitor wire 18x, and storage capacitance Chb is formed between the pixel electrode 17b and the storage capacitor wire 18x. Liquid crystal capacitance Cla is formed between the pixel electrode 17a and the common electrode com, and liquid crystal capacitance Clb is formed between the pixel electrode 17b and the common electrode com.

In the pixel 104 disposed adjacent to the pixel 101 in the row direction, the pixel electrodes 17A and 17B are connected to each other via a coupling capacitor C104; the pixel electrode 17A is connected to a data signal line 15X via a transistor 12A that is connected to the scanning signal line 16a, and the pixel electrode 17B is connected to the data signal line 15X via a transistor 12B that is connected to the scanning signal line 16b. Storage capacitance ChA is formed between the pixel electrode 17A and the storage capacitor wire 18x, and a storage capacitance ChB is formed between the pixel electrode 17B and the storage capacitor wire 18x. Liquid crystal capacitance C1A is formed between the pixel electrode 17A and the common electrode com, and liquid crystal capacitance C1B is provided between the pixel electrode 17B and the common electrode com.

A driving method of scanning signal lines (16a to 16f) and data signal lines (15x and 15X) in a liquid crystal display device (liquid crystal display device of a normally black mode) including the liquid crystal panel 5b is similar to that of the liquid crystal display device including the liquid crystal panel 5a. This allows one sub-pixel to be a bright sub-pixel in one frame and be a dark sub-pixel in another frame. Hence, time integration values of brightness are made uniform between the sub-pixels as compared to a configuration in which one sub-pixel is always a bright sub-pixel or is always a dark sub-pixel. As a result, display quality improves. Moreover, in a frame in which one of two sub-pixels adjacent to each other in the column direction is a bright sub-pixel, the other one of the two sub-pixels is a dark pixel. Hence, it is possible to hold down roughness (jaggies) as compared to a configuration in which bright pixels are adjacent to each other in the column direction or dark pixels are adjacent to each other in the column direction. Moreover, it is possible to hold down display unevenness (e.g., horizontal-striped unevenness) and roughness (jaggies) as compared to a configuration having bright pixels disposed adjacent to each other in the row direction or dark pixels disposed adjacent to each other in the row direction, in which sub-pixels constructing the pixels is always a bright sub-pixel or always a dark sub-pixel.

Fig. 11 illustrates one specific example of the liquid crystal panel 5b. The pixel dispositions and arrangement of the data signal lines and scanning signal lines in the liquid crystal panel of Fig. 11 are identical to those of the liquid crystal panel illustrated in Fig. 2. As illustrated in Fig. 11, in the pixel 101, a source electrode 8a of the transistor 12a and a drain electrode 9a of the transistor 12a are disposed on the scanning signal line 16a, and a source electrode 8b of the transistor 12b and a drain electrode 9b of the transistor 12b are disposed on the scanning signal line 16b. The source electrode 8a is connected to the data signal line 15x. The drain electrode 9a is connected to a drain draw-out wire 27a. The drain draw-out wire 27a is connected to a contact electrode 77a and a coupling capacitor electrode 37a. The contact electrode 77a is connected to the pixel electrode 17a via a contact hole 11a. The coupling capacitor electrode 37a overlaps the pixel electrode 17b via an interlayer insulating film. As a result, a coupling capacitor C101 (see Fig. 10) between the pixel electrodes 17a and 17b is formed at a part at which the coupling capacitor electrode 37a overlaps the pixel electrode 17b. Moreover, the source electrode 8b is connected to the data signal line 15x. The drain electrode 9b is connected to a drain draw-out wire 27b. The drain draw-out wire 27b is connected to a contact electrode 77b and a coupling capacitor electrode 37b. The contact electrode 77b is connected to the pixel electrode 17b via a contact hole 11b. The coupling capacitor electrode 37b overlaps the pixel electrode 17a via an interlayer insulating film. As a result, a coupling capacitor C101 (see Fig. 10) between the pixel electrodes 17a and 17b is formed at a part at which the coupling capacitor electrode 37b overlaps the pixel electrode 17a. Furthermore, the coupling capacitor electrodes 37a and 37b overlap the storage capacitor wire 18x, via a gate insulating film. As a result, storage capacitance Cha (see Fig. 10) is formed at a part at which the coupling capacitor electrode 37a overlaps the storage capacitor wire 18x, and storage capacitance Chb (see Fig. 10) is formed at a part at which the coupling capacitor electrode 37b overlaps the storage capacitor wire 18x.

As illustrated in Fig. 11, the pixel electrodes 17a and 17b, drain draw-out wires 27a and 27b, contact electrodes 77a and 77b, contact holes 11a and 11b, and coupling capacitor electrodes 37a and 37b, are disposed in the pixel 101 in such a manner that a planar shape and plane configuration of these members seen from a scanning signal line 16a side are identical to those seen from a scanning signal line 16b side. Moreover, an area of the scanning signal line 16a overlapped by the drain electrode 9a and drain draw-out wire 27a (parasitic capacitance Cgd between (i) the drain electrode 9a and drain draw-out wire 27a and (ii) the scanning signal line 16a) is substantially of a same size as an area of the scanning signal line 16b overlapped by the drain electrode 9b and drain draw-out wire 27b (parasitic capacitance Cgd between (i) the drain electrode 9b and drain draw-out wire 27b and (ii) the scanning signal line 16b). As a result, a feed-through voltage in a case where a sub-pixel including the pixel electrode 17a is a bright sub-pixel and a feed-though voltage in a case where a sub-pixel including the pixel electrode 17b is a bright sub-pixel become identical to each other. This reduces a possibility that image sticking occurs to the bright sub-pixel, caused by a difference between the two feed-through voltages. The pixel 100 has a configuration (shape and arrangement of members and their connection relationship) identical to that of the pixel 101.

Moreover, in the pixel 104, a source electrode 8A of the transistor 12A and a drain electrode 9A of the transistor 12A are disposed on the scanning signal line 16a, and a source electrode 8B of the transistor 12B and a drain electrode 9B of the transistor 12B are disposed on the scanning signal line 16b. The source electrode 8A is connected to the data signal line 15X. The drain electrode 9A is connected to a drain draw-out wire 27A. The drain draw-out wire 27A is connected to a contact electrode 77A and a coupling capacitor electrode 37A. The contact electrode 77A is connected to the pixel electrode 17A via a contact hole 11A. The coupling capacitor electrode 37A overlaps the pixel electrode 17B via an interlayer insulating film. As a result, a coupling capacitor C101 (see Fig. 10) between the pixel electrodes 17A and 17B is formed. Moreover, the source electrode 8B is connected to the data signal line 15X. The drain electrode 9B is connected to a drain draw-out wire 27B. The drain draw-out wire 27B is connected to a contact electrode 77B and a coupling capacitor electrode 37B. The contact electrode 77B is connected to the pixel electrode 17B via a contact hole 11B. The coupling capacitor electrode 37B overlaps the pixel electrode 17A via an interlayer insulating film. As a result, the coupling capacitor C101 (see Fig. 10) between the pixel electrodes 17A and 17B is formed. Furthermore, the coupling capacitor electrodes 37A and 37B overlap the storage capacitor wire 18x via a gate insulating film. This forms storage capacitances ChA and ChB (see Fig. 1).

As illustrated in Fig. 11, the pixel electrodes 17A and 17B, drain draw-out wires 27A and 27B, contact electrodes 77A and 77B, contact holes 11A and 11B, and coupling capacitor electrodes 37A and 37B, are provided in the pixel 104 in such a manner that a planar shape and plane configuration of these members seen from the scanning signal line 16a side are identical to those seen from the scanning signal line 16b side. Moreover, an area of the scanning signal line 16A overlapped by the drain electrode 9A and drain draw-out wire 27A (parasitic capacitance Cgd between (i) the scanning signal line 16a and (ii) the drain electrode 9A and drain draw-out wire 27A) is substantially of a same size as an area of the scanning signal line 16B overlapped by the drain electrode 9B and drain draw-out wire 27B (parasitic capacitance Cgd between (i) the scanning signal line 16b and (ii) the drain electrode 9B and drain draw-out wire 27B). As a result, a feed-through voltage in a case where a sub-pixel including the pixel electrode 17a is a bright sub-pixel and a feed-through voltage in a case where a sub-pixel including the pixel electrode 17b is a bright sub-pixel become identical to each other. This reduces the possibility that image sticking occurs to the bright sub-pixel, caused by a difference between the two feed-through voltages. The pixel 103 has a configuration (shape and arrangement of members and their connection relationship) identical to that of the pixel 104.

Yet another specific example of the liquid crystal panel 5b is illustrated in Fig. 12. The pixel dispositions and arrangement of the data signal lines and scanning signal lines in the liquid crystal panel of Fig. 12 are identical to those of the liquid crystal panel of Fig. 2. As illustrated in Fig. 12, in the pixel 101, a source electrode 8a of the transistor 12a and a drain electrode 9a of the transistor 12a are disposed on the scanning signal line 16a, and a source electrode 8b of the transistor 12b and a drain electrode 9b of the transistor 12b are disposed on the scanning signal line 16b. The source electrode 8a is connected to the data signal line 15x. The drain electrode 9a is connected to the pixel electrode 17a via a drain draw-out wire and a contact hole 11a. The pixel electrode 17a is connected to a storage capacitor electrode 67a via a contact hole 41a, and the storage capacitor electrode 67a is connected to a coupling capacitor electrode 37a. Further, the coupling capacitor electrode 37a overlaps the pixel electrode 17b via an interlayer insulating film. As a result, a coupling capacitor C101 (see Fig. 10) between the pixel electrodes 17a and 17b is formed. Moreover, the source electrode 8b is connected to the data signal line 15x. The drain electrode 9b is connected to the pixel electrode 17b via a drain draw-out wire and a contact hole 11b. The pixel electrode 17b is connected to a storage capacitor electrode 67b via a contact hole 41b, and the storage capacitor electrode 67b is connected to a coupling capacitor electrode 37b. Further, the coupling capacitor electrode 37b overlaps the pixel electrode 17a via an interlayer insulating film. As a result, a coupling capacitor C101 (see Fig. 10) between the pixel electrodes 17a and 17b is formed.

In the liquid crystal panel 5b of Fig. 12, the coupling capacitor electrode 37b is disposed on a scanning signal line 16a side of the storage capacitor electrode 67b so that the coupling capacitor electrode 37b overlaps the pixel electrode 17a, whereas the coupling capacitor electrode 37a is disposed on a scanning signal line 16b side of the storage capacitor electrode 67a so that the coupling capacitor electrode 37b overlaps the pixel electrode 17b. This is advantageous in that values of coupling capacitance are compensated by each other, even if alignment of the coupling capacitor electrodes 37a and 37b shifts in the column direction.
The storage capacitor electrodes 67a and 67b overlap the storage capacitor wire 18x via a gate insulating film. As a result, storage capacitances Cha and Chb (see Fig. 10) are formed. The pixels 100, 103, and 104 have configurations (shapes and arrangements of members, and their connection relationship) identical to that of the pixel 101.

The storage capacitor wires (18x to 18z) may be eliminated from the liquid crystal panel 5b. In this case, the liquid crystal panel 5b is configured as illustrated in Fig. 41. This configuration is advantageous in its aperture ratio, since the configuration includes no storage capacitor wires having a light-blocking property.

Fig. 13 is a timing chart showing a driving method of the present liquid crystal display device (liquid crystal display device of a normally black mode) including a liquid crystal panel illustrated in Fig. 10 or 41. SV and sv are signal electric potentials that are respectively supplied to two adjacent data signal lines (e.g., 15x and 15X); Ga to Gf are gate on-pulse signals that are supplied to the scanning signal lines 16a to 16f; Vc, Vd, Va, Vb, VC, and VD are electric potentials of respective pixel electrodes 17c, 17d, 17a, 17b, 17C, and 17D; and sh is a charge sharing signal. During a period in which the charge sharing signal is active ("H"), charge sharing occurs by having all of the data signal lines be short-circuited to each other, or by having the same electric potential be supplied to all the data signal lines from outside. As illustrated in Fig. 13, how the data signal lines (15x and 15X) and scanning signal lines (16a to 16f) in each of the frames (F1 to F4) are driven is identical to that of Fig. 6. By this driving method, display is carried out in F1 as illustrated in (a) of Fig. 14, display is carried out in F2 as illustrated in (b) of Fig. 14, display is carried out in F3 as illustrated in (c) of Fig. 14, and display is carried out in F4 as illustrated in (d) of Fig. 14.

Fig. 15 is a timing chart showing another driving method of the present liquid crystal display device including a liquid crystal panel illustrated in Fig. 10 or 41. As illustrated in Fig. 15, the driving method of data signal lines (15x and 15X) and scanning signal lines (16a to 16f) in each of the frames (F1 to F4) is identical to that of Fig. 8. By this driving method, display is carried out in F1 as illustrated in (a) of Fig. 16, display is carried out in F2 as illustrated in (b) of Fig. 16, display is carried out in F3 as illustrated in (c) of Fig. 16, and display is carried out in F4 as illustrated in (d) of Fig. 16.

Yet another configuration of the present embodiment is illustrated in Fig. 55. In the liquid crystal panel illustrated in Fig. 55, two scanning signal lines 16a and 16b that are associated with a pixel 101 are disposed on either side of the pixel 101, and a storage capacitor wire 18x is provided traversing the pixel 101. Moreover, the pixel 101 includes: a pixel electrode 17b Z-shaped when seen along a column direction (extending direction of data signal line 15x); two pixel electrodes 17a and 17u disposed on either side of the pixel electrode 17b so as to fit with the pixel electrode 17b; and a coupling capacitor electrode 37a that overlaps the pixel electrode 17b via an interlayer insulating film. A transistor 12a is formed on the scanning signal line 16a, and a transistor 12b is formed on the scanning signal line 16b. A drain electrode of the transistor 12a is connected to the pixel electrode 17a via a drain draw-out wire 27a and a contact hole 11a. A drain electrode of the transistor 12b is connected to the pixel electrode 17b via a contact hole 11b. Further, source electrodes of the transistors Tr12a and 12b are connected to the data signal line 15x.

The coupling capacitor electrode 37a (overlapping the pixel electrode 17b via the interlayer insulating film) is shaped as a parallelogram, to which connecting wires 119a and 119u are connected on either of its sides. The connecting wire 119a is connected to the pixel electrode 17a via a contact hole 11ai, and the connecting wire 119u is connected to the pixel electrode 17u via a contact hole 11ui. As a result, a coupling capacitor between (i) the pixel electrodes 17a and 17u and (ii) the pixel electrode 17b is formed at a part at which the coupling capacitor electrode 37a overlaps the pixel electrode 17b.

Moreover, in the pixel 101, storage capacitor electrodes 67b and 67u are aligned in a row direction (extending direction of the scanning signal lines), overlapping the storage capacitor wire 18x via a gate insulating film. The pixel electrode 17b is connected to the storage capacitor electrode 67b via a contact hole 11bj, and the pixel electrode 17u is connected to the storage capacitor electrode 67u via a contact hole 11uj. As a result, storage capacitance between the pixel electrode 17b and the storage capacitor wire 18x is formed at a part at which the storage capacitor electrode 67b overlaps the storage capacitor wire 18x, and storage capacitance between (i) the pixel electrodes 17a and 17u and (ii) the storage capacitor wire 18x is formed at a part at which the storage capacitor electrode 67u overlaps the storage capacitor wire 18x.

In the liquid crystal panel illustrated in Fig. 55, a gap between the pixel electrode 17b and the pixel electrode 17a and a gap between the pixel electrode 17b and the pixel electrode 17u may serve as an alignment control structure. Thus, with a liquid crystal display device including the present liquid crystal panel, the scanning signal line 16a is scanned in predetermined frames whereas the scanning signal line 16b is scanned in the other frames; in the frames in which the scanning signal line 16a is scanned, a sub-pixel including the pixel electrode 17a and a sub-pixel including the pixel electrode 17u are bright sub-pixels and a sub-pixel including the pixel electrode 17b is a dark sub-pixel, whereas in the frames in which the scanning signal line 16b is scanned, the sub-pixel including the pixel electrode 17a and the sub-pixel including the pixel electrode 17u are dark sub-pixels, and the sub-pixel including the pixel electrode 17b is a bright sub-pixel.

Yet another configuration of the present embodiment is illustrated in Fig. 58. In the liquid crystal panel illustrated in Fig. 58, two scanning signal lines 16a and 16b that are associated with the pixel 101 are disposed on either side of the pixel 101, and a storage capacitor wire 18x is provided traversing the pixel 101. The pixel 101 includes: a pixel electrode 17b Z-shaped when seen along a column direction (extending direction of the data signal line 15x); two pixel electrodes 17a and 17u disposed on either side of the pixel electrode 17b so as to fit with the pixel electrode 17b; a coupling capacitor electrode 37i that overlaps the pixel electrodes 17a, 17b, and 17u via an interlayer insulating film; and a coupling capacitor electrode 37j that overlaps the pixel electrodes 17a, 17b, and 17u via an interlayer insulating film. The transistor 12a is formed on the scanning signal line 16a, and the transistor 12b is formed on the scanning signal line 16b. A drain electrode of the transistor 12a is connected to the pixel electrode 17a via a drain draw-out wire 27a and a contact hole 11a. A drain electrode of the transistor 12b is connected to the pixel electrode 17b via a contact hole 11b. Further, source electrodes of the transistors Tr12a and 12b are connected to the data signal line 15x.

The coupling capacitor electrodes 37i and 37j are both rectangular shaped, being longitudinal in the row direction, and are arranged in the column direction on the storage capacitor wire 18x. Therefore, a whole of the coupling capacitor electrode 37i and a whole of the coupling capacitor electrode 37j overlap the storage capacitor wire 18x, via a gate insulating film. Furthermore, the coupling capacitor electrode 37i is connected to (i) the pixel electrode 17a via a contact hole 11ai, and (ii) the pixel electrode 17u via a contact hole 11ui. The coupling capacitor electrode 37j is connected to the pixel electrode 17b via a contact hole 11bj.

Therefore, a first coupling capacitor is formed at a part at which the coupling capacitor electrode 37i overlaps the pixel electrode 17b, and a second coupling capacitor is formed at a part at which the coupling capacitor electrode 37j overlaps the pixel electrode 17a and at a part at which the coupling capacitor electrode 37j overlaps the pixel electrode 17u. As a result, the first and second coupling capacitors are connected in parallel. In addition, storage capacitance between the pixel electrodes 17a and 17u and the storage capacitor wire 18x is formed at a part at which the coupling capacitor electrode 37i overlaps the storage capacitor wire 18x, and storage capacitance between the pixel electrode 17b and the storage capacitor wire 18x is formed at a part at which the coupling capacitor electrode 37j overlaps the storage capacitor wire 18x.

In the liquid crystal panel illustrated in Fig. 58, a gap between the pixel electrode 17b and the pixel electrode 17a and a gap between the pixel electrode 17b and the pixel electrode 17u may serve as an alignment control structure. Thus, with the liquid crystal display device including the present liquid crystal panel, the scanning signal line 16a is scanned in predetermined frames whereas the scanning signal line 16b is scanned in the other frames; in the frames in which the scanning signal line 16a is scanned, a sub-pixel including the pixel electrode 17a and a sub-pixel including the pixel electrode 17u are bright sub-pixels and a sub-pixel including the pixel electrode 17b is a dark sub-pixel, whereas in the frames in which the scanning signal line 16b is scanned, the sub-pixel including the pixel electrode 17a and the sub-pixel including the pixel electrode 17u are dark sub-pixels and the sub-pixel including the pixel electrode 17b is a bright sub-pixel.

### Embodiment 3

Fig. 24 is an equivalent circuit diagram illustrating one part of the present liquid crystal panel. As illustrated in Fig. 24, a liquid crystal panel 5c includes: data signal lines (15x and 15X) that extend in a column direction (vertical direction in Fig. 24); scanning signal lines (16a to 16f) that extend in a row direction (horizontal direction in Fig. 24); pixels (100 to 105) that are aligned in the row and column directions; and a common electrode (counter electrode) com. Configurations of pixels that are included in odd-numbered pixel columns are identical to each other and configurations of pixels that are included in even-numbered pixel columns are identical to each other; however, the configurations of the pixels differ from each other between those included in the odd-numbered pixel columns and those included in the even-numbered pixel columns. The liquid crystal panel 5c is of a Cs on-gate configuration, and thus is advantageous in that no storage capacitor wire (18x to 18z) that is provided in the liquid crystal panel 5a of Fig. 1 is required. Note that a pixel column including the pixels 100 to 102 is adjacent to a pixel column including the pixels 103 to 105.

In the liquid crystal panel 5c, one pixel is associated with one data signal line and two scanning signal lines. Two pixel electrodes 17c and 17d disposed in the pixel 100, two pixel electrodes 17a and 17b disposed in the pixel 101, and two pixel electrodes 17e and 17f disposed in the pixel 102 are arranged in one line, and two pixel electrodes 17C and 17D disposed in the pixel 103, two pixel electrodes 17A and 17B disposed in the pixel 104, and two pixel electrodes 17E and 17F disposed in the pixel 105 are arranged in one line. The pixel electrodes 17c and 17C are disposed adjacent to each other in the row direction, the pixel electrodes 17d and 17D are disposed adjacent to each other in the row direction, the pixel electrodes 17a and 17A are disposed adjacent to each other in the row direction, the pixel electrodes 17b and 17B are disposed adjacent to each other in the row direction, the pixel electrodes 17e and 17E are disposed adjacent to each other in the row direction, and the pixel electrodes 17f and 17F are disposed adjacent to each other in the row direction.

Furthermore, for example in the pixel 101, the pixel electrodes 17a and 17b are connected to each other via a coupling capacitor C101; the pixel electrode 17a is connected to the data signal line 15x via a transistor 12a that is connected to the scanning signal line 16a, and the pixel electrode 17b is connected to the data signal line 15x via a transistor 12b that is connected to the scanning signal line 16b. Storage capacitance Cha is formed between the pixel electrode 17a and the scanning signal line 16d, and storage capacitance Chb is formed between the pixel electrode 17b and the scanning signal line 16e. Liquid crystal capacitance C1a is formed between the pixel electrode 17a and the common electrode com, and liquid crystal capacitance C1b is formed between the pixel electrode 17b and the common electrode com.

Meanwhile, in the pixel 104 disposed adjacent to the pixel 101 in the row direction, the pixel electrodes 17A and 17B are connected to each other via a coupling capacitor C104; the pixel electrode 17A is connected to the data signal line 15X via a transistor 12B that is connected to the scanning signal line 16b, and the pixel electrode 17B is connected to the data signal line 15X via a transistor 12A that is connected to the scanning signal line 16a. Storage capacitance ChA is formed between the pixel electrode 17A and the scanning signal line 16d, and storage capacitance ChB is formed between the pixel electrode 17B and the scanning signal line 16e. Further, liquid crystal capacitance C1A is formed between the pixel electrode 17A and the common electrode com, and liquid crystal capacitance C1B is formed between the pixel electrode 17B and the common electrode com.

In a liquid crystal display device including the liquid crystal panel 5c, with two scanning signal lines that are associated with a pixel, one of the two scanning signal lines is selected in each of frames of n (n is a plural number) consecutive frames, and the other one of the two scanning signal lines is selected in each of frames of a subsequent set of n consecutive frames, and also a scanning direction is inverted between the first n frames and the latter n frames. More specifically, in each of frames in the n (e.g., n = 60) consecutive frames, scanning signal lines 16d, 16b, and 16f are selected in this order, and in each of frames in the subsequent set of n consecutive frames, the scanning signal lines 16e, 16a, and 16c are selected in this order. For example, in a case where the scanning signal line 16b is selected after the scanning signal line 16d is selected, the pixel electrode 17b becomes connected to the data signal line 15x (via the transistor 12b), and storage capacitance Chb is formed between the pixel electrode 17b and the scanning signal line 16e, which scanning signal line 16e is not selected in the frame in which the scanning signal lines 16d and 16b are selected. This makes the sub-pixel including the pixel electrode 17b be a "bright" sub-pixel. On the other hand, the pixel electrode 17a becomes capacitively coupled to the data signal line 15x (via the transistor 12b and the pixel electrode 17b) and thus storage capacitance Cha is formed between the pixel electrode 17a and the scanning signal line 16d, which scanning signal line 16d is subject to scanning immediately before. This makes a sub-pixel including the pixel electrode 17a be a "dark" sub-pixel. Moreover, in a case where the scanning signal line 16a is selected after the scanning signal line 16e is selected, the pixel electrode 17a becomes connected to the data signal line 15x (via the transistor 12a), and thus storage capacitance Cha is formed between the pixel electrode 17a and the scanning signal line 16d, which scanning signal line 16d is not selected in the frame in which the scanning signal lines 16e and 16a are selected. This makes a sub-pixel including the pixel electrode 17a be a "bright" sub-pixel. On the other hand, the pixel electrode 17b is capacitively coupled to the data signal line 15x (via the transistor 12a and the pixel electrode 17a) and thus storage capacitance Chb is formed between the pixel electrode 17b and the scanning signal line 16e, which scanning signal line 16e is subjected to scanning immediately before. This makes a sub-pixel including the pixel electrode 17b be a "dark" sub-pixel.

As such, in the present liquid crystal display device, a pixel electrode inside a sub-pixel is connected to a data signal line in one frame (via a transistor), and is capacitively coupled to a data signal line (via a transistor and another pixel electrode) in another frame. This allows, in the frame in which the pixel electrode is connected to the data signal line, to have a signal electric potential supplied to the pixel electrode in view of a feed-through voltage. As a result, it is possible to make it difficult for a liquid crystal layer of the sub-pixel be applied a DC voltage (making image sticking of the sub-pixel difficult to occur).

In the present configuration, n is made to be an even number, and a polarity of a signal electric potential to be supplied to pixel electrodes that are respectively connected to the two scanning signal lines is inverted per units of one frame. For example, in a case where the scanning signal line 16a is selected in each of the frames of n (n is an even number) consecutive frames, and the scanning signal line 16b is selected in each of the frames in the subsequent set of n consecutive frames, a polarity of a signal electric potential that is supplied to the pixel electrodes 17a and 17b is inverted per units of one frame. This allows, with the sub-pixels and their pixel electrodes, to have the number of frames (a total period of the frames) in which an electric potential of a pixel electrode is of a positive polarity and in which the sub-pixel is a bright sub-pixel, be equal to the number of frames (a total period of the frames) in which an electric potential of a pixel electrode is of a negative polarity and in which the sub-pixel is a bright sub-pixel, and also allows to have the number of frames (a total period of the frames) in which an electric potential of a pixel electrode is of a positive polarity and in which the sub-pixel is a dark sub-pixel, be equal to the number of frames (a total period of the frames) in which an electric potential of a pixel electrode is of a negative polarity and in which the sub-pixel is a dark sub-pixel. This makes it difficult for a liquid crystal layer of the sub-pixel be applied a DC voltage (making image sticking of the sub-pixel difficult to occur).

Moreover, of the four pixel electrodes that are included in two pixels disposed adjacent to each other in the row direction (sharing two scanning signal lines), the two pixel electrodes disposed diagonally across each other are connected to the same scanning signal line. As a result, in a frame in which one of the two sub-pixels disposed adjacent to each other in the row direction is a bright sub-pixel, the other one of the two sub-pixels is a dark sub-pixel. This holds down display unevenness (e.g., horizontal-striped unevenness) and roughness (jaggies) as compared to a configuration in which bright sub-pixels are provided adjacent to each other in the row direction or a configuration in which dark sub-pixels are provided adjacent to each other in the row direction. Moreover, in a frame in which one of two sub-pixels disposed adjacent to each other in the column direction is a bright sub-pixel, the other one of the two sub-pixels is a dark pixel. Hence, it is possible to hold down the roughness (jaggies) as compared to a configuration in which bright pixels are disposed adjacent to each other in the column direction or a configuration in which dark pixels are provided adjacent to each other in the column direction.

By inverting the polarity of the signal electric potential supplied to the data signal lines (15x and 15X) per one horizontal scanning period (1H), a feed-through direction of an electric potential while the transistor is OFF inverts between the two pixels adjacent to each other in the column direction. This restrains occurrence of flickers. Moreover, signal electric potentials of opposite polarities are supplied to the adjacent two data signal lines (15x and 15X), respectively, in an identical horizontal scanning period. As a result, a feed-through direction of an electric potential becomes opposite directions between the two pixels adjacent to each other in the row direction, while the transistor is OFF. This reduces the occurrence of flickers.

One specific example of the liquid crystal panel 5c is illustrated in Fig. 25. In the liquid crystal panel of Fig. 25, the data signal line 15x is provided parallel to the pixel 100 and pixel 101, and the data signal line 15X is provided parallel to the pixel 103 and pixel 104.

In the embodiment, the scanning signal line 16c is disposed overlapping one of two edge sections of the pixel 100, which two edge sections run along the row direction, and the scanning signal line 16d is disposed overlapping the other one of the two edge sections of the pixel 100. From a plan view, the pixel electrodes 17c and 17d are aligned in the column direction between the scanning signal lines 16c and 16d. Moreover, the scanning signal line 16c overlaps one of two edge sections of the pixel 103, which two edge sections run along the row direction, and the scanning signal line 16d overlaps the other one of the two edge sections of the pixel 103. From a plan view, the pixel electrodes 17C and 17D are aligned in the column direction between the scanning signal lines 16c and 16d.

The scanning signal line 16a is disposed overlapping one of two edge sections of the pixel 101, which two edge sections run along the row direction, and the scanning signal line 16b is disposed overlapping the other one of the two edge sections of the pixel 101. From a plan view, the pixel electrodes 17a and 17b are aligned in the column direction between the scanning signal lines 16a and 16b. Moreover, the scanning signal line 16a is disposed overlapping one of two edge sections of the pixel 104, which two edge sections run along the row direction, and the scanning signal line 16b overlaps the other one of the two edge sections of the pixel 104. From a plan view, the pixel electrodes 17A and 17B are aligned in the column direction between the scanning signal lines 16a and 16b.

In the pixel 101, a source electrode 8a of the transistor 12a and a drain electrode 9a of the transistor 12a are disposed on the scanning signal line 16a, and a source electrode 8b of the transistor 12b and a drain electrode 9b of the transistor 12b are disposed on the scanning signal line 16b. The source electrode 8a is connected to the data signal line 15x. The drain electrode 9a is connected to a drain draw-out wire 27a. The drain draw-out wire 27a is connected to a contact electrode 77a and a coupling capacitor electrode 37a. The contact electrode 77a is connected to the pixel electrode 17a via a contact hole 11a. The coupling capacitor electrode 37a overlaps the pixel electrode 17b via an interlayer insulating film. As a result, a coupling capacitor C101 (see Fig. 24) between the pixel electrodes 17a and 17b is formed at a part at which the coupling capacitor electrode 37a overlaps the pixel electrode 17b. Moreover, the source electrode 8b is connected to the data signal line 15x. The drain electrode 9b is connected to a drain draw-out wire 27b. The drain draw-out wire 27b is connected to the contact electrode 77b and the coupling capacitor electrode 37b. The contact electrode 77b is connected to the pixel electrode 17b via a contact hole 11b. The coupling capacitor electrode 37b overlaps the pixel electrode 17a via an interlayer insulating film. As a result, a coupling capacitor C101 (see Fig. 24) between the pixel electrodes 17a and 17b is formed at a part at which the coupling capacitor electrode 37a overlaps the pixel electrode 17b. Furthermore, the drain electrode 9a that is electrically connected to the pixel electrode 17a is connected to a storage capacitor electrode 67a via a drain draw-out wire 19a. The storage capacitor electrode 67a overlaps the scanning signal line 16d via a gate insulating film. As a result, storage capacitance Cha (see Fig. 24) is formed at a part at which the storage capacitor electrode 67a overlaps the scanning signal line 16d. Moreover, the drain electrode 9b that is electrically connected to the pixel electrode 17b is connected to a storage capacitor electrode 67b via a drain draw-out wire 19b. The storage capacitor electrode 67b overlaps the scanning signal line 16e via a gate insulating film. As a result, storage capacitance Chb (see Fig. 24) is formed at a part at which the storage capacitor electrode 67b overlaps the scanning signal line 16e.

As illustrated in Fig. 25, the pixel electrodes 17a and 17b, drain draw-out wires 27a and 27b, contact electrodes 77a and 77b, contact holes 11a and 11b, and coupling capacitor electrodes 37a and 37b, are disposed in the pixel 101 in such a manner that a planar shape and planar configuration of these members seen from a scanning signal line 16a side are identical to those seen from a scanning signal line 16b side. Moreover, an area of the scanning signal line 16a overlapped by the drain electrode 9a and drain draw-out wires 19a and 27a (parasitic capacitance Cgd between (i) the drain electrode 9a and drain draw-out wires 19a and 27a and (ii) the scanning signal line 16a) is substantially of a same size as an area of the scanning signal line 16b overlapped by the drain electrode 9b and drain draw-out wires 19b and 27b (parasitic capacitance Cgd between (i) the drain electrode 9b and drain draw-out wires 19b and 27b and (ii) the scanning signal line 16b). As a result, a feed-through voltage in a case where a sub-pixel including the pixel electrode 17a is a bright sub-pixel and a feed-through voltage in a case where a sub-pixel including the pixel electrode 17b is a bright sub-pixel become identical to each other. This reduces a possibility that image sticking occurs to the bright sub-pixel, caused by a difference between the two feed-through voltages. The pixel 100 has a configuration (shapes and arrangement of members and their connection relationship) identical to that of the pixel 101.

Moreover, in the pixel 104, a source electrode 8A of the transistor 12A and a drain electrode 9A of the transistor 12A are disposed on the scanning signal line 16a, and a source electrode 8B of the transistor 12B and a drain electrode 9B of the transistor 12B are disposed on the scanning signal line 16b. The source electrode 8A is connected to the data signal line 15X. The drain electrode 9A is connected to a drain draw-out wire 27A. The drain draw-out wire 27A is connected to a coupling capacitor electrode 37A and a contact electrode 77A. The contact electrode 77A is connected to the pixel electrode 17B via a contact hole 11A. The coupling capacitor electrode 37A overlaps the pixel electrode 17A via an interlayer insulating film. As a result, a coupling capacitor C104 (see Fig. 24) between the pixel electrodes 17A and 17B is formed. Moreover, the source electrode 8B is connected to the data signal line 15X. The drain electrode 9B is connected to a drain draw-out wire 27B. The drain draw-out wire 27B is connected to a coupling capacitor electrode 37B and a contact electrode 77B. The contact electrode 77B is connected to the pixel electrode 17A via a contact hole 11B. The coupling capacitor electrode 37B overlaps the pixel electrode 17B via an interlayer insulating film. As a result, a coupling capacitor C104 (see Fig. 24) between the pixel electrodes 17A and 17B is formed. Furthermore, the drain electrode 9A that is electrically connected to the pixel electrode 17B is connected to a storage capacitor electrode 67A via a drain draw-out wire 19A. The storage capacitor electrode 67A overlaps the scanning signal line 16d via a gate insulating film. As a result, storage capacitance ChA (see Fig. 24) is formed. Moreover, the drain electrode 9B that is electrically connected to the pixel electrode 17A is connected to a storage capacitor electrode 67B via a drain draw-out wire 19B. The storage capacitor electrode 67B overlaps the scanning signal line 16e via a gate insulating film. As a result, storage capacitance ChB (see Fig. 24) is formed.

As illustrated in Fig. 25, the pixel electrodes 17A and 17B, drain draw-out wires 27A and 27B, contact electrodes 77A and 77B, contact holes 11A and 11B, and coupling capacitor electrodes 37A and 37B are provided in the pixel 104 in such a manner that a planar shape and plane configuration of these members seen from a scanning signal line 16a side are identical to those seen from a scanning signal line 16b side. Moreover, an area of the scanning signal line 16a overlapped by the drain electrode 9A and drain draw-out wires 19A and 27A (parasitic capacitance Cgd between (i) the drain electrode 9A and drain draw-out wires 19A and 27A and (ii) the scanning signal line 16a) is substantially of a same size as an area of the scanning signal line 16b overlapped by the drain electrode 9B and drain draw-out wires 19B and 27B (parasitic capacitance Cgd between (i) the drain electrode 9B and drain draw-out wires 19B and 27B and (ii) the scanning signal line 16b). As a result, a feed-through voltage in a case where a sub-pixel including the pixel electrode 17a is a bright sub-pixel and a feed-through voltage in a case where a sub-pixel including the pixel electrode 17b is a bright sub-pixel become identical to each other. This reduces a possibility that image sticking occurs to the bright sub-pixel, caused by a difference between the two feed-through voltages. The pixel 103 has a configuration (shape and arrangement of members and their connection relationship) identical to that of the pixel 104.

Fig. 26 is a cross-sectional view of an alternate long and two short dashed line section in Fig. 25. As illustrated in Fig. 26, the liquid crystal panel 5c includes: an active matrix substrate 3; a color filter substrate 30 that faces the active matrix substrate 3; and a liquid crystal layer 40 sandwiched between the two substrates (3 and 30).

The active matrix substrate 3 has the scanning signal lines 16a and 16d provided on a glass substrate 31, and on these members, an inorganic gate insulating film 22 is provided so as to cover these members. On the inorganic gate insulating film 22, a drain electrode 9a, drain draw-out wires 19a and 27a, and a storage capacitor electrode 67a are provided, and further, an inorganic interlayer insulating film 25 is formed thereon so as to cover these members. The pixel electrode 17a is formed on the inorganic interlayer insulating film 25, and an alignment film (not illustrated) is formed to cover the pixel electrode 17a. In the embodiment, the storage capacitor electrode 67a overlaps the scanning signal line 16d via the inorganic gate insulating film 22. As a result, storage capacitance Cha (see Fig. 1) is formed. Meanwhile, the color filter substrate 30 has a black matrix 13 and a colored layer 14 provided on a glass substrate 32, and the common electrode (com) 28 is provided on a layer upper of the black matrix 13 and the colored layer 14. Furthermore, an alignment film (not illustrated) is formed on the common electrode 28 so as to cover the common electrode 28.

The cross section of the alternate long and two short dashed line section in Fig. 25 may also be configured as illustrated in Fig. 27. That is to say, a thick organic gate insulating film 21 and a thin inorganic gate insulating film 22 are formed on a substrate, and thereafter a thin inorganic interlayer insulating film 25 and a thick organic interlayer insulating film 26 are formed in layers below the pixel electrode. This attains effects of preventing reduction in various parasitic capacitances and preventing short-circuiting of wires. In this case, as illustrated in Fig. 27, it is preferable that the organic gate insulating film 21 is hollowed at a part positioned below the storage capacitor electrode 67a. This increases a capacitance value of the storage capacitance Cha. Moreover, although not illustrated, it is preferable that the thick inorganic interlayer insulating film is hollowed at a part positioned above the coupling capacitor electrode. This increases a capacitance value of the coupling capacitor. The organic gate insulating film 21 and organic interlayer insulating film 26 may be insulating films made of, for example, SOG (spin-off glass) material; and the organic gate insulating film 21 and organic interlayer insulating film 26 may include at least one of acrylic resin, epoxy resin, polyimide resin, polyurethane resin, novolac resin, and siloxane resin.

Another specific example of the liquid crystal panel 5c is illustrated in Fig. 28. The pixel dispositions and arrangement of data signal lines and scanning signal lines in the liquid crystal panel of Fig. 28 are identical to those of the liquid crystal panel illustrated in Fig. 25.

As illustrated in Fig. 28, in the pixel 101, a source electrode 8a of the transistor 12a and a drain electrode 9a of the transistor 12a are disposed on the scanning signal line 16a, and a source electrode 8b of the transistor 12b and a drain electrode 9b of the transistor 12b are disposed on the scanning signal line 16b. The source electrodes 8a and 8b are connected to the data signal line 15x. The drain electrode 9a is connected to a drain draw-out wire 27a. The drain draw-out wire 27a is connected to a coupling capacitor electrode 37a, and is also connected to the pixel electrode 17a via a contact hole 11a. The drain electrode 9b is connected to the pixel electrode 17b via a contact hole 11b. The coupling capacitor electrode 37a overlaps the pixel electrode 17b via an interlayer insulating film. As a result, a coupling capacitor C101 (see Fig. 24) between the pixel electrodes 17a and 17b is formed. Furthermore, the drain electrode 9a that is electrically connected to the pixel electrode 17a is connected to a storage capacitor electrode 67a via a drain draw-out wire 19a. The storage capacitor electrode 67a overlaps the scanning signal line 16d via a gate insulating film. As a result, storage capacitance Cha (see Fig. 24) is formed. Moreover, the drain electrode 9b that is electrically connected to the pixel electrode 17b is connected to a storage capacitor electrode 67b via a drain draw-out wire 19b. The storage capacitor electrode 67b overlaps the scanning signal line 16e via a gate insulating film. As a result, storage capacitance Chb (see Fig. 24) is formed. The pixel 100 has a configuration (shape and arrangement of members and their connection relationship) identical to that of the pixel 101.

Moreover, in the pixel 104, a source electrode 8A of the transistor 12A and a drain electrode 9A of the transistor 12A are disposed on the scanning signal line 16A, and a source electrode 8B of the transistor 12B and a drain electrode 9B of the transistor 12B are disposed on the scanning signal line 16B. The source electrodes 8A and 8B are connected to the data signal line 15X. The drain electrode 9A is connected to the pixel electrode 17A via a contact hole 11A, and the drain electrode 9B is connected to a drain draw-out wire 27B. The drain draw-out wire 27B is connected to a coupling capacitor electrode 37B, and is also connected to the pixel electrode 17B via a contact hole 11B. Furthermore, the coupling capacitor electrode 37B overlaps the pixel electrode 17A via an interlayer insulating film. As a result, a coupling capacitor C104 (see Fig. 24) between the pixel electrodes 17A and 17B is formed. Further, the drain electrode 9A that is electrically connected to the pixel electrode 17A is connected to a storage capacitor electrode 67A via a drain draw-out wire 19A. The storage capacitor electrode 67A overlaps the scanning signal line 16d via a gate insulating film. As a result, storage capacitance ChA (see Fig. 24) is formed. Moreover, the drain electrode 9B that is electrically connected to the pixel electrode 17B is connected to the storage capacitor electrode 67B via a drain draw-out wire 19B, and the storage capacitor electrode 67B overlaps the scanning signal line 16e via a gate insulating film. As a result, storage capacitance ChB (see Fig. 24) is formed. The pixel 103 has a configuration (shape and arrangement of members and their connection relationship) identical to that of the pixel 104.

Yet another specific example of the liquid crystal panel 5c is as illustrated in Fig. 29. The pixel dispositions and arrangement of the data signal lines and scanning signal lines in the liquid crystal panel of Fig. 29 are identical to those of the liquid crystal panel of Fig. 25.

As illustrated in Fig. 29, in the pixel 101, a source electrode 8a of the transistor 12a and a drain electrode 9a of the transistor 12a are disposed on the scanning signal line 16a, and a source electrode 8b of the transistor 12b and a drain electrode 9b of the transistor 12b are disposed on the scanning signal line 16b. The source electrodes 8a and 8b are connected to the data signal line 15x. The drain electrode 9a is connected to the pixel electrode 17a via a contact hole 11a. The drain electrode 9b is connected to the pixel electrode 17b via a contact hole 11b. The pixel electrode 17a and a contact electrode 77a are connected to each other via a contact hole 41a. The contact electrode 77a is connected to a coupling capacitor electrode 37a. Further, the coupling capacitor electrode 37a overlaps the pixel electrode 17b via an interlayer insulating film. As a result, a coupling capacitor C101 (see Fig. 24) between the pixel electrodes 17a and 17b is formed. Furthermore, the drain electrode 9a that is electrically connected to the pixel electrode 17a is connected to a storage capacitor electrode 67a via a drain draw-out wire 19a. The storage capacitor electrode 67a overlaps the scanning signal line 16d via a gate insulating film. As a result, storage capacitance Cha (see Fig. 24) is formed. Moreover, the drain electrode 9b that is electrically connected to the pixel electrode 17b is connected to a storage capacitor electrode 67b via a drain draw-out wire 19b. The storage capacitor electrode 67b overlaps the scanning signal line 16e via a gate insulating film. As a result, storage capacitance Chb (see Fig. 24) is formed. The pixel 100 has a configuration (shape and arrangement of members and their connection relationship) identical to that of the pixel 101.

Moreover, in the pixel 104, a source electrode 8A of the transistor 12A and a drain electrode 9A of the transistor 12A are disposed on the scanning signal line 16A, and a source electrode 8B of the transistor 12B and a drain electrode 9B of the transistor 12B are disposed on the scanning signal line 16B. The source electrodes 8A and 8B are connected to the data signal line 15X. The drain electrode 9A is connected to the pixel electrode 17A via a contact hole 11A. The drain electrode 9B is connected to the pixel electrode 17B via a contact hole 11B. The pixel electrode 17B and a contact electrode 77B are connected to each other via a contact hole 41B, and the contact electrode 77B is connected to a coupling capacitor electrode 37B. Furthermore, the coupling capacitor electrode 37B overlaps the pixel electrode 17A via an interlayer insulating film. As a result, a coupling capacitor C104 (see Fig. 24) between the pixel electrodes 17A and 17B is formed. Further, the drain electrode 9A that is electrically connected to the pixel electrode 17A is connected to a storage capacitor electrode 67A via a drain draw-out wire 19A. The storage capacitor electrode 67A overlaps the scanning signal line 16d via a gate insulating film. As a result, storage capacitance ChA (see Fig. 24) is formed. Moreover, the drain electrode 9B that is electrically connected to the pixel electrode 17B is connected to a storage capacitor electrode 67B via a drain draw-out wire 19B, and the storage capacitor electrode 67B overlaps the scanning signal line 16e via a gate insulating film. As a result, storage capacitance ChB (see Fig. 24) is formed. The pixel 103 has a configuration (shape and arrangement of members and their connection relationship) identical to that of the pixel 104.

Fig. 30 is a timing chart showing a driving method of the present liquid crystal display device (liquid crystal display device of a normally black mode) including the liquid crystal panel 5c. Ga to Gf are gate on-pulse signals that are supplied to the scanning signal lines 16a to 16f, and Ka to Kf represent brightness of respective sub-pixels that include the pixel electrodes 17a to 17f.

As illustrated in Fig. 30, with this driving method, the scanning signal lines 16e, 16a, and 16c are selected in this order in each of frames in a first period (e.g., 60 consecutive frames). This makes the sub-pixel including the pixel electrode 17e be "bright", the sub-pixel including the pixel electrode 17f be "dark", the sub-pixel including the pixel electrode 17a be "bright", the sub-pixel including the pixel electrode 17b be "dark", the sub-pixel including the pixel electrode 17c be "bright", and the sub-pixel including the pixel electrode 17d be "dark". As a whole, each of the frames becomes as illustrated in (a) of Fig. 31. In each of frames in a second period (e.g., 60 consecutive frames) subsequent to the first period, the scanning signal lines 16d, 16b, and 16f are selected in this order. This makes the sub-pixel including the pixel electrode 17c be "dark", the sub-pixel including the pixel electrode 17d be "bright", the sub-pixel including the pixel electrode 17a be "dark", the sub-pixel including the pixel electrode 17b be "bright", the sub-pixel including the pixel electrode 17e be "dark", and the sub-pixel including the pixel electrode 17f be "bright". As a whole, each of the frames becomes as illustrated in (b) of Fig. 31. Similarly, in each of frames in a third period (e.g., 60 consecutive frames), the scanning signal lines 16e, 16a, and 16c are selected in this order. This makes the sub-pixel including the pixel electrode 17e be "bright", the sub-pixel including the pixel electrode 17f be "dark", the sub-pixel including the pixel electrode 17a be "bright", the sub-pixel including the pixel electrode 17b be "dark", the sub-pixel including the pixel electrode 17c be "bright", and the sub-pixel including the pixel electrode 17d be "dark". As a whole, each of the frames becomes as illustrated in (c) of Fig. 31. Further, in each of frames in a fourth period (e.g., 60 consecutive frames) subsequent to the third period, the scanning signal lines 16d, 16b, and 16f are selected in this order. This makes the sub-pixel including the pixel electrode 17c be "dark", the sub-pixel including the pixel electrode 17d be "bright", the sub-pixel including the pixel electrode 17a be "dark", the sub-pixel including the pixel electrode 17b be "bright", the sub-pixel including the pixel electrode 17e be "dark", and the sub-pixel including the pixel electrode 17f be "bright". As a whole, each of the frames becomes as illustrated in (d) of Fig. 31. Each of the first to fourth periods in Fig. 31 may be a n (e.g., n = 60) consecutive frames period as described above, or may be a period starting from at a time when a power supply of a liquid crystal display device is turned on to a time when the power supply thereof is turned off. Moreover, in a case where the liquid crystal display device is applied to a liquid crystal television, the periods may be switched over corresponding to switching of channels.

Fig. 32 is a circuit diagram illustrating one configuration example of a gate driver of a liquid crystal display device that includes the liquid crystal panel 5c. As illustrated in Fig. 32, a gate driver GD includes two shift registers 44 and 45, a plurality of AND circuits (66a to 66f) aligned in a column direction, and an output circuit 46. The shift register 44 receives a gate start pulse signal GSPy and a gate clock signal GCK, and the shift register 45 receives a gate start pulse signal GSPx and the gate clock signal GCK. Further, an output from one stage of the shift register 44 is inputted into an odd-numbered AND circuit, and an output from one stage of the shift register 45 is inputted into an even-numbered AND circuit disposed adjacent to the odd-numbered AND circuit. Moreover, a gate driver output control signal GOE is made up of two systems (OEx and OEy); an inverted signal of the signal OEy is inputted into the odd-numbered AND circuit, and an inverted signal of the signal OEx is inputted into the even-numbered AND circuit. Further, an output from an AND circuit becomes a gate on-pulse signal via the output circuit 46, and this gate on-pulse signal is supplied to a scanning signal line.

For example, an output Qc outputted from a stage of the shift register 44 is inputted into the AND circuit 66c, and an output Qd outputted from a stage of the shift register 45 is inputted into the AND circuit 66d. Moreover, the signal OEy is inputted into the AND circuit 66c, and the signal OEx is inputted into the AND circuit 66d. Further, an output of the AND circuit 66c becomes a gate on-pulse signal Gc via the output circuit 46, and this gate on-pulse signal is supplied to the scanning signal line 16c. Moreover, an output of the AND circuit 66d becomes a gate on-pulse signal Gd via the output circuit 46, and this gate on-pulse signal is supplied to the scanning signal line 16d.

Fig. 33 is a timing chart illustrating an operation of the gate driver in Fig. 32. As illustrated in Fig. 33, for example, the signal OEx is always "H" in a first period, is "H" at a latter part of each of horizontal scanning periods in a second period subsequent to the first period, is always "H" in a third period subsequent to the second period, and is "H" at a latter part of each of horizontal scanning periods in a fourth period subsequent to the third period. On the other hand, the signal OEy is "H" at a latter part of each of horizontal scanning periods in the first period, is always "H" in the second period, is "H" at a latter part of each of horizontal scanning periods in the third period, and is always "H" in the fourth period. This makes the gate on-pulse signals Ge, Ga, and Gc be "H" (active) in the first period in this order, makes the gate on-pulse signals Gd, Gb, and Gf be "H" (active) in the second period in this order, makes the gate on-pulse signals Ge, Ga, and Gc be "H" (active) in the third period in this order, and makes the gate on-pulse signals Gd, Gb, and Gf be "H" (active) in the fourth period in this order. As a result, a drive as illustrated in Fig. 30 is achieved.

Yet another configuration of the present embodiment is illustrated in Fig. 53. In a pixel 101 of a liquid crystal panel illustrated in Fig. 53, two scanning signal lines 16a and 16b associated with the pixel 101 are disposed midway of the pixel and on one side of the pixel, respectively. From a plan view, the pixel electrodes 17a and 17b are disposed on either side of the scanning signal line 16a. Further, a source electrode 8a of the transistor 12a and a drain electrode 9a of the transistor 12a are provided on the scanning signal line 16a, and a source electrode 8b of the transistor 12b and a drain electrode 9b of the transistor 12b are provided on the scanning signal line 16b. The source electrodes 8a and 8b are connected to the data signal line 15x. The drain electrode 9a is connected to the pixel electrode 17a via a contact hole 11a, and is also connected to a coupling capacitor electrode 37a via a drain draw-out wire 27a. The coupling capacitor electrode 37a overlaps the pixel electrode 17b via an interlayer insulating film. As a result, a coupling capacitor between the pixel electrodes 17a and 17b is formed at a part at which the coupling capacitor electrode 37a overlaps the pixel electrode 17b. Moreover, the drain electrode 9b is connected to the pixel electrode 17b via a drain draw-out wire 27b and a contact hole 11b.

Moreover, the drain electrode 9a is connected to a storage capacitor electrode 67a via a drain draw-out wire 19a. The storage capacitor electrode 67a overlaps a scanning signal line 16d of a previous stage, via the gate insulating film. As a result, storage capacitance between the pixel electrode 17a and the scanning signal line 16d is formed at a part at which the storage capacitor electrode 67a overlaps the scanning signal line 16d.

In a liquid crystal display device including the liquid crystal panel illustrated in Fig. 53, scanning is carried out in a direction of the arrow illustrated in Fig. 53 (direction from the scanning signal line 16d to the scanning signal line 16b) in each of the frames; the scanning signal line 16a is scanned in predetermined frames, whereas the scanning signal line 16b is scanned in the other frames. In the frame in which the scanning signal line 16a is scanned, the sub-pixel including the pixel electrode 17a becomes a bright sub-pixel and the sub-pixel including the pixel electrode 17b becomes a dark sub-pixel, and in the frame in which the scanning signal line 16b is scanned, the sub-pixel including the pixel electrode 17a becomes a dark sub-pixel, and the sub-pixel including the pixel electrode 17b becomes a bright sub-pixel.

The liquid crystal panel illustrated in Fig. 53 may be modified as illustrated in Fig. 54. The liquid crystal panel illustrated in Fig. 54 includes, in addition to the configuration of Fig. 53: a storage capacitor electrode 67b that overlaps a scanning signal line 16d of a previous stage, via a gate insulating film; and a relay wire 119b that connects to the storage capacitor electrode 67b. The relay wire 119b is connected to the pixel electrode 17b via a contact hole 121b. As a result, storage capacitance is formed between the pixel electrode 17b and the scanning signal line 16d, as well as the storage capacitance between the pixel electrode 17a and scanning signal line 16d.

Yet another configuration of the present embodiment is illustrated in Fig. 56.. With a pixel 101 of a liquid crystal panel illustrated in Fig. 56, two scanning signal lines 16a and 16b associated with the pixel 101 are disposed on either side of the pixel. Moreover, the pixel includes: a pixel electrode 17b Z-shaped when seen along the column direction (extending direction of data signal line 15x); two pixel electrodes 17a and 17u disposed on either side of the pixel electrode 17b so as to fit with the pixel electrode 17b; and a coupling capacitor electrode 37a that overlaps the pixel electrode 17b via an interlayer insulating film. A transistor 12a is formed on the scanning signal line 16a, and a transistor 12b is formed on the scanning signal line 16b. A drain electrode of the transistor 12a is connected to the pixel electrode 17a via a contact hole 11a, a drain electrode of the transistor 12b is connected to the pixel electrode 17b via a contact hole 11b, and source electrodes of the transistors Tr12a and 12b are connected to the data signal line 15x.

A coupling capacitor electrode 37a (overlapping the pixel electrode 17b via an interlayer insulating film) is shaped as a parallelogram, to which connecting wires 119a and 119u are connected on either of its sides. Further, the connecting wire 119a is connected to the pixel electrode 17a via a contact hole 11ai, and the connecting wire 119u is connected to the pixel electrode 17u via a contact hole 11ui. As a result, a coupling capacitor between (i) the pixel electrodes 17a and 17u and (ii) the pixel electrode 17b is formed at a part at which the coupling capacitor electrode 37a overlaps the pixel electrode 17b.

Moreover, in the liquid crystal panel illustrated in Fig. 56, two storage capacitor electrodes 67a and 67b associated with a pixel electrode are disposed so as to overlap the scanning signal line 16d (scanning signal line of a previous stage) via a gate insulating film. The storage capacitor electrode 67a is connected to the drain electrode of the transistor 12a via a drain draw-out wire 19a, and the storage capacitor electrode 67b is connected to the pixel electrode 17b via a relay wire 119b and a contact hole 11bj. As a result, storage capacitance between the pixel electrodes 17a and 17u and the storage capacitor wire 18x is formed at a part at which the storage capacitor electrode 67a overlaps the scanning signal line 16d, and storage capacitance between the pixel electrode 17b and the storage capacitor wire 18x is formed at a part at which the storage capacitor electrode 67b overlaps the scanning signal line 16d. As such, the pixel configuration of the liquid crystal panel illustrated in Fig. 56 is advantageous in that routing around of various wires for providing the storage capacitance is simplified.

In the liquid crystal panel illustrated in Fig. 56, a gap between the pixel electrode 17b and the pixel electrode 17a and a gap between the pixel electrode 17b and the pixel electrode 17u may serve as an alignment control structure. Moreover, with the liquid crystal display device including the present liquid crystal panel, scanning is carried out in a direction of the arrow illustrated in Fig. 56 (direction from the scanning signal line 16d to the scanning signal line 16b); the scanning signal line 16a is scanned in predetermined frames, whereas the scanning signal line 16b is scanned in the other frames. In the frames in which the scanning signal line 16a is scanned, the sub-pixel including the pixel electrode 17a and the sub-pixel including the pixel electrode 17u are bright sub-pixels, and the sub-pixel including the pixel electrode 17b is a dark sub-pixel, and in the frame in which the scanning signal line 16b is scanned, the sub-pixel including the pixel electrode 17a and the sub-pixel including the pixel electrode 17u are dark sub-pixels, and the sub-pixel including the pixel electrode 17b is a bright sub-pixel.

### Embodiment 4

Fig. 34 is an equivalent circuit diagram illustrating one part of the present liquid crystal panel. As illustrated in Fig. 34, a liquid crystal panel 5d includes: data signal lines (15x and 15X) that extend in a column direction (vertical direction in Fig. 34); scanning signal lines (16a to 16f) that extend in a row direction (horizontal direction in Fig. 34); pixels (100 to 105) that are aligned in the row and column directions; and a common electrode (counter electrode) com. Configurations of pixels that are included in odd-numbered pixel columns are identical to each other and configurations of pixels that are included in even-numbered pixel columns are identical to each other; however, the configurations of the pixels differ from each other between those included in the odd-numbered pixel columns and those included in the even-numbered pixel columns. The liquid crystal panel 5d is of a Cs on-gate configuration (later described); therefore, the liquid crystal panel 5d is advantageous in that the liquid crystal panel requires no storage capacitor wires (18x to 18z) as provided in the liquid crystal panel 5a of Fig. 1. Note that a pixel column including the pixels 100 to 102 is adjacent to a pixel column including the pixels 103 to 105.

In the liquid crystal panel 5d, one pixel is associated with one data signal line and two scanning signal lines. Two pixel electrodes 17c and 17d disposed in the pixel 100, two pixel electrodes 17a and 17b disposed in the pixel 101, and two pixel electrodes 17e and 17f disposed in the pixel 102 are arranged in one line; and two pixel electrodes 17C and 17D disposed in the pixel 103, two pixel electrodes 17A and 17B disposed in the pixel 104, and two pixel electrodes 17E and 17F disposed in the pixel 105 are arranged in one line. The pixel electrodes 17c and 17C are disposed adjacent to each other in the row direction, the pixel electrodes 17d and 17D are disposed adjacent to each other in the row direction, the pixel electrodes 17a and 17A are disposed adjacent to each other in the row direction, the pixel electrodes 17b and 17B are disposed adjacent to each other in the row direction, the pixel electrodes 17e and 17E are disposed adjacent to each other in the row direction, and the pixel electrodes 17f and 17F are disposed adjacent to each other in the row direction.

In the pixel 101 for example, the pixel electrodes 17a and 17b are connected to each other via a coupling capacitor C101. The pixel electrode 17a is connected to the data signal line 15x via a transistor 12a that is connected to the scanning signal line 16a, and the pixel electrode 17b is connected to the data signal line 15x via a transistor 12b that is connected to the scanning signal line 16b. Storage capacitance Cha is formed between the pixel electrode 17a and the scanning signal line 16b, and a storage capacitance Chb is formed between the pixel electrode 17b and the scanning signal line 16a. Liquid crystal capacitance C1a is formed between the pixel electrode 17a and the common electrode com, and liquid crystal capacitance C1b is formed between the pixel electrode 17b and the common electrode com.

Meanwhile, in the pixel 104 disposed adjacent to the pixel 101 in the row direction, the pixel electrodes 17A and 17B are connected to each other via a coupling capacitor C104. The pixel electrode 17A is connected to the data signal line 15X via a transistor 12B that is connected to the scanning signal line 16b, and the pixel electrode 17B is connected to the data signal line 15X via a transistor 12A that is connected to the scanning signal line 16a. Storage capacitance ChA is formed between the pixel electrode 17A and the scanning signal line 16b, and storage capacitance ChB is formed between the pixel electrode 17B and the scanning signal line 16a. Liquid crystal capacitance C1A is formed between the pixel electrode 17A and the common electrode com, and liquid crystal capacitance C1B is formed between the pixel electrode 17B and the common electrode com.

How the scanning signal lines (16a to 16f) and data signal lines (15x and 15X) of the liquid crystal display device including the liquid crystal panel 5d is driven is similar to that of the liquid crystal display device including the liquid crystal panel 5a. Other than a disadvantage that the pixel electrode capacitively coupled to the data signal line is effected by an electric potential change in a scanning signal line that forms storage capacitance with the pixel electrode, a similar effect is attained as with the liquid crystal display device including the liquid crystal panel 5a.

Fig. 35 illustrates one specific example of the liquid crystal panel 5d. In the liquid crystal panel illustrated in Fig. 35, the data signal line 15x is provided parallel to the pixel 100 and pixel 101, and the data signal line 15X is provided parallel to the pixel 103 and pixel 104.

In the embodiment, the scanning signal line 16c is disposed overlapping one of two edge sections of the pixel 100, which two edge sections run along the row direction, and the scanning signal line 16d is disposed overlapping the other one of the two edge sections of the pixel 100. From a plan view, the pixel electrodes 17c and 17d are arranged in the column direction between the scanning signal lines 16c and 16d. The scanning signal line 16c overlaps one of two edge sections of the pixel 103 which two edge sections run along the row direction, and the scanning signal line 16d overlaps the other one of the two edge sections of the pixel 103. From a plan view, the pixel electrodes 17C and 17D are arranged in the column direction between the scanning signal lines 16c and 16d.

The scanning signal line 16a is disposed overlapping one of two edge sections of the pixel 101 which two edge sections run along the row direction, and the scanning signal line 16b is disposed overlapping the other one of the two edge sections of the pixel 101. From a plan view, the pixel electrodes 17a and 17b are arranged in the column direction between the scanning signal lines 16a and 16b. Moreover, the scanning signal line 16a overlaps one of two edge sections of the pixel 104, which two edge sections run along the row direction, and the scanning signal line 16b overlaps the other one of the two edge sections of the pixel 104. From a plan view, the pixel electrodes 17A and 17B are arranged in the column direction between the scanning signal lines 16a and 16b.

In the pixel 101, a source electrode 8a of the transistor 12a and a drain electrode 9a of the transistor 12a are provided on the scanning signal line 16a, and a source electrode 8b of the transistor 12b and a drain electrode 9b of the transistor 12b are provided on the scanning signal line 16b. The source electrodes 8a and 8b are connected to the data signal line 15x. The drain electrode 9a is connected to a drain draw-out wire 27x. The drain electrode 9b is connected to the pixel electrode 17b via a contact hole 11b. The drain draw-out wire 27x is connected to a contact electrode 77a and a coupling capacitor electrode 37a. The contact electrode 77a is connected to the pixel electrode 17a via a contact hole 11a. The coupling capacitor electrode 37a overlaps the pixel electrode 17b via an interlayer insulating film. As a result, a coupling capacitor C101 (see Fig. 34) between the pixel electrodes 17a and 17b is formed at a part at which the coupling capacitor electrode 37a overlaps the pixel electrode 17b. Furthermore, the drain draw-out wire 27x that is electrically connected to the pixel electrode 17a is connected to a storage capacitor electrode 67a. The storage capacitor electrode 67a overlaps the scanning signal line 16b via a gate insulating film. As a result, storage capacitance Cha (see Fig. 34) is formed at a part at which the storage capacitor electrode 67a overlaps the scanning signal line 16b. Moreover, a pixel electrode extension 17z that extends from the pixel electrode 17b towards the scanning signal line 16a is disposed along an edge of the pixel electrode 17a, and a pixel electrode extension 17w that extends from the pixel electrode 17a towards the scanning signal line 16b is disposed along an edge of the pixel electrode 17b. The pixel electrode extension 17z is connected to the storage capacitor electrode 67b via a contact hole 41 b, and the storage capacitor electrode 67b overlaps the scanning signal line 16a via a gate insulating film. As a result, storage capacitance Chb (see Fig. 34) is formed at a part at which the storage capacitor electrode 67b overlaps the scanning signal line 16a. The pixel 100 has a configuration (shape and arrangement of members and their connection relationship) identical to that of the pixel 101.

Moreover, in the pixel 104, a source electrode 8A of the transistor 12A and a drain electrode 9A of the transistor 12A are provided on the scanning signal line 16A, and a source electrode 8B of the transistor 12B and a drain electrode 9B of the transistor 12B are provided on the scanning signal line 16B. The source electrodes 8A and 8B are connected to the data signal line 15X. The drain electrode 9A is connected to the pixel electrode 17A via a contact hole 11A. The drain electrode 9B is connected to a drain draw-out wire 27X. The drain draw-out wire 27X is connected to a contact electrode 77B and a coupling capacitor electrode 37B. The contact electrode 77B is connected to the pixel electrode 17B via a contact hole 11B. The coupling capacitor electrode 37B overlaps the pixel electrode 17A via an interlayer insulating film. As a result, a coupling capacitor C101 (see Fig. 34) between the pixel electrodes 17A and 17B is formed. Furthermore, a pixel electrode extension 17Z that extends from the pixel electrode 17A towards the scanning signal line 16b is disposed along an edge of the pixel electrode 17B, and a pixel electrode extension 17W that extends from the pixel electrode 17B towards the scanning signal line 16a is disposed along an edge of the pixel electrode 17a. The pixel electrode extension 17Z is connected to the storage capacitor electrode 67A via a contact hole 41A, and the storage capacitor electrode 67A overlaps the scanning signal line 16b via a gate insulating film. As a result, storage capacitance Cha (see Fig. 34) is formed. Moreover, the drain draw-out wire 27X that is electrically connected to the pixel electrode 17B is connected to a storage capacitor electrode 67B, and the storage capacitor electrode 67B overlaps the scanning signal line 16a via a gate insulating film. As a result, storage capacitance Chb (see Fig. 34) is formed. The pixel 103 has a configuration (shape and arrangement of members and their connection relationship) identical to that of the pixel 104.

### Embodiment 5

Fig. 36 is an equivalent circuit diagram illustrating one part of the present liquid crystal panel. As illustrated in Fig. 36, a liquid crystal panel 5e includes: data signal lines (15x and 15X) that extend in a column direction (vertical direction in Fig. 36); scanning signal lines (16p to 16s) that extend in a row direction (horizontal direction in Fig. 36); storage capacitor wires (18x to 18z); pixels (100 to 105) that are aligned in the row and column directions, and a common electrode (counter electrode) com. Configurations of pixels that are included in odd-numbered pixel columns are identical to each other and configurations of pixels included in even-numbered pixel columns are identical to each other; however, the configurations of the pixels differ from each other between those included in the odd-numbered pixel columns and those included in the even-numbered pixel columns. Note that a pixel column including the pixels 100 to 102 is adjacent to a pixel column including the pixels 103 to 105.

In the liquid crystal panel 5e, one pixel is associated with one data signal line, and a gap between two pixels has one scanning signal line disposed therein. Two pixel electrodes 17c and 17d disposed in the pixel 100, two pixel electrodes 17a and 17b disposed in the pixel 101, and two pixel electrodes 17e and 17f disposed in the pixel 102 are arranged in one line, and two pixel electrodes 17C and 17D disposed in the pixel 103, two pixel electrodes 17A and 17B disposed in the pixel 104, and two pixel electrodes 17E and 17F disposed in the pixel 105 are arranged in one line. The pixel electrodes 17c and 17C are disposed adjacent to each other in the row direction, the pixel electrodes 17d and 17D are disposed adjacent to each other in the row direction, the pixel electrodes 17a and 17A are disposed adjacent to each other in the row direction, the pixel electrodes 17b and 17B are disposed adjacent to each other in the row direction, the pixel electrodes 17e and 17E are disposed adjacent to each other in the row direction, and the pixel electrodes 17f and 17F are disposed adjacent to each other in the row direction.

Furthermore, in the pixel 101 for example, the pixel electrodes 17a and 17b are connected to each other via a coupling capacitor C101. The pixel electrode 17a is connected to the data signal line 15x via a transistor 12a that is connected to the scanning signal line 16q, and the pixel electrode 17b is connected to the data signal line 15x via a transistor 12b that is connected to the scanning signal line 16r. Storage capacitance Cha is formed between the pixel electrode 17a and the storage capacitor wire 18x, and storage capacitance Chb is formed between the pixel electrode 17b and the storage capacitor wire 18x. Further, liquid crystal capacitance C1a is formed between the pixel electrode 17a and the common electrode com, and liquid crystal capacitance C1b is formed between the pixel electrode 17b and the common electrode com.

Meanwhile, in the pixel 104 disposed adjacent to the pixel 101 in the row direction, the pixel electrodes 17A and 17B are connected to each other via a coupling capacitor C104. The pixel electrode 17A is connected to the data signal line 15X via a transistor 12B that is connected to the scanning signal line 16r, and the pixel electrode 17B is connected to the data signal line 15X via a transistor 12A that is connected to the scanning signal line 16q. Storage capacitance ChA is provided between the pixel electrode 17A and the storage capacitor wire 18x, and storage capacitance ChB is provided between the pixel electrode 17B and the storage capacitor wire 18x. Further, liquid crystal capacitance C1A is provided between the pixel electrode 17A and the common electrode com, and liquid crystal capacitance C1B is provided between the pixel electrode 17B and the common electrode com.

In a liquid crystal display device including the liquid crystal panel 5e, each of frames in a first period (for example, n consecutive frames) and each of frames in a second period (for example, n consecutive frames) subsequent to the first period are made to be scanned in opposite directions. More specifically, in each of frames in a first period (for example, 60 consecutive frames), scanning signal lines 16s, 16r, 16q, and 16p are selected in this order, and in each of frames in a second period (for example, 60 consecutive frames) subsequent to the first period, the scanning signal lines 16p, 16q, 16r, and 16s are selected in this order. For example, in a case where the scanning signal line 16q is selected after the scanning signal line 16r, the pixel electrode 17a is connected to the data signal line 15x (via the transistor 12a) thereby making the sub-pixel including the pixel electrode 17a be a "bright" sub-pixel, whereas the pixel electrode 17b is capacitively coupled to the data signal line 15x (via the transistor 12a and pixel electrode 17a) thereby making the sub-pixel including the pixel electrode 17b be a "dark" sub-pixel. In this case, when the scanning signal line 16r is selected, a signal electric potential corresponding to the pixel 102 is supplied to the pixel electrodes 17a and 17b. However, when the scanning signal line 16q, a scanning signal line that runs one horizontal scanning period after the scanning signal line 16r is selected, a signal electric potential corresponding to the pixel 101 is supplied, thereby causing regular writing to be carried out. Moreover, when the scanning signal line 16r is selected after the scanning signal line 16q, the pixel electrode 17b is connected to the data signal line 15x (via the transistor 12b) thereby making the sub-pixel including the pixel electrode 17b be a "bright" sub-pixel, whereas the pixel electrode 17a is capacitively coupled to the data signal line 15x (via the transistor 12b and the pixel electrode 17b) thereby making the sub-pixel including the pixel electrode 17a be a "dark" sub-pixel. In this case, a signal electric potential corresponding to the pixel 100 is supplied to the pixel electrodes 17a and 17b when the scanning signal line 16q is selected, and when the scanning signal line 16r that runs one horizontal scanning period subsequent to the scanning signal line 16q is selected, a signal electric potential corresponding to the pixel 101 is supplied, thereby causing regular writing to be carried out.

As such, in the present liquid crystal display device, a pixel electrode in a sub-pixel is connected to a data signal line in one frame (via a transistor) and is capacitively coupled (via a transistor and another pixel electrode) to a data signal line in another frame. In the frame in which the pixel electrode is connected to the data signal line, a signal electric potential in view of a feed-through voltage is supplied to the pixel electrode. Hence, it is difficult for a liquid crystal layer of the sub-pixel to be applied a DC voltage (making image sticking of the sub-pixel difficult to occur).

In the present configuration, the number of frames (n) in each period is made to be an even number, and a signal electric potential to be supplied to the two pixel electrodes in one pixel is inverted per frame. This allows, with the sub-pixels and their pixel electrodes, to have the number of frames (a total period of the frames) in which an electric potential of a pixel electrode is of a positive polarity and in which the sub-pixel is a bright sub-pixel, be equal to the number of frames (a total period of the frames) in which an electric potential of a pixel electrode is of a negative polarity and in which the sub-pixel is a bright sub-pixel, and also allows to have the number of frames (a total period of the frames) in which an electric potential of a pixel electrode is of a positive polarity and in which the sub-pixel is a dark sub-pixel be equal to the number frames (a total period of the frames) in which an electric potential of a pixel electrode is of a negative polarity and in which the sub-pixel is a dark sub-pixel. This makes it difficult for a liquid crystal layer of the sub-pixel to be applied a DC voltage (making image sticking of the sub-pixel difficult to occur).

Moreover, with four pixel electrodes that are included in two pixels disposed adjacent to each other in a row direction (sharing two scanning signal lines), two pixel electrodes disposed diagonally across each other are connected to a same scanning signal line. Hence, in frames in which one of two sub-pixels that are adjacent to each other in the row direction is a bright sub-pixel, the other one of the two sub-pixels is a dark sub-pixel. As a result, it is possible to hold down display unevenness (e.g., horizontal-striped unevenness) and roughness (jaggies) as compared to a configuration in which bright sub-pixels are adjacent to each other in a row direction and dark sub-pixels are adjacent to each other in a row direction. Moreover, in a frame in which one of two sub-pixels that are adjacent to each other in a column direction is a bright sub-pixel, the other one of the two sub-pixels is a dark pixel. This holds down roughness (jaggies) as compared to the configuration in which bright pixels are adjacent to each other in the column direction and dark pixels are adjacent to each other in the column direction.

By inverting a polarity of a signal electric potential to be supplied to the data signal lines (15x and 15X) per one horizontal scanning period (1H), a feed-through direction of the electric potential while the transistor is OFF becomes opposite between the two pixels adjacent in the column direction. This holds down occurrence of flickering. Moreover, by respectively supplying signal electric potentials of opposite polarities to the adjacent two data signal lines (15x and 15X) in the same horizontal scanning period, a feed-through direction of an electric potential while the transistor is OFF becomes opposite between the two pixels disposed adjacently in the row direction. This holds down the occurrence of flickering.

One specific example of the liquid crystal panel 5e is illustrated in Fig. 37. In the liquid crystal panel in Fig. 37, a data signal line 15x is provided parallel to the pixel 100 and pixel 101, and a data signal line 15X is provided parallel to the pixel 103 and pixel 104.

One specific example of the liquid crystal panel 5e is illustrated in Fig. 37. In the liquid crystal panel in Fig. 37, the data signal line 15x is provided parallel to the pixel 100 and pixel 101, and the data signal line 15X is provided parallel to the pixel 103 and pixel 104. Further, a storage capacitor wire 18y traverses centers of the pixels 100 and 103, and the storage capacitor wire 18x traverses centers of the pixels 101 and 104.

In the embodiment, the scanning signal line 16p is disposed so as to overlap one of two edge sections of the pixel 100, which two edge sections run along the row direction, and the scanning signal line 16q is disposed so as to overlap the other one of the two edge sections of the pixel 100. From a plan view, the pixel electrodes 17c and 17d are arranged in the column direction, between the scanning signal lines 16p and 16q. Moreover, the scanning signal line 16p is disposed so as to overlap one of two edge sections of the pixel 103, which edges sections are parallel to the row direction, and the scanning signal line 16q is disposed so as to overlap the other one of the two edge sections of the pixel 103. From a plan view, the pixel electrodes 17C and 17D are arranged in a column direction between the scanning signal lines 16p and 16q.

Moreover, the scanning signal line 16q is disposed so as to overlap one of two edge sections of the pixel 101, which two edge sections run along the row direction, and the scanning signal line 16r is disposed so as to overlap the other one of the two edge sections of the pixel 101. From a plan view, the pixel electrodes 17a and 17b are arranged in the column direction between the scanning signal lines 16q and 16r. Moreover, the scanning signal line 16q is disposed so as to overlap one of two edge sections of the pixel 104, which two edge sections run along the row direction, and the scanning signal line 16r is disposed so as to overlap the other one of the two edge sections of the pixel 104. From a plan view, the pixel electrodes 17A and 17B are arranged in the column direction between the scanning signal lines 16q and 16r.

In the pixel 101, a source electrode 8a of a transistor 12a and a drain electrode 9a of the transistor 12a are provided on the scanning signal line 16q, and a source electrode 8b of a transistor 12b and a drain electrode 9b of the transistor 12b are provided on the scanning signal line 16r. The source electrode 8a is connected to the data signal line 15x. The drain electrode 9a is connected to a drain draw-out wire 27a. The drain draw-out wire 27a is connected to a contact electrode 77a and a coupling capacitor electrode 37a. The contact electrode 77a is connected to the pixel electrode 17a via a contact hole 11a. The coupling capacitor electrode 37a overlaps the pixel electrode 17b via an interlayer insulating film. As a result, a coupling capacitor C101 (see Fig. 36) between the pixel electrodes 17a and 17b is formed at a part at which the coupling capacitor electrode 37a overlaps the pixel electrode 17b. Moreover, the source electrode 8b is connected to the data signal line 15x. The drain electrode 9b is connected to a drain draw-out wire 27b. The drain draw-out wire 27b is connected to a contact electrode 77b and a coupling capacitor electrode 37b. The contact electrode 77b is connected to the pixel electrode 17b via a contact hole 11a. The coupling capacitor electrode 37b overlaps the pixel electrode 17a via an interlayer insulating film. As a result, a coupling capacitor C101 (see Fig. 36) between the pixel electrodes 17a and 17b is formed at a part at which the coupling capacitor electrode 37b overlaps the pixel electrode 17a. Furthermore, the coupling capacitor electrodes 37a and 37b overlap the storage capacitor wire 18x via a gate insulating film. As a result, storage capacitance Cha (see Fig. 36) is formed at a part at which the coupling capacitor electrode 37a overlaps the storage capacitor wire 18x, and storage capacitance Chb (see Fig. 36) is formed at a part at which the coupling capacitor electrode 37b overlaps the storage capacitor wire 18x.

As illustrated in Fig. 37, the pixel electrodes 17a and 17b, drain draw-out wires 27a and 27b, contact electrodes 77a and 77b, contact holes 11a and 11b, and coupling capacitor electrodes 37a and 37b are provided in the pixel 101 in such a manner that a planar shape and plane configuration of these members seen from a scanning signal line 16a side are identical to those seen from a scanning signal line 16b side. Moreover, an area of the scanning signal line 16q overlapped by the drain electrode 9a and drain draw-out wire 27a (parasitic capacitance Cgd between (i) the drain electrode 9a and drain draw-out wire 27a and (ii) the scanning signal line 16q) is substantially of a same size as an area of the scanning signal line 16r overlapped by the drain electrode 9b and drain draw-out wire 27b (parasitic capacitance Cgd between (i) the drain electrode 9b and drain draw-out wire 27b and (ii) the scanning signal line 16r). As a result, a feed-through voltage in a case where a sub-pixel including the pixel electrode 17a is a bright sub-pixel and a feed-through voltage in a case where a sub-pixel including the pixel electrode 17b is a bright sub-pixel become identical to each other. This reduces a possibility that image sticking occurs to the bright sub-pixel, caused by a difference between the two feed-through voltages. The pixel 100 has a configuration (shape and arrangement of members and their connection relationships) identical to that of the pixel 101.

Moreover, in the pixel 104, a source electrode 8A of a transistor 12A and a drain electrode 9A of the transistor 12A are provided on the scanning signal line 16q, and a source electrode 8B of a transistor 12B and a drain electrode 9B of the transistor 12B are provided on the scanning signal line 16r. The source electrode 8A is connected to the data signal line 15X. The drain electrode 9A is connected to a drain draw-out wire 27A. The drain draw-out wire 27A is connected to a coupling capacitor electrode 37A and a contact electrode 77A. The contact electrode 77A is connected to the pixel electrode 17B via a contact hole 11A. The coupling capacitor electrode 37A overlaps the pixel electrode 17A via an interlayer insulating film. As a result, a coupling capacitor C104 (see Fig. 36) between the pixel electrodes 17A and 17B is formed. Moreover, the source electrode 8B is connected to the data signal line 15X. The drain electrode 9B is connected to a drain draw-out wire 27B. The drain draw-out wire 27B is connected to a coupling capacitor electrode 37B and a contact electrode 77B. The contact electrode 77B is connected to the pixel electrode 17A via a contact hole 11B. The coupling capacitor electrode 37B overlaps the pixel electrode 17B via an interlayer insulating film. As a result, the coupling capacitor C104 (see Fig. 36) between the pixel electrodes 17A and 17B is formed. Furthermore, the contact electrodes 77A and 77B overlap the storage capacitor wire 18x via a gate insulating film. This forms storage capacitances ChA and ChB.

As illustrated in Fig. 37, the pixel electrodes 17A and 17B, drain draw-out wires 27A and 27B, contact electrodes 77A and 77B, contact holes 11A and 11B, and coupling capacitor electrodes 37A and 37B are disposed in the pixel 104 in such a manner that a planar shape and plane configuration of these members seen from a scanning signal line 16a side is identical to those seen from a scanning signal line 16b side. Moreover, an area of the scanning signal line 16q overlapped by the drain electrode 9A and drain draw-out wire 27A (parasitic capacitance Cgd between (i) the drain electrode 9A and drain draw-out wire 27A and (ii) the scanning signal line 16q) is substantially of a same size as an area of the scanning signal line 16r overlapped by the drain electrode 9B and drain draw-out wire 27B (parasitic capacitance Cgd between (i) the drain electrode 9B and drain draw-out wire 27B and (ii) the scanning signal line 16r). As a result, a feed-through voltage in a case where the sub-pixel including the pixel electrode 17a is a bright sub-pixel and a feed-through voltage in a case where the sub-pixel including the pixel electrode 17b is a bright sub-pixel become identical to each other. This reduces the possibility that image sticking occurs to the bright sub-pixel, caused by a difference between the two feed-through voltages. The pixel 103 has a configuration (shape and arrangement of members and their connection relationship) identical to that of the pixel 104.

Fig. 38 is a timing chart showing a driving method the present liquid crystal display device (liquid crystal display device of a normally black mode) including the liquid crystal panel 5e. Gp to Gs are gate on-pulse signals that are supplied to the scanning signal lines 16p to 16s, and Ka to Kf are brightness of respective sub-pixels including the pixel electrodes 17a to 17f.

In this driving method, as illustrated in Fig. 38, each of frames in a first period (e.g., 60 consecutive frames) selects the scanning signal lines 16s, 16r, 16q, and 16p in this order. This makes the sub-pixels including the pixel electrode 17e be "bright", the sub-pixels including the pixel electrode 17f be "dark", the sub-pixels including the pixel electrode 17a be "bright", the sub-pixels including the pixel electrode 17b be "dark", the sub-pixels including the pixel electrode 17c be "bright", and the sub-pixels including the pixel electrode 17d be "dark". As a whole, the sub-pixels become as illustrated in Fig. 39(a). Further, in each of frames in a second period subsequent to the first period (e.g., 60 consecutive frames), the scanning signal lines 16p, 16q, 16r, and 16s are selected in this order. This makes the sub-pixels including the pixel electrode 17c be "dark", the sub-pixels including the pixel electrode 17d be "bright", the sub-pixels including the pixel electrode 17a be "dark", the sub-pixels including the pixel electrode 17b be "bright", the sub-pixels including the pixel electrode 17e be "dark", and the sub-pixels including the pixel electrode 17f be "bright". As a whole, the sub-pixels become as illustrated in Fig. 39(b). Similarly, in each of frames in a third period (e.g., 60 consecutive frames), the scanning signal lines 16s, 16r, 16q, and 16p are selected in this order. This makes the sub-pixels including the pixel electrode 17e be "bright", the sub-pixels including the pixel electrode 17f be "dark", the sub-pixels including the pixel electrode 17a be "bright", the sub-pixels including the pixel electrode 17b be "dark", the sub-pixels including the pixel electrode 17c be "bright", and the sub-pixels including the pixel electrode 17d be "dark". As a whole, the sub-pixels become as illustrated in Fig. 39(c). Similarly, in each of frames in a fourth period (e.g., 60 consecutive frames) subsequent to the third period, the scanning signal lines 16p, 16q, 16r, and 16s are selected in this order. This makes the sub-pixels including the pixel electrode 17c be "dark", the sub-pixels including the pixel electrode 17d be "bright", the sub-pixels including the pixel electrode 17a be "dark", the sub-pixels including the pixel electrode 17b be "bright", the sub-pixels including the pixel electrode 17e be "dark", and the sub-pixels including the pixel electrode 17f be "bright". As a whole, the sub-pixels become as illustrated in Fig. 39(d). Each of the first to fourth periods in Fig. 38 may be a n (e.g., n = 60) consecutive frames period, or may be a period starting from at a time when a power supply of the liquid crystal display device is turned on to a time when the power supply thereof is turned off. Moreover, in a case where the liquid crystal display device is applied to a liquid crystal television, the periods may be switched over in accordance with switching of channels.

Yet another configuration of the present embodiment is illustrated in Fig. 57. In the liquid crystal panel as illustrated in Fig. 57, one scanning signal line is disposed per gap between two adjacent pixel regions. A transistor connected to a scanning signal line that is disposed corresponding to one of gaps on either side of a pixel region is connected to one of two pixel electrodes disposed in the pixel region; a transistor connected to a scanning signal line disposed corresponding to the other one of gaps on either side of the pixel region is connected the other one of the two pixel electrodes disposed in the pixel region. For example, a scanning signal line 16q is disposed corresponding to a gap between the pixels 100 and 101, a scanning signal line 16r is disposed corresponding to a gap between the pixels 101 and 102, and a storage capacitor wire 18x is disposed traversing the pixel 101. Moreover, the pixel 101 includes: a pixel electrode 17b Z-shaped when seen along the column direction (extending direction of data signal line 15x); two pixel electrodes 17a and 17u disposed on either side of the pixel electrode 17b so as to fit with the pixel electrode 17b; and a coupling capacitor electrode 37a that overlaps the pixel electrode 17b via an interlayer insulating film. Transistors 12a and 12d are formed on the scanning signal line 16q, transistors 12b and 12e are formed on the scanning signal line 16r; a drain electrode of the transistor 12a is connected to the pixel electrode 17a via a drain draw-out wire 27a and a contact hole 11a, a drain electrode of the transistor 12b is connected to the pixel electrode 17b via a contact hole 11b, and source electrodes of the transistors Tr12a and 12b are connected to the data signal line 15x.

The coupling capacitor electrode 37a (overlapping the pixel electrode 17b via the interlayer insulating film) is shaped as a parallelogram, to which connecting wires 119a and 119u are connected on either of its sides. Further, the connecting wire 119a is connected to the pixel electrode 17a via a contact hole 11ai, and the connecting wire 119u is connected to the pixel electrode 17u via a contact hole 11ui. As a result, a coupling capacitor between the pixel electrodes 17a and 17u and the pixel electrode 17b is formed at a part at which the coupling capacitor electrode 37a overlaps the pixel electrode 17b.

Moreover, in the pixel 101, storage capacitor electrodes 67b and 67u are aligned in the row direction (extending direction of the scanning signal line) so as to overlap the storage capacitor wire 18x via the gate insulating film. The pixel electrode 17b is connected to the storage capacitor electrode 67b via a contact hole 11bj, and the pixel electrode 17u is connected to the storage capacitor electrode 67u via a contact hole 11uj. As a result, storage capacitance between the pixel electrode 17b and the storage capacitor wire 18x is formed at a part at which the storage capacitor electrode 67b overlaps the storage capacitor wire 18x, and storage capacitance between the pixel electrodes 17a and 17u and the storage capacitor wire 18x is formed at a part at which the storage capacitor electrode 67u overlaps the storage capacitor wire 18x. According to such a pixel configuration, the drain draw-out wire is shortened as compared to the configuration of, for example, Fig. 37.

In the liquid crystal panel illustrated in Fig. 57, a gap between the pixel electrode 17b and the pixel electrode 17a and a gap between the pixel electrode 17b and the pixel electrode 17u may serve as an alignment control structure. In the liquid crystal display device including the present liquid crystal panel, scanning is carried out in a downward direction in Fig. 57 (direction towards the scanning signal line 16r from the scanning signal line 16q) in predetermined frames, and scanning is carried out in an upwards direction in Fig. 57 (direction towards the scanning signal line 16q from the scanning signal line 16r) in the other frames. In the frames in which scanning is carried out in the downward direction in Fig. 57, the sub-pixel including the pixel electrode 17a and the sub-pixel including the pixel electrode 17u are dark sub-pixels, and the sub-pixel including the pixel electrode 17b is a bright sub-pixel; and in the frame in which scanning is carried out in the upwards direction in Fig. 57, the sub-pixel including the pixel electrode 17a and sub-pixel including the pixel electrode 17u are bright sub-pixels, and the sub-pixel including the pixel electrode 17b is a dark sub-pixel.

In the present embodiment, the present liquid crystal display unit and the liquid crystal display device are configured as described below. Namely, two polarizing plates A and B are adhered on surfaces of the liquid crystal panel (5a to 5e) on either side of the liquid crystal panel so that a polarization axis of the polarizing plate A and a polarization axis of the polarizing plate B intersect at right angles to each other: The polarizing plate may be mounted with an optical compensation sheet or the like if necessary. Next, as illustrated in Fig. 42(a), the liquid crystal panel is connected to a driver (gate driver 202, source driver 201). In the embodiment, a connection of the driver by a TCP (Tape Career Package) method is described as one example. First, an ACF (Anisotropic Conductive Film) is provisionally compressed to a terminal section of the liquid crystal panel. Next, a TCP on which the driver is disposed is punched out from a carrier tape; the TCP is aligned with a panel terminal electrode, and thereafter the TCP is heated and firmly compressed. Thereafter, a circuit substrate 203 (PWB: Printed wiring board) for linking the driver TCP together and an input terminal of the TCP is connected by the ACF. This obtains the liquid crystal display unit 200. Thereafter, as illustrated in Fig. 42(b), the drivers (201 and 202) of the liquid crystal display unit are connected to a display control circuit 209 via the circuit substrate 203, to integrate the drivers with the lighting device (backlight unit) 204. This obtains the liquid crystal display device 210.

Fig. 43(a) illustrates a configuration of a source driver in the present liquid crystal display device in a case where a refreshing period is provided. As illustrated in Fig. 43(a), the source driver in this case includes, for each data signal line, a buffer 31, a data output switch SWa, and a refreshing switch SWb. The buffer 31 receives corresponding data d, and an output of the buffer 31 is connected to an output terminal of the data signal line via the data output switch SWa. Moreover, output terminals of two adjacent data signal lines are connected to each other via the refreshing switch SWb. That is to say, the refreshing switch SWb are connected in series, and one of ends of a circuit made up of the serially-connected refreshing switches SWb is connected to a refreshing electric potential supply source 35 (Vcom). In the embodiment, a gate terminal of the data output switch SWa receives a charge sharing signal (sh) via the inverter 33, and the gate terminal of the refreshing switch SWb receives an sh signal.

The source driver illustrated in Fig. 43(a) may also be configured as illustrated in Fig. 43(b). Namely, each of refreshing switches SWc is connected to just the corresponding data signal line and the refreshing electric potential supply source 35 (Vcom), and the refreshing switch SWc is not serially connected to each other. This allows prompt supply of the refreshing electric potential to the data signal lines.

In the embodiment, the foregoing configuration of the source driver has the refreshing electric potential as Vcom. However, the present invention is not limited to this. For example, an appropriate refreshing electric potential can be calculated based on (i) a level of a signal electric potential supplied to the same data signal line in one previous horizontal scanning period and (ii) a signal electric potential to be supplied to the current horizontal scanning period, and this calculated refreshing electric potential may be supplied to the data signal line. A configuration of the source driver in this case is as illustrated in Fig. 44. In the configuration, each of a data output buffer 110, a refreshing buffer 111, a data output switch SWa, and a refreshing switch SWe are provided per respective data signal line. Corresponding data d is inputted into the data output buffer 110, and an output of the data output buffer 110 is connected to an output terminal of the data signal line via the data output switch SWa. To the refreshing buffer 111, corresponding non-image data N (data corresponding to an optimum refreshing electric potential determined based on (i) a level of a signal electric potential supplied in one previous horizontal scanning period and (ii) a signal electric potential to be supplied in a current horizontal scanning period) is inputted, and an output of the refreshing buffer 111 is connected to an output terminal of the data signal line via the refreshing switch SWe.

As such, by providing a refreshing period (for example, a period in which charge sharing is carried out) at a beginning of the horizontal scanning periods and supplying a refreshing electric potential (e.g., Vcom) to the data signal lines during the refreshing period, it is possible to prevent unevenness in an achieved electric potential (charge rate) in the current horizontal scanning period, caused by a difference in level of a signal electric potential supplied to the same data signal line in one previous horizontal scanning period from that of the current horizontal scanning period, in a liquid crystal display device that is difficult to fully charge, such as a large-sized, high definition or high-speed driven liquid crystal display device. Hence, the liquid crystal display device of the present embodiment is suitable for a liquid crystal display device of a digital cinema standard having 2160 scanning signal lines and a liquid crystal display device of a super-high vision standard having 4320 scanning signal lines.

The "polarity of an electric potential" in the present application denotes high (positive) and low (negative) with respect to a standard electric potential. The standard electric potential in the present embodiment may be Vcom (common electric potential) which is an electric potential of a common electrode (counter electrode) or may be any other arbitrary electric potential.

Fig. 45 is a block diagram illustrating a configuration of the present liquid crystal display device. As illustrated in Fig. 45, the present liquid crystal display device includes a display section (liquid crystal panel), a source driver (SD), a gate driver (GD), and a display control circuit. The source driver drives data signal lines, the gate driver drives scanning signal lines, and the display control circuit controls the source driver and the gate driver.

The display control circuit receives, from an external signal source (e.g., a tuner), a digital video signal Dv representing an image to be displayed, a horizontal sync signal HSY and vertical sync signal VSY corresponding to the digital video signal Dv, and a control signal Dc for controlling a display operation. Moreover, based on these received signals Dv, HSY, VSY, and Dc, the display control circuit generates, as signals for displaying on the display section the image represented by the digital video signal Dv, a data start pulse signal SSP, data clock signal SCK, charge sharing signal sh, digital image signal DA (signal corresponding to the video signal Dv) representing the image to be displayed, gate start pulse signal GSP, gate clock signal GCK, and gate driver output control signal (scanning signal output control signal) GOE. The display control circuit then outputs these signals.

More specifically, the display control circuit (i) outputs the video signal Dv as the digital image signal DA, after carrying out timing adjustment and the like of the video signal Dv by use of an inner memory as necessary, (ii) generates the data clock signal SCK as a signal made up of a pulse corresponding to pixels in the image that the digital image signal DA represents, (iii) generates the data start pulse signal SSP as a signal that, based on the horizontal sync signal HSY, becomes a high-level (H level) for just a predetermined time per horizontal scanning period, (iv) generates a gate start pulse signal GSP as a signal that, based on the vertical sync signal VSY, becomes a H level for just a predetermined time per frame period (one vertical scanning period), (v) generates a gate clock signal GCK based on the horizontal sync signal HSY, and (vi) generates a charge sharing signal sh and a gate driver output control signal GOE based on the horizontal sync signal HSY and control signal Dc.

Among the signals that are generated in the display control circuit as aforementioned, the digital image signal DA, the charge sharing signal sh, a signal POL that controls a polarity of the signal electric potential (data signal electric potential), the data start pulse signal SSP, and the data clock signal SCK are inputted into the source driver; whereas the gate start pulse signal GSP, gate clock signal GCK, and gate driver output control signal GOE are inputted into the gate driver.

The source driver successively generates, per one horizontal scanning period, an analog electric potential (signal electric potential) that is equivalent to a pixel value in the scanning signal lines of the image represented by the digital image signal DA, based on the digital image signal DA, data clock signal SCK, charge sharing signal sh, data start pulse signal SSP, and polarity inversion signal POL. The source driver then outputs these data signals to the data signal lines (e.g., 15x and 15X).

The gate driver generates a gate on-pulse signal based on the gate start pulse signal GSP, gate clock signal GCK, and gate driver output control signal GOE, and outputs this generated signal to the scanning signal line. This causes the scanning signal lines to be selectively driven.

By driving the data signal lines and scanning signal lines of the display section (liquid crystal panel) by the source driver and gate driver as described above, a signal electric potential is written into a pixel electrode from the data signal lines via a transistor (TFT) connected to the selected scanning signal line. As a result, a voltage is applied to a liquid crystal layer of the sub-pixels, which controls the amount of light transmitted from the backlight. This causes display of the image represented by the digital video signal Dv on the sub-pixels.

The following description explains one configuration example of the present liquid crystal display device in a case where the liquid crystal display device is applied to a television receiver. Fig. 46 is a block diagram illustrating a configuration of a liquid crystal display device 800 for use in a television receiver. The liquid crystal display device 800 includes: a liquid crystal display unit 84; a Y/C separation circuit 80, video chroma circuit 81; a A/D converter 82; a liquid crystal controller 83; a backlight driving circuit 85; a backlight 86; a microcomputer (microcomputer) 87; and a gradation circuit 88. The liquid crystal display unit 84 includes a liquid crystal panel, and a source driver and gate driver for driving the liquid crystal panel.

In the liquid crystal display device 800 of this configuration, first, a composite color video signal Scv as a television signal is inputted into the Y/ C separation circuit 80 from outside, and the composite color video signal Scv is divided into a brightness signal and a color signal. The brightness signal and color signal are converted by the video chroma circuit 81 into analog RGB signals that correspond to the light's three principle colors, and further the analog RGB signals are converted by the A/ D converter 82 into digital RGB signals. The digital RGB signals are inputted into the liquid crystal controller 83. Moreover, in the Y/C separation circuit 80, horizontal and vertical sync signals are also retrieved from the composite color video signal Scv inputted from the outside. These sync signals also are inputted into the liquid crystal controller 83 via the microcomputer 87.

In the liquid crystal display unit 84, the digital RGB signals are inputted from the liquid crystal controller 83 at a predetermined timing, together with a timing signal based on the sync signal. Moreover, in the gradation circuit 88, gradation electric potentials are generated for each of the three principle colors of color display R, G, B. These gradation electric potentials are also supplied to the liquid crystal display unit 84. In the liquid crystal display unit 84, a driving signal (data signal = signal electric potential, scanning signal etc.) is generated by the source driver, gate driver and the like provided inside, based on the RGB signals, timing signals, and gradation electric potentials, and a color image is displayed on the inner liquid crystal panel based on the driving signal. In order to display an image by the liquid crystal display unit 84, it is necessary to irradiate light from a rear side of liquid crystal panel inside of the liquid crystal display unit. With the liquid crystal display device 800, light is irradiated on a back side of the liquid crystal panel by having the backlight driving circuit 85 drive the backlight 86 under control of the microcomputer 87. Control of the entire system including the foregoing processes is carried out by the microcomputer 87. Video signals inputted from the outside (composite color video signal) may be not just video signals based on television broadcast, but may also be video signals captured by a camera and video signals supplied via Internet connection. With use of the liquid crystal display device 800, it is possible to perform image display based on various video signals.

In a case where an image based on television broadcast is displayed by the liquid crystal display device 800, a tuner section 90 is connected to the liquid crystal display device 800 as illustrated in Fig. 47, thus configuring the present television receiver 601. The tuner section 90 extracts signals of channels to be received among waves (high frequency signals) that are received by an antenna (not illustrated), and converts them to an intermediate frequency signal. By detecting this intermediate frequency signal, composite color video signals Scv as a television signal are taken out. The composite color video signal Scv is, as already described, inputted into the liquid crystal display device 800, and an image based on this composite color video signal Scv is displayed on the liquid crystal display device 800.

Fig. 48 is an exploded perspective view of an example illustrating one configuration of the present television receiver. As illustrated in Fig. 48, the present television receiver 601 includes, as its constituents, the liquid crystal display device 800, a first housing 801 and a second housing 806. The first housing 801 and second housing 806 sandwiches the liquid crystal display device 800 so that the liquid crystal display device 800 is surrounded by the two housings. The first housing 801 has an opening 801 a that transmits an image displayed on the liquid crystal display device 800. Moreover, the second housing 806 covers a rear side of the liquid crystal display device 800, and includes an operation circuit 805 for operating the display device 800. Further, the second housing 806 has a supporting member 808 disposed to its lower side.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

A liquid crystal panel and a liquid crystal display device, each of the present invention, are suitably used for a liquid crystal television, for example.

## Claims

1. An active matrix substrate comprising:
pixel electrodes;
scanning signal lines; and
transistors, each of the transistors being connected to one of the scanning signal lines,
wherein:
two pixel electrodes are disposed in a corresponding pixel region in such a manner that the two pixel electrodes are connected to each other via a capacitor,
the pixel region is associated with two scanning signal lines, and
one of the transistors which is connected to one of the two scanning signal lines associated with the pixel region is connected to one of the two pixel electrodes disposed in the pixel region, and another one of the transistors which is connected to the other one of the two scanning signal lines associated with the pixel region is connected to the other one of the two pixel electrodes disposed in the pixel region.

2. The active matrix substrate according to claim 1, wherein:
the two scanning signal lines associated with the pixel region are (i) disposed on either side of the pixel region or (ii) disposed so that the two scanning signal lines are overlapped by either end of the pixel region.

3. The active matrix substrate according to claim 1 or 2, wherein:
the transistor which is connected to one of the two pixel electrodes disposed in the pixel region and the transistor which is connected to the other one of the two pixel electrodes disposed in the pixel region are connected to a same data signal line.

4. The active matrix substrate according to any one of claims 1 to 3, wherein:
the pixel region further includes:
a coupling capacitor electrode being electrically connected to one of the two pixel electrodes disposed in the pixel region,
the other one of the two pixel electrodes disposed in the pixel region overlapping the coupling capacitor electrode in such a manner that an insulating layer is sandwiched between the other one of the two pixel electrodes and the coupling capacitor electrode.

5. The active matrix substrate according to claim 2, wherein:
the pixel region further includes:
two coupling capacitor electrodes,
one of the two coupling capacitor electrodes being electrically connected to one of the two pixel electrodes disposed in the pixel region, the one of the two coupling capacitor electrodes being overlapped by the other one of the two pixel electrodes disposed in the pixel region to which the one of the two coupling capacitor electrodes itself is not electrically connected,
the other one of the two coupling capacitor electrodes being electrically connected to the other one of the two pixel electrodes disposed in the pixel region, the other one of the two coupling capacitor electrodes being overlapped by the one of the two pixel electrodes disposed in the pixel region to which the other one of the two coupling capacitor electrodes itself is not electrically connected,
the pixel electrodes overlapping the coupling capacitor electrodes in such a manner that an insulating layer is sandwiched therebetween.

6. The active matrix substrate according to claim 5, wherein:
the two pixel electrodes, and the coupling capacitor electrodes electrically connected to respective one and the other of the two pixel electrodes being disposed in such a manner that a planar shape and plane configuration of the pixel electrodes and coupling capacitor electrodes seen from a side of one of the two scanning signal lines are identical to those seen from a side of the other one of the two scanning signal lines.

7. The active matrix substrate according to claim 4, wherein:
the pixel region further includes:
a storage capacitor wire,
wherein the storage capacitor wire forms storage capacitance with respective coupling capacitor electrodes.

8. The active matrix substrate according to any one of claims 1 to 3, wherein:
at least one of the two pixel electrodes disposed in the pixel region forms storage capacitance with a scanning signal line associated with a pixel region arranged previously to the pixel region.

9. The active matrix substrate according to any one of claims 1 to 8, wherein:
the two scanning signal lines associated with the pixel region are disposed so that two pixel regions aligned in a row direction are associated therewith, each of the two pixel regions including two pixel electrodes aligned in a column direction, where the row direction is a direction in which the scanning signal lines extend,
one of the transistors which is connected to one of two pixel electrodes that are disposed adjacent to each other in the row direction is connected to one of the two scanning signal lines associated with the two pixel regions, and another one of the transistors which is connected to the other one of the two pixel electrodes that are disposed adjacent to each other in the row direction is connected to the other one of the two scanning signal lines associated with the two pixel regions.

10. The active matrix substrate according to any one of claims 1 to 9, wherein:
an area in which a conductive electrode of the transistor connected to one of the two pixel electrodes disposed in the pixel region and a conductive part electrically connected to that conductive electrode overlaps the scanning signal line connected to that transistor, is of a same size as an area in which a conductive electrode of the transistor connected to the other one of the two pixel electrodes and a conductive part electrically connected to that conductive electrode overlaps the scanning signal line connected to that transistor.

11. An active matrix substrate comprising:
pixel electrodes;
scanning signal lines; and
transistors, each of the transistors being connected to one of the scanning signal lines,
wherein:
a gap between two adjacent pixel regions is associated with respective one of the scanning signal lines,
two pixel electrodes are disposed in a corresponding pixel region in such a manner that the two pixel electrodes are connected to each other via a capacitor,
one of the transistors, the one of the transistors being connected to one of the scanning signal lines which is associated with one of gaps on either side of the pixel region, is connected to one of the two pixel electrodes disposed in the pixel region, and another one of the transistors, the another one of the transistors being connected to another one of the scanning signal lines which is associated with the other one of the gaps on either side of the pixel region, is connected to the other one of the two pixel electrodes disposed in the pixel region.

12. The active matrix substrate according to claim 11, wherein:
the transistor connected to the one of the two pixel electrodes disposed in the pixel region and the transistor connected to the other one of the two pixel electrodes disposed in the pixel region are connected to a same data signal line.

13. A liquid crystal display device comprising an active matrix substrate as set forth in claim 1, wherein:
in predetermined frames, the one of the two scanning signal lines is scanned for writing in a signal electric potential to the pixel electrode being connected to the one of the two scanning signal lines, via the transistor connected to the one of the two scanning signal lines, and
in other frames other than the predetermined frames, the other one of the two scanning signal lines is scanned for writing in a signal electric potential to the pixel electrode being connected to the other one of the two scanning signal lines, via the transistor connected to the other one of the two scanning signal lines.

14. A liquid crystal display device comprising:
an active matrix substrate as set forth in claim 11, wherein:
in each of frames, the scanning signal lines are successively scanned for writing in a signal electric potential to respective pixel electrodes connected to the scanning signal lines, via corresponding transistors,
the scanning signal lines being scanned in the predetermined frames in a direction opposite to that of the frames other than the predetermined frames.

15. The liquid crystal display device according to claim 13, wherein:
the predetermined frames scanning the one of the two scanning signal lines include an identical number of (i) frames in which a signal electric potential of a positive polarity is written into the pixel electrode and (ii) frames in which a signal electric potential of a negative polarity is written into the pixel electrode, and
the other frames other than the predetermined frames scanning the other one of the two scanning signal lines include an identical number of (i) frames in which a signal electric potential of a positive polarity is written into the pixel electrode and (ii) frames in which a signal electric potential of a negative polarity is written into the pixel electrode.

16. The liquid crystal display device according to claim 15, wherein:
the scanning signal line to be scanned of the two scanning signal lines is alternated per one frame and a polarity of a signal electric potential corresponding to a same pixel is inverted per two frames, or, the scanning signal line to be scanned of the two scanning signal lines is alternated per two consecutive frames and a polarity of a signal electric potential corresponding to a same pixel is inverted per one frame.

17. The liquid crystal display device according to claim 13 or 14, wherein:
after one of two pixel electrodes disposed in a corresponding pixel is discharged, a signal electric potential is written into the other one of the two pixel electrodes disposed in the pixel.

18. The liquid crystal display device according to claim 13 or 14, wherein:
the transistor connected to one of two pixel electrodes disposed in a corresponding pixel is turned off in a state in which a common electrode electric potential is being supplied to the two pixel electrodes provided in the pixel, and thereafter a signal electric potential is written into the other one of the two pixel electrodes disposed in the pixel.

19. The liquid crystal display device according to claim 18, wherein:
in a single horizontal scanning period, the transistor connected to one of the two pixel electrodes disposed in the pixel is turned off in a state in which a common electrode electric potential is being supplied to the two pixel electrodes provided in the pixel and thereafter a signal electric potential is written into the other one of the two pixel electrodes disposed in the pixel.

20. The liquid crystal display device according to claim 18, wherein:
the liquid crystal display device is a normally black liquid crystal display device, and after elapse of 1/2 of a vertical scanning period to 4/5 of the vertical scanning period after writing in the signal electric potential to one of the two pixel electrodes disposed in the pixel, the transistors connected to the pixel electrodes disposed in the pixel region are turned off in a state in which a common electrode electric potential is supplied to both the two pixel electrodes.

21. An active matrix substrate comprising:
a first data signal line;
a first to fourth scanning signal lines;
a first to fourth transistors, the first transistor being connected to the first data signal line and the first scanning signal line, the second transistor being connected to the first data signal line and the second scanning signal line, the third transistor being connected to the first data signal line and the third scanning signal line, and the fourth transistor being connected to the first data signal line and the fourth scanning signal line; and
a first to fourth pixel electrodes, the first pixel electrode and the second pixel electrode being disposed in a first pixel region, and the third pixel electrode and the fourth pixel electrode being disposed in a second pixel region arranged adjacent to the first pixel region in a column direction, where the column direction is a direction in which the first data signal lines extend,
the first pixel electrode and the second pixel electrode being connected to each other via a capacitor, and the third pixel electrode and the fourth pixel electrode being connected to each other via a capacitor, one of the first transistor and the second transistor being connected to the first pixel electrode and the other one of the first transistor and the second transistor being connected to the second pixel electrode, and one of the third transistor and the fourth transistor being connected to the third pixel electrode and the other one of the third transistor and the fourth transistor being connected to the fourth pixel electrode.

22. The active matrix substrate according to claim 21, further comprising:
a fifth and sixth scanning signal lines;
a fifth and sixth transistors, the fifth transistor being connected to the first data signal line and the fifth scanning signal line and the sixth transistor being connected to the first data signal line and the sixth scanning signal line; and
a fifth and sixth pixel electrodes, the fifth pixel electrode and the sixth pixel electrode being provided in a third pixel region disposed adjacent to the first pixel region in the column direction, the fifth pixel electrode and the sixth pixel electrode being connected to each other via a capacitor,
the third pixel electrode, the fourth pixel electrode, the first pixel electrode, the second pixel electrode, the fifth pixel electrode, and the sixth pixel electrode being aligned in the column direction in this order, and
the first pixel electrode forming storage capacitance with the fourth scanning signal line, and the second pixel electrode forming storage capacitance with the fifth scanning signal line.

23. The active matrix substrate according to claim 21, wherein:
the first pixel electrode forms storage capacitance with the second scanning signal line, and the second pixel electrode forms storage capacitance with the first scanning signal line.

24. The active matrix substrate according to claim 21, further comprising:
a second data signal line;
a seventh and eighth transistors, the seventh transistor being connected to the second data signal line and the first scanning signal line and the eighth transistor being connected to the second data signal line and the second scanning signal line; and
a seventh and eighth pixel electrodes being disposed in a fourth pixel region arranged adjacent to the first pixel region in a row direction, the seventh and eighth pixel electrodes being connected to each other via a capacitor,
the first and second pixel electrodes being disposed adjacent to each other in the column direction and the seventh and eighth pixel electrodes being disposed adjacent to each other in the column direction, and the first and seventh pixel electrodes being disposed adjacent to each other in the row direction and the second and eighth pixel electrodes being disposed adjacent to each other in the row direction,
the first transistor being connected to the first pixel electrode and the second transistor being connected to the second pixel electrode, and the seventh transistor being connected to the eighth pixel electrode and the eighth transistor being connected to the seventh pixel electrode.

25. The active matrix substrate according to claim 21, further comprising:
a second data signal line;
a seventh and eighth transistors, the seventh transistor being connected to the second data signal line and the first scanning signal line and the eighth transistor being connected to the second data signal line and the second scanning signal line; and
a seventh and eighth pixel electrodes, the seventh and eighth pixel electrodes being provided in a fourth pixel region disposed adjacent to the first pixel region in a row direction, the seventh and eighth pixel electrodes being connected to each other via a capacitor,
the first and second pixel electrodes being disposed adjacent to each other in the column direction and the seventh and eighth pixel electrodes being disposed adjacent to each other in the column direction, and the first and seventh pixel electrodes being disposed adjacent to each other in the row direction and the second and eighth pixel electrodes being disposed adjacent to each other in the row direction,
the first transistor being connected to the first pixel electrode and the second transistor being connected to the second pixel electrode, and the seventh transistor being connected to the seventh pixel electrode and the eighth transistor being connected to the eighth pixel electrode.

26. An active matrix substrate comprising:
a first and second data signal lines;
a first and second scanning signal lines;
transistors; and
a first to eighth pixel electrodes,
wherein:
two of the transistors are connected to the first data signal line and the first scanning signal line, two of the transistors are connected to the first data signal line and the second scanning signal line, two of the transistors are connected to the second data signal line and the first scanning signal line, and two of the transistors are connected to the second data signal line and the second scanning signal line,
the first and second pixel electrodes are disposed in a first pixel region, the third and fourth pixel electrodes are disposed in a second pixel region arranged adjacent to the first pixel region in a column direction, the fifth and sixth pixel electrodes are disposed in a third pixel region arranged adjacent to the first pixel region in the column direction, and the seventh and eighth pixel electrodes are disposed in a fourth pixel region arranged adjacent to the first pixel region in a row direction, the first pixel electrode and the seventh pixel electrode being disposed adjacent to each other in the row direction, and the second pixel electrode and the eighth pixel electrode being disposed adjacent to each other in the row direction, where the row direction is a direction in which the first data signal line extends,
one of the two transistors connected to the first data signal line and the first scanning signal line is connected to the first pixel electrode and the other one of the two transistors connected to the first data signal line and the first scanning signal line is connected to the fourth pixel electrode,
one of the two transistors connected to the first data signal line and the second scanning signal line is connected to the second pixel electrode and the other one of the two transistors connected to the first data signal line and the second scanning signal line is connected to the fifth pixel electrode,
one of the two transistors connected to the second data signal line and the first scanning signal line is connected to the eighth pixel electrode, and
one of the two transistors connected to the second data signal line and the second scanning signal line is connected to the seventh pixel electrode.

27. The active matrix substrate according to any one of claims 1 and 24 to 26, further comprising:
a storage capacitor wire, wherein:
the storage capacitor wire forms storage capacitance with the first pixel electrode and with the second pixel electrode.

28. The active matrix substrate according to any one of claims 21 to 27, wherein:
in a case where the active matrix substrate is seen from a planar view, the first pixel electrode is disposed between the first scanning signal line and the second scanning signal line by whole or by part, the part of the first pixel electrode being the first pixel electrode excluding its edge sections, and the second pixel electrode is disposed between the first scanning signal line and the second scanning signal line by whole or by part, the part of the second pixel electrode being the second pixel electrode excluding its edge sections.

29. The active matrix substrate according to any one of claims 21 to 28, wherein:
an area in which a conductive electrode of the first transistor and a conductive part electrically connected to the conductive electrode of the first transistor overlaps the first scanning signal line is of a same size as an area in which a conductive electrode of the second transistor and a conductive part electrically connected to the conductive electrode of the second transistor overlaps the second scanning signal line.

30. The active matrix substrate according to claim 27, further comprising:
a storage capacitor electrode being formed in a same layer as conductive electrodes of the first and second transistors, the storage capacitor electrode being electrically connected to one of the first and second pixel electrodes and overlapping the storage capacitor wire in such a manner that a gate insulating layer is sandwiched between the storage capacitor electrode and the storage capacitor wire.

31. The active matrix substrate according to any one of claims 21 to 30, further comprising:
a coupling capacitor electrode being formed in a same layer as conductive electrodes of the first and second transistors, the coupling capacitor electrode being electrically connected to one of the first and second pixel electrodes and being overlapped by the other one of the first and second pixel electrodes in such a manner that an interlayer insulating layer is sandwiched between the coupling capacitor electrode and the other one of the first and second pixel electrodes.

32. The active matrix substrate according to claim 27, further comprising:
a coupling capacitor electrode formed in a same layer as conductive electrodes of the first and second transistors, the coupling capacitor electrode being electrically connected to one of the first and second pixel electrodes and being overlapped by the other one of the first and second pixel electrodes in such a manner that an interlayer insulating layer is sandwiched between the coupling capacitor electrode and the other one of the first and second pixel electrodes, and further overlapping by the storage capacitor wire in such a manner that a gate insulating layer is sandwiched between the coupling capacitor electrode and the storage capacitor wire.

33. The active matrix substrate according to claim 22 or 23, further comprising:
a storage capacitor electrode formed in a same layer as conductive electrodes of the first and second transistors, the storage capacitor electrode being electrically connected to one of the first and second pixel electrodes and overlapping any one of the scanning signal lines in such a manner that a gate insulating layer is sandwiched between the storage capacitor electrode and the any one of the scanning signal lines.

34. The active matrix substrate according to any one of claims 21 to 30, further comprising:
a first coupling capacitor electrode being overlapped by the second pixel electrode in such a manner that an interlayer insulating layer is sandwiched between the first coupling capacitor electrode and the second pixel electrode; and
a second coupling capacitor electrode being overlapped by the first pixel electrode in such a manner that an interlayer insulating layer is sandwiched between the second coupling capacitor electrode and the first pixel electrode,
wherein:
the first coupling capacitor electrode is connected to a first draw-out wire in an identical layer, the first draw-out wire being drawn out from a conductive electrode of the first transistor, the first draw-out wire and the first pixel electrode being connected to each other via a contact hole, and
the second coupling capacitor electrode is connected to a second draw-out wire in an identical layer, the second draw-out wire being drawn out from a conductive electrode of the second transistor, the second draw-out wire and the second pixel electrode being connected to each other via a contact hole.

35. The active matrix substrate according to any one of claims 21 to 30, further comprising:
a first coupling capacitor electrode being overlapped by the second pixel electrode in such a manner that an interlayer insulating layer is sandwiched between the first coupling capacitor electrode and the second pixel electrode; and
a second coupling capacitor electrode being overlapped by the first pixel electrode in such a manner that an interlayer insulating layer is sandwiched between the second coupling capacitor electrode and the first pixel electrode,
wherein:
the first pixel electrode is connected to a conductive electrode of the first transistor via a contact hole, and the first pixel electrode being connected to the first coupling capacitor electrode via a contact hole, and
the second pixel electrode is connected to a conductive electrode of the second transistor via a contact hole, and the second pixel electrode being connected to the second coupling capacitor electrode via a contact hole.

36. The active matrix substrate according to claim 34, wherein:
in a case where the active matrix substrate is seen from a planar view, the first pixel electrode is disposed between the first scanning signal line and the second scanning signal line by whole or by part, the part of the first pixel electrode being the first pixel electrode excluding its edge sections, and the second pixel electrode is disposed between the first scanning signal line and the second scanning signal line by whole or by part, the part of the second pixel electrode being the second pixel electrode excluding its edge sections, and
the first and second pixel electrodes, the first and second coupling capacitor electrodes, and the first and second draw-out wires are provided in such a manner that a planar shape and plane configuration of the first and second pixel electrodes, the first and second coupling capacitor electrodes, and the first and second draw-out wires seen from a side of the first scanning signal line are identical to those seen from a side of the second scanning signal line.

37. The active matrix substrate according to claim 35, wherein:
in a case where the active matrix substrate is seen from a planar view, the first pixel electrode is disposed between the first scanning signal line and the second scanning signal line by whole or by part, the part of the first pixel electrode being the first pixel electrode excluding its edge sections, and the second pixel electrode is disposed between the first scanning signal line and the second scanning signal line by whole or by part, the part of the second pixel electrode being the second pixel electrode excluding its edge sections, and
the first pixel electrode and second pixel electrode and the first coupling capacitor electrode and second coupling capacitor electrode are provided in such a manner that a planar shape and plane configuration of the first pixel electrode and second pixel electrode and the first coupling capacitor electrode and second coupling capacitor electrode seen from a side of the first scanning signal line are identical to those seen from a side of the second scanning signal line.

38. The active matrix substrate according to claim 34 or 35, wherein:
the first pixel electrode and the second pixel electrode are adjacent to each other in the column direction, an edge adjacent to the second pixel electrode of edges of the first pixel electrode overlaps the second coupling capacitor electrode, and an edge adjacent to the first pixel electrode of edges of the second pixel electrode overlaps the first coupling capacitor electrode.

39. The active matrix substrate according to claim 31 or 32, wherein:
the interlayer insulating layer is made thin in at least a part of the interlayer insulating layer where the interlayer insulating layer overlaps the coupling capacitor electrode.

40. The active matrix substrate according to claim 30 or 33, wherein:
the gate insulating layer is made thin in at least a part of the gate insulating layer at which the gate insulating film overlaps the storage capacitor electrode.

41. The active matrix substrate according to claim 39, wherein:
the interlayer insulating layer includes an inorganic insulating layer and an organic insulating layer, and the organic insulating layer is removed in at least one part of a portion of the interlayer insulating film overlapping the coupling capacitor electrode.

42. The active matrix substrate according to claim 40, wherein:
the gate insulating layer includes an inorganic insulating layer and an organic insulating layer, and the organic insulating layer is removed in at least one part of a portion of the gate insulating layer overlapping the storage capacitor electrode.

43. The active matrix substrate according to claim 41 or 42, wherein:
the organic insulating layer includes at least one of acrylic resin, epoxy resin, polyimide resin, polyurethane resin, novolac resin, and siloxane resin.

44. A liquid crystal display device comprising an active matrix substrate as set forth in any one of claims 21 to 25, wherein:
the first scanning signal line is selected in one frame, and the second scanning signal line is selected in another frame.

45. A liquid crystal display device comprising an active matrix substrate as set forth in any one of claims 21 to 25, wherein:
one of the first scanning signal line and second scanning signal line is selected in each of frames of n (n is a plural number) consecutive frames, and the other one of the first scanning signal line and second scanning signal line is selected in each of frames of a subsequent set of n consecutive frames.

46. A liquid crystal display device comprising an active matrix substrate as set forth in any one of claims 21 and 23 to 25, wherein:
the first scanning signal line is selected in one of two consecutive frames, and the second scanning signal line is selected in the other one of the two consecutive frames.

47. The liquid crystal display device according to claim 45, wherein:
n is an even number, and a polarity of a signal electric potential to be supplied to the first and second pixel electrodes is inverted per units of one frame.

48. The liquid crystal display device according to claim 46, wherein:
a polarity of a signal electric potential to be supplied to the first pixel electrode and second pixel electrode is inverted per units of two consecutive frames.

49. A liquid crystal display device comprising an active matrix substrate as set forth in claim 22, wherein:
one of the first and second scanning signal lines is selected in each of frames in a first period including a plurality of consecutive frames, and the other one of the first and second scanning signal lines is selected in each of frames in a second period subsequent to the first period, the second period including a plurality of consecutive frames, the first period and the second period being scanned in opposite directions.

50. A liquid crystal display device comprising:
a first and second data signal lines;
a first and second scanning signal lines;
transistors; and
a first to sixth pixel electrodes,
wherein:
two of the transistors are connected to the first data signal line and the first scanning signal line, two of the transistors are connected to the first data signal line and the second scanning signal line, and two of the transistors are connected to the second data signal line and the first scanning signal line,
the first and second pixel electrodes being disposed in a first pixel region, the third and fourth pixel electrodes being disposed in a second pixel region disposed adjacent to the first pixel region in a column direction, and the fifth and sixth pixel electrodes being disposed in a third pixel region disposed adjacent to the first pixel region in the column direction, where the column direction is a direction in which the first data signal line extends,
one of the two transistors connected to the first data signal line and the first scanning signal line is connected to the first pixel electrode and the other one of the two transistors connected to the first data signal line and the first scanning signal line is connected to the fourth pixel electrode, and one of the two transistors connected to the first data signal line and the second scanning signal line is connected to the second pixel electrode and the other one of the two transistors connected to the first data signal line and the second scanning signal line is connected to the fifth pixel electrode,
in each of frames in a first period including a plurality of consecutive frames, the first scanning signal line and the second scanning signal line are selected in this order, and in each of frames of a second period subsequent to the first period, the second period including a plurality of consecutive frames, the second scanning signal line and the first scanning signal line are selected in this order.

51. The liquid crystal display device according to any one of claims 44 to 50, wherein:
a polarity of a signal electric potential to be supplied to the first data signal line is inverted per horizontal scanning period.

52. The liquid crystal display device according to any one of claims 44 to 51, wherein:
signal electric potentials of opposite polarities are respectively supplied to the first data signal line and a data signal line adjacent to the first data signal line, in a single horizontal scanning period.

53. The liquid crystal display device according to any one of claims 44 to 52, further comprising:
a scanning signal line driving circuit for driving the scanning signal lines, wherein:
the first scanning signal line and second scanning signal line receives selection signals that are generated by use of an output from a same stage of a shift register provided in the scanning signal line driving circuit.

54. A liquid crystal panel comprising an active matrix substrate as set forth in any one of claims 1 to 12 and 21 to 43.

55. A liquid crystal display unit comprising:
a liquid crystal panel as set forth in claim 54; and
a driver.

56. A liquid crystal display device comprising:
a liquid crystal display unit as set forth in claim 55; and
a light source unit.

57. A television receiver comprising:
a liquid crystal display device as set forth in any one of claims 13 to 20, 44 to 53, and 56; and
a tuner section for receiving television broadcast.
